# EUROPEAN PATENT APPLICATION

(11) **EP 4 796 462 A1**
(43) Date of publication of application: **26.08.2026**
(21) Application number: 24879007.3
(22) Date of filing: 15.10.2024
(51) Int. Cl.: B65G 1/04, B66F 9/07

(54) **ACCESS MECHANISM, TRANSPORT ROBOT, AND ARTICLE TRANSFER METHOD**

(30) Priority: 17.10.2023 CN 202311347747; 17.10.2023 CN 202322790969 U; 17.10.2023 CN 202311347981; 17.10.2023 CN 202322785757 U; 17.10.2023 CN 202311344546; 17.10.2023 CN 202322787168 U
(71) Applicant: Beijing Geekplus Technology Co. Ltd, Beijing 100102 (CN)
(72) Inventor: LI, Xiaowei, Beijing 100102 (CN); NIU, Xingyu, Beijing 100102 (CN); YUAN, Li, Beijing 100102 (CN)
(74) Representative: Manna, Sara
(86) International application number: PCT/CN2024/125072
(87) International publication number: WO 2025/082365

(57) **Abstract**

Embodiments of the present application provide an access mechanism, a transport robot, and an article transfer method. The access mechanism comprises: a base; a moving seat which is arranged on the base; a telescopic structure which is provided with a first end and a second end, wherein the second end can move close to or away from the first end, and the first end is arranged on the moving seat, an access assembly which is arranged at the second end and is configured to transfer a target article by acting on the front end surface of the target article when accessing the target article, wherein the front end surface of the target article is a side surface of the target article facing the access assembly when the target article is to be accessed; a first driving structure which is connected to the moving seat; and a second driving structure which is connected to the telescopic structure. Gaps between adjacent cargo boxes can be effectively reduced, so that the storage density of the cargo boxes can be effectively improved.

## Description

This disclosure claims the priority of a Chinese patent application No. 202311347747X filed on October 17, 2023; claims the priority of a Chinese patent application No. 2023227909690 filed on October 17, 2023; claims the priority of a Chinese patent application No. 2023113479812 filed on October 17, 2023; claims the priority of a Chinese Patent Application No. 2023227857573 filed on October 17, 2023; claims the priority of a Chinese Patent Application No. 2023113445464 filed on October 17, 2023; and claims the priority of a Chinese Patent Application No. 2023227871689 filed on October 17, 2023, the entire contents of which are incorporated herein by their references.

### TECHNICAL FIELD

The disclosure belongs to the technical field of warehousing and logistics equipment, and particularly to a pick-and-place mechanism, a transfer robot, and a method for transferring an object.

### BACKGROUND

A transfer robot is an important equipment in warehousing. The transfer robot may automatically place a target object (such as, a container) on a target carrier (such as, a shelf) to complete a feeding process (such as, a container returning process), and may also pick up the target object from the target carrier and then transfer the target object to a specific position.

Currently, a container-picking structure of the transfer robot includes telescoping forks and a poking finger rotatably provided at a front end of the telescoping fork. When picking or returning the container, the telescoping fork extends to a side of the container under driving of a driving member, and the poking finger moves behind the container, to grasp the container from the shelf, or to place the container between the telescoping forks into the shelf.

### SUMMARY

Embodiments of the disclosure provide a pick-and-place mechanism, a transfer robot, and a method for transferring an object. When transferring a container, the pick-and-place mechanism does not need to be inserted into a gap between adjacent containers, such that a gap between adjacent containers may effectively be decreased when the containers are stored, thus effectively increasing a storage density of the containers.

According to a first aspect of embodiments of the disclosure, a pick-and-place mechanism is provided. The pick-and-place mechanism includes: a base; a movable base, movably provided on the base and capable of moving relative to the base; a telescoping structure provided with a first end and a second end, in which the first end is provided on the movable base, and the second end is capable of moving toward or away from the first end in a telescoping manner; a pick-and-place assembly, provided at the second end and configured to act on a front end face of a target object when picking or returning the target object, to transfer the target object, in which the front end face of the target object is an end face of the target object that faces the pick-and-place assembly when the target object is to be picked or returned; a first driving structure, connected to the movable base and configured to drive the movable base to move relative to the base, to enable the pick-and-place assembly driven by the movable base to move relative to the base; and a second driving structure, connected to the telescoping structure, in which the second driving structure is configured to drive the second end to move toward or away from the first end, to enable the pick-and-place assembly driven by the second end to move relative to the first end; in which, when the target object is picked or returned, the pick-and-place assembly is configured to move relative to the base under driving of the first driving structure and/or the second driving structure, to perform a reciprocating motion between a target storage position and the base.

According to a second aspect of embodiments of the disclosure, a transfer robot is provided. The transfer robot includes: a chassis; and a gantry provided on the chassis; and
the pick-and-place mechanism of any implementation of the first aspect of embodiments of the disclosure, in which the pick-and-place mechanism is provided on the gantry and capable of lifting and lowering along the gantry.

In an implementation, the transfer robot also includes: a temporary storage plate, provided on the gantry; and a rotation mechanism, connected to the pick-and-place mechanism and configured to drive the pick-and-place mechanism to rotate, to enable the pick-and-place mechanism to place an object onto the temporary storage plate, or to pick the object from the temporary storage plate by the pick-and-place mechanism.

According to a third aspect of embodiments of the disclosure, a method for transferring an object is provided. The method is applied to the pick-and-place mechanism of any implementation of the first aspect of embodiments of the disclosure. The method for transferring an object includes: in a case that the pick-and-place mechanism is located at a specified position of a target carrier, determining a work distance between a pick-and-place assembly and a target storage position; driving the pick-and-place assembly, by a first driving structure and/or a second driving structure, to move the work distance toward the target storage position, to arrive at the target storage position; and transferring the target object between the pick-and-place assembly and the target storage position.

### BRIEF DESCRIPTION OF THE DRAWINGS

The accompanying drawings described herein are used to provide a further understanding of the disclosure, and constitute a part of the disclosure. Exemplary embodiments of the disclosure and descriptions of the embodiments are used to explain the disclosure, and do not constitute an improper limitation on the disclosure.
FIG. 1 is a schematic diagram illustrating a first overall structure of a pick-and-place mechanism according to an embodiment of the disclosure.
FIG. 2 is a schematic diagram illustrating a structure of a base cooperating with a movable base in a pick-and-place mechanism according to an embodiment of the disclosure.
FIG. 3 is schematic diagram illustrating another structure of a base cooperating with a movable base in a pick-and-place mechanism according to an embodiment of the disclosure.
FIG. 4 is a schematic diagram illustrating a structure of a movable base cooperating with a telescoping structure in a pick-and-place mechanism according to an embodiment of the disclosure.
FIG. 5 is a schematic diagram illustrating a structure of a telescoping structure cooperating with a base in a pick-and-place mechanism according to an embodiment of the disclosure.
FIG. 6 is a schematic diagram illustrating a structure of a movable base, a telescoping structure and a pick-and-place assembly in a pick-and-place mechanism cooperating with each other according to an embodiment of the disclosure.
FIG. 7 is a schematic diagram illustrating a telescoping structure in a pick-and-place mechanism according to an embodiment of the disclosure.
FIG. 8 is a schematic diagram illustrating a second overall structure of a pick-and-place mechanism according to an embodiment of the disclosure.
FIG. 9 is a schematic diagram illustrating a structure of a base cooperating with a follow-up pallet in a pick-and-place mechanism according to an embodiment of the disclosure.
FIG. 10 is a schematic diagram illustrating a structure of a movable base cooperating with a follow-up pallet in a pick-and-place mechanism according to an embodiment of the disclosure.
FIG. 11 is a schematic diagram illustrating a state structure where a follow-up pallet in a pick-and-place mechanism extends out of the base according to an embodiment of the disclosure.
FIG. 12 is a schematic diagram illustrating a state structure where a follow-up pallet in a pick-and-place mechanism retracts back into a base according to an embodiment of the disclosure.
FIG. 13 is a schematic diagram illustrating a structure of a third limiting member cooperating with a follow-up pallet in a pick-and-place mechanism according to an embodiment of the disclosure.
FIG. 14 is a schematic diagram illustrating another structure of a third limiting member cooperating with a follow-up pallet in a pick-and-place mechanism according to an embodiment of the disclosure.
FIG. 15 is a schematic diagram illustrating a structure of a pick-and-place assembly in a pick-and-place mechanism according to an embodiment of the disclosure.
FIG. 16 is a schematic diagram illustrating an application scenario of a pick-and-place mechanism according to an embodiment of the disclosure.
FIG. 17 is a schematic diagram illustrating a work state of a pick-and-place mechanism according to an embodiment of the disclosure.
FIG. 18 is a schematic diagram illustrating another work state of a pick-and-place mechanism according to an embodiment of the disclosure.
FIG. 19 is a schematic diagram illustrating yet another working state of a pick-and-place mechanism according to an embodiment of the disclosure.
FIG. 20 is a schematic diagram illustrating a second overall structure of a pick-and-place mechanism according to an embodiment of the disclosure.
FIG. 21 is a first schematic diagram illustrating a third overall structure of a pick-and-place mechanism according to an embodiment of the disclosure.
FIG. 22 is a schematic diagram illustrating a structure of a base, a width adjustment assembly and a follow-up pallet in a pick-and-place mechanism cooperating with each other according to an embodiment of the disclosure.
FIG. 23 is a schematic diagram illustrating a structure of a width adjustment assembly cooperating with a follow-up pallet in a pick-and-place mechanism according to an embodiment of the disclosure.
FIG. 24 is a schematic diagram illustrating another structure of a width adjustment assembly cooperating with a follow-up pallet in a pick-and-place mechanism according to an embodiment of the disclosure.
FIG. 25 is a second schematic diagram illustrating a third overall structure of a pick-and-place mechanism according to an embodiment of the disclosure.
FIG. 26 is a schematic diagram illustrating a fourth overall structure of a pick-and-place mechanism according to an embodiment of the disclosure.
FIG. 27 is a first schematic diagram illustrating a fifth overall structure of a pick-and-place mechanism according to an embodiment of the disclosure.
FIG. 28 is a second schematic diagram illustrating a fifth overall structure of a pick-and-place mechanism according to an embodiment of the disclosure.
FIG. 29 is a schematic diagram illustrating a structure of a base cooperating with a translation assembly in a pick-and-place mechanism according to an embodiment of the disclosure.
FIG. 30 is a schematic diagram illustrating a structure of a transfer robot according to an embodiment of the disclosure.

### Description of reference numerals:

1 - pick-and-place mechanism; 2 - gantry; 3 - chassis; 4 - target object; 5 - target carrier; 11 - base; 12 - movable base; 13 - pick-and-place assembly; 14 - telescoping structure; 15 - second driving structure; 16 - first driving structure; 17 - first limiting member; 18 - second limiting member; 19 - follow-up pallet; 110 - third limiting member; 111 - guide strip; 113 - first guide rail; 114 - second guide rail; 115 - controller; 116 - two-dimensional code camera; 117 - first sensor; 118 - second sensor; 119 - third sensor; 120 - elastic assembly; 11a - depth camera; 11b - fixing portion; 121 - first sliding rail; 122 - third slider; 123 - bent portion; 124 - first moving portion; 125 - second moving portion; 131 - mounting plate; 132 - suction cup; 133 - air source device; 134 - support member; 135 - fourth sensor; 136 - channel; 141 - first end; 142 - second end; 143 - cross member unit; 144 - hinge shaft; 145 - rotating shaft rod; 147 - second slider; 151 - second driving member; 152 - second motivation wheel; 153 - second transmission belt; 154 - second idler wheel; 155 - second driving block; 161 - first driving member; 162 - first motivation wheel; 163 - first transmission belt; 164 - first idler wheel; 165 - first driving block; 171 - connecting rod; 181 - extension portion; 182 - limiting cavity; 191 - extending portion; 192 - supporting face; 193 - abutting member; 194 - third guide rail; 195 - fourth slider; 1101 - first portion; 1102 - second portion; 1111 - inclined surface; 1431 - cross member; 1931 - second roller; 1932 - guiding inclined surface; 1101a - first roller; 1431a - transmission rod; 104 - width adjustment assembly; 106 - support platform; 107 - width adjustment guide rail; 108 - width adjustment slider; 10 - driving mechanism; 101a - driving assembly; 11a - driving member; 11b - transmission member; 102a - transmission assembly; 1031 - support region; 1041 - width adjustment driving member; 1042 - width adjustment transmission member; 10411 - driving motor; 10412 - driving wheel; 10421 - first transmission section; 10422 - second transmission section; 109 - translation assembly; 105 - support base; 200 - translation guide rail; 300 - translation slider; 6 - rotation driving member; 1091 - translation driving member; 1092 - translation transmission member; 1093 - driving block; 10911 - driving motor; 10923 - translation driving wheel; 10921 - translation driven wheel; 10922 - translation transmission belt.

### DETAILED DESCRIPTION

In order for those skilled in the art to better understand aspects of the disclosure, clear and fully description will be made below to embodiments of the disclosure in combination with the accompanying drawings in embodiments of the disclosure. It is apparent that the described embodiments are merely some part of embodiments of the disclosure, but not all of embodiments of the disclosure. Based on embodiments in the disclosure, all other embodiments obtained by the skilled in the art without inventive labor shall fall within the protection scope of the disclosure.

With the rapid development of e-commerce, e-commerce increasingly plays an important role in lives of consumers. To facilitate storage and transfer of goods, the goods are usually stored and transferred in a warehousing system.

When a container or a target object on a shelf is transferred, to improve the transfer efficiency and reduce the work intensity, a transfer robot is usually employed to pick or return the container or the target object on the shelf. The transfer robot is an important equipment in warehousing. The transfer robot may automatically place a target object (such as, a container) on a target carrier (such as, a shelf) to complete a feeding process (such as, a container returning process), and may also pick the target object from the target carrier (such as, a container picking process) and then transfer the target object to a specific position.

In the related art, a container-picking structure of the transfer robot usually includes telescoping forks and a poking finger rotatably provided at a front end of the telescoping fork. When the container is picked or returned, the telescoping fork extends to a side of the container under driving of a driving member, to grasp the container. In addition, when the container is picked, after the telescoping fork extends into the shelf and a front end of the telescoping fork extends out of the container, the poking finger rotates to a rear end face of the container to assist the telescoping fork in taking the container out from the shelf.

In the above container picking or returning process, when containers are placed or arranged on the shelf, a certain gap needs to be maintained between two adjacent containers (for the telescoping fork to be inserted or pulled out), and a certain gap needs to be maintained between a front container and a rear container (for the poking finger to extend into). The gap occupies a part of a space for storing the containers, thus causing a relatively low storage density of the containers on the shelf.

Thus, embodiments of the disclosure provide a pick-and-place mechanism, to solve the technical problems that a certain gap exists between containers when stored, thus resulting in a low storage density of the containers in the related art.

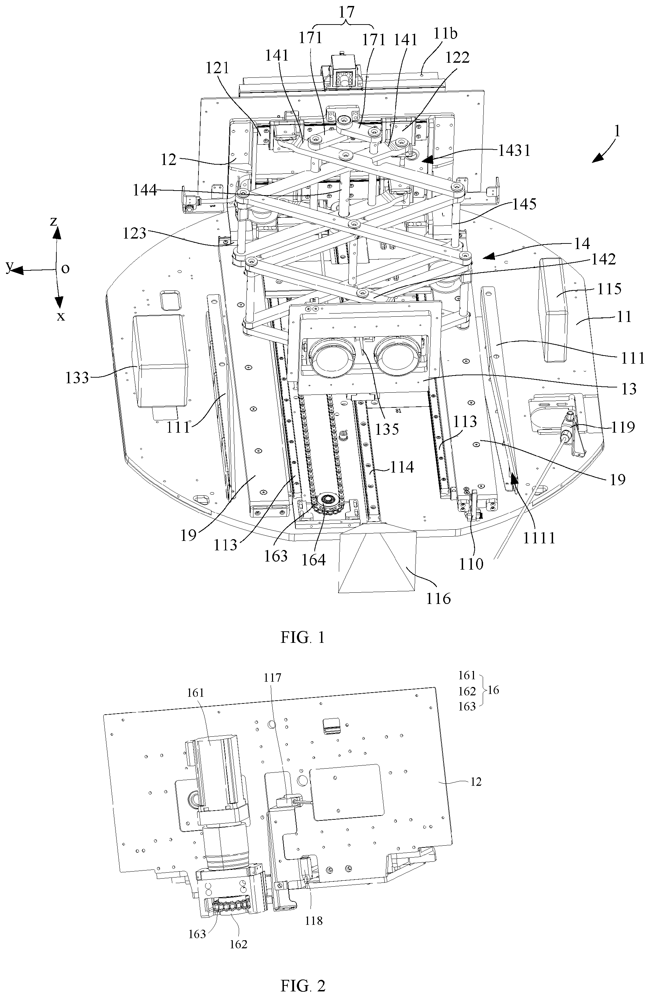

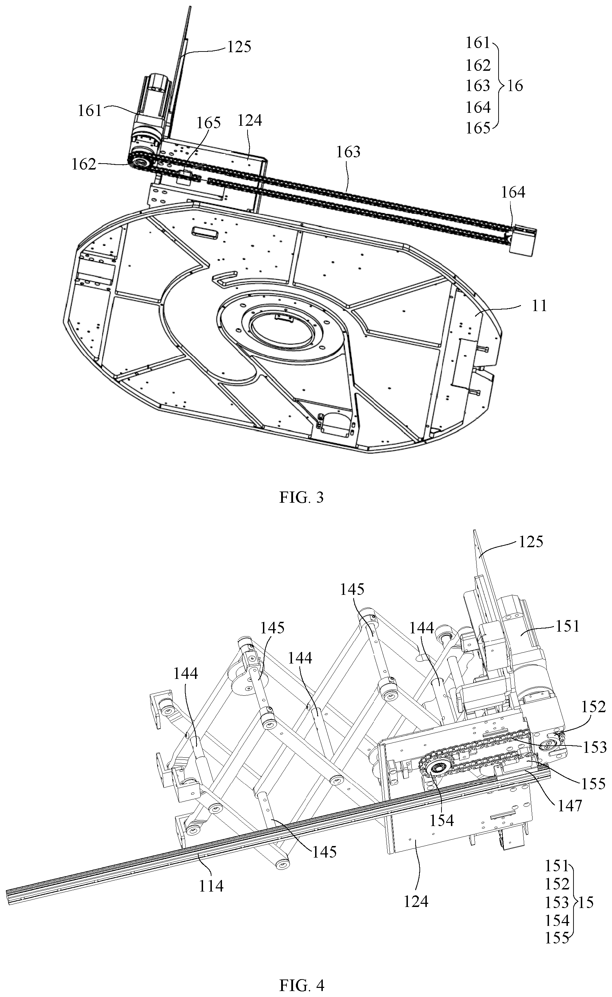

FIG. 1 is a schematic diagram illustrating a first overall structure of a pick-and-place mechanism according to an embodiment of the disclosure. FIG. 2 is a schematic diagram illustrating a structure of a base cooperating with a movable base in a pick-and-place mechanism according to an embodiment of the disclosure. FIG. 3 is schematic diagram illustrating another structure of a base cooperating with a movable base in a pick-and-place mechanism according to an embodiment of the disclosure. FIG. 4 is a schematic diagram illustrating a structure of a movable base cooperating with a telescoping structure in a pick-and-place mechanism according to an embodiment of the disclosure.

Referring to FIG. 1 to FIG. 4, embodiments of the disclosure provide a pick-and-place mechanism 1, including: a base 11, a movable base 12, a telescoping structure 14, a pick-and-place assembly 13, a first driving structure 16, and a second driving structure 15.

In embodiments of the disclosure, the base 11 may be made of hard plastic (such as, engineering plastic). In some alternative examples, the base 11 may also be made of metal or alloy materials such as aluminum alloy, stainless steel, or cast iron. It may be understood that a providing manner of the base 11 may be the same as or similar to a providing manner of a base in the related art, which is not described specifically in embodiments of the disclosure.

In embodiments of the disclosure, the movable base 12 may be movably provided on the base 11. Referring to FIG. 1, in some examples, the movable base 12 is capable of moving along a first direction. In another example, a moving direction of the movable base 12 may also have a certain angle with the first direction, which is ensured that a movement path of the movable base 12 has a component in the first direction, and the pick-and-place assembly 13 provided on the movable base 12 is enabled to reach a target storage position. In some examples, the movable base 12 may be made of a material same as or similar to that of the base 11. A movement manner of the movable base 12 on the base 11 may be translation. Referring to FIG. 1, the first direction may be a direction illustrated by an x-axis in FIG. 1. In some application scenarios, the first direction may also refer to a moving direction of the movable base 12 moving toward or away from the target storage position during picking or returning a target object by the pick-and-place mechanism 1.

It should be noted that the target storage position may be a storage position on a target carrier, such as a shelf, or, in some examples, may be a temporary storage position formed by a temporary storage plate on a transfer robot. Correspondingly, the first direction may be a direction in which the pick-and-place assembly 13 moves toward the target carrier when picking or returning an object, or may be a direction in which the pick-and-place assembly 13 moves toward the storage position of the temporary storage plate. It may be understood that the direction in which the pick-and-place assembly 13 moves toward the storage position of the target carrier may be perpendicular to the direction in which the pick-and-place assembly 13 moves toward the storage position of the temporary storage plate.

It may be understood that, in embodiments of the disclosure, the movement of the movable base 12 may be specifically driven by components such as a motor, a cylinder, or a hydraulic cylinder.

In embodiments of the disclosure, referring to FIG. 1, the telescoping structure 14 has a first end 141 and a second end 142, and the second end 142 is capable of moving toward or away from the first end 141 (also referred to as telescoping). The first end 141 is provided on the movable base 12. For example, the first end 141 and the second end 142 may be oppositely provided along the first direction, and the second end 142 is capable of moving toward or away from the first end 141 along the first direction.

Of course, in another example, a telescoping direction of the telescoping structure 14 (i.e., a moving direction of the second end 142) may also have a certain angle with the first direction. The setting of the telescoping direction is met when a telescoping path of the telescoping structure 14 has a component in the first direction, and the pick-and-place assembly 13 provided on the telescoping structure 14 is enabled to reach the target storage position.

The second end 142 is provided with the pick-and-place assembly 13. That is, in embodiments of the disclosure, the telescoping structure 14 is provided between the movable base 12 and the pick-and-place assembly 13. Extension of the telescoping structure 14 pushes the pick-and-place assembly 13 to move away from the movable base 12, and retraction of the telescoping structure 14 drives the pick-and-place assembly 13 to move toward the movable base 12.

It should be noted that, in embodiments of the disclosure, a "first end" (one end) and a "second end" (or the other end) of a certain component do not specifically refer to endpoints of the component, but are intended to emphasize a relative positional relationship between the "first end" and the "second end", rather than a same position of the component. The "first end" and the "second end" may be ends of a certain component, or may be intermediate portions at a preset distance from ends of a certain component. Detailed positions of the "first end" and the "second end" of a certain component are not limited in embodiments of the disclosure.

For example, the telescoping structure 14 has a first end 141 and a second end 142, the second end 142 is capable of moving toward or away from the first end 141 (also referred to as telescoping), the first end 141 is provided on the movable base 12, and the second end 142 is provided with the pick-and-place assembly 13. specifically, the movable base 12 and the pick-and-place assembly 13 are respectively provided at different positions of the telescoping structure 14 along the telescoping direction. The first end 141 of the telescoping structure 14 may be a rear end of the telescoping structure 14 (such as, a rear end along an x-direction in FIG. 1), or may be other positions at a certain distance from the rear end along the telescoping direction. The second end 142 of the telescoping structure 14 may be a front end of the telescoping structure 14 (e.g., a front end along the x-direction in FIG. 1), or may be other positions at a certain distance from the front end along the telescoping direction. Embodiments of the disclosure describe the structure of the pick-and-place mechanism 1 specifically with reference to the accompanying drawings, taking the first end 141 and the second end 142 of the telescoping structure 14 as the ends of the telescoping structure 14.

In an alternative example of embodiments of the disclosure, the telescoping structure 14 may specifically be a telescoping rod (such as, a telescoping cylinder, a hydraulic cylinder, or an electric cylinder). In other possible examples, the telescoping structure 14 may also be a lead screw or a linear motor. A detailed type of the telescoping structure 14 is not limited in embodiments of the disclosure.

In some examples, the movable base 12 may move along the first direction on the base 11, and the pick-and-place assembly 13 is provided on the movable base 12. In this way, the movable base 12 may drive the pick-and-place assembly 13 to move together along the first direction. In addition, the pick-and-place assembly 13 may also move along the first direction (e.g., the telescoping structure 14 telescopes to drive the pick-and-place assembly 13 to move along the first direction). In this way, when a target object placed at an inner side of the target carrier (in some examples, also referred to as a deep inner position) is picked or returned, both the movable base 12 and the pick-and-place assembly 13 may be driven to extend out of the base 11, that is, a telescoping range of the pick-and-place assembly 13 is increased, facilitating picking or returning of the target object located at the deep inner position of the target carrier.

Referring to FIG. 1 continuously, in embodiments of the disclosure, the pick-and-place assembly 13 is configured to act on a front end face of a target object when picking or returning the target object, to transfer the target object.

In embodiments of the disclosure, the front end face of the target object may refer to a side face of the target object that faces the pick-and-place assembly 13 when the target object is to be picked or returned. Alternatively, in some application scenarios, the target object is stored on the shelf (the target carrier), and the front end face of the target object may also refer to a side face of the target object facing an outer side of the shelf. In embodiments of the disclosure, the container is taken as a detailed example for illustration, and the front end face of the container may refer to a side face facing the outer side of the shelf, thus facilitating grabbing by the pick-and-place assembly 13.

As a detailed example of embodiments of the disclosure, a force providing member capable of providing a force to the front end face of the container may be provided at a movable end (in some examples, also referred to as a free end, i.e., an end facing away from or distant from the movable base 12) of the pick-and-place assembly 13, thus achieving movement, transfer, or picking or returning of the container.

The force providing member may also be an electromagnet. Correspondingly, the front end face of the container may specifically be made of a material (such as, a ferrous material) capable of being attracted by a magnet. When the container is picked or returned, that is, the force providing member approaches or contacts the container, the electromagnet may be energized, thus providing a transfer force for the container by a magnetic attraction force of the electromagnet on the container.

It may be understood that, in other possible examples of embodiments of the disclosure, the force providing member may also be made of a material capable of being attracted by a magnet. Correspondingly, the electromagnet is provided on the front end face of the container. Thus, in a case that the container is picked or returned, the electromagnet may be energized when the force providing member approaches or contacts the container, thus generating a magnetic attraction force between the force providing member and the electromagnet on the container, and providing a transfer force for the container.

In embodiments of the disclosure, by configuring the pick-and-place assembly 13 to act on the front end face of the target object when picking or returning the target object, the target object is transferred. Thus, when containers are placed, stored, or deposited on a shelf, there is no need to reserve a gap between containers (i.e., between adjacent containers), which may effectively decrease a storage gap between the adjacent containers, improve a storage density of the containers, and effectively utilize a same storage space to store more containers.

Referring to FIG. 2 and FIG. 3, in embodiments of the disclosure, the first driving structure 16 is connected to the movable base 12, and the first driving structure 16 is configured to drive the movable base 12 to move (e.g., along a direction illustrated by the x-axis in FIG. 1), thus enabling the movable base 12 to drive the pick-and-place assembly 13 to move along the first direction.

In some examples, the second driving structure 15 may be connected to the telescoping structure 14, and the second driving structure 15 is configured to drive the second end 142 to move toward or away from the first end 141 along the first direction, to enable the pick-and-place assembly 13 driven by the second end 142 to move along the first direction.

In an example, referring to FIG. 4, in embodiments of the disclosure, the second driving structure 15 may at least move relative to the base 11.

In a detailed example of embodiments of the disclosure, the telescoping structure 14 may be a telescoping rod structure, and the second driving structure 15 may specifically be a lead screw. The second end 142 of the telescoping structure 14 may specifically be a rod body in the telescoping rod connected to the pick-and-place assembly 13, and the first end 141 of the telescoping structure 14 may specifically be a rod body in the telescoping rod connected to the movable base 12. In a detailed arrangement, a driving block may be fixed on the second end 142, and the driving block is provided with a through hole having an internal thread. The lead screw passes through the through hole and is connected to a turnbuckle (in some examples, also referred to as a thread connection). In this way, when the lead screw rotates, the lead screw pushes the driving block through the thread, and the driving block drives the telescoping rod to telescope, thus driving the pick-and-place assembly 13 to move along the first direction.

It may be understood that, referring to FIG. 4, in embodiments of the disclosure, two transmission rollers may also be oppositely provided on the movable base 12 along the first direction. The two transmission rollers are rotatingly connected by a transmission member such as a chain, a belt, a synchronous belt, or a timing belt. A driving block is fixed on the chain, the belt, the synchronous belt, or the timing belt, and the driving block is fixedly connected to the telescoping structure 14. In this way, when the two transmission rollers are driven to rotate, the two transmission rollers drive the chain, the belt, the synchronous belt, or the timing belt to rotate, thus driving the driving block to drive the telescoping structure 14 to telescope, and further driving the pick-and-place assembly 13 provided on the second end 142 of the telescoping structure 14 to move along the first direction.

In a detailed example of embodiments of the disclosure, an axial direction of the two transmission rollers may be perpendicular to a surface of the base 11. Alternatively, in some examples, the axial direction of the two transmission rollers may also be parallel to the surface of the base 11. In embodiments of the disclosure, it is sufficient to ensure that an arrangement direction of the two transmission rollers is along the first direction. That is, in embodiments of the disclosure, it is sufficient to ensure that a transmission direction of the two transmission rollers for the chain, the belt, the synchronous belt, or the timing belt is along the first direction.

It may be understood that, in embodiments of the disclosure, the first driving structure 16 is connected to the movable base 12, and the first driving structure 16 is used to drive the movable base 12 to perform reciprocating motion along the first direction.

In embodiments of the disclosure, a detailed arrangement of the first driving structure 16 may be the same as or similar to that of the second driving structure 15. For details, reference may be made to the detailed description of the second driving structure 15 in the above embodiments of the disclosure, which is not described specifically in embodiments of the disclosure.

In some examples, referring to FIG. 2 and FIG. 3, the first driving structure 16 may be provided on the base 11. The second driving structure 15 may move relative to the base 11 along the first direction. For example, in some examples, the second driving structure 15 may be provided on the movable base 12.

A work process of the pick-and-place mechanism 1 provided in embodiments of the disclosure when picking or returning an object is as follows.

Based on an actual situation when the target object is picked or returned, the pick-and-place assembly 13 may be driven by the first driving structure 16 and/or the second driving structure 15 to move along the first direction, to extend into the target storage position of the target carrier, or retract back into the base 11.

For example, in some examples, the pick-and-place assembly 13 may move along the first direction only under driving of the first driving structure 16. That is, the first driving structure 16 drives the movable base 12 to move along the first direction. When the movable base 12 moves along the first direction, the movable base 12 drives the telescoping structure 14 and the pick-and-place assembly 13 provided on the movable base 12 to move together for a work distance, thus enabling the pick-and-place assembly 13 to finally arrive at the target storage position. It may be understood that the work distance is a distance of the pick-and-place assembly 13 moving to the target storage position when the container is picked or returned, i.e., a container picking distance or a container returning distance.

Alternatively, in some examples, the pick-and-place assembly 13 may also move along the first direction only under driving of the second driving structure 15. For example, the first driving structure 16 does not work, i.e., a relative position between the movable base 12 and the base 11 remains static. The second driving structure 15 drives the telescoping structure 14 to telescope along the first direction, and the second end 142 of the telescoping structure 14 drives the pick-and-place assembly 13 connected to the telescoping structure 14 to move the work distance along the first direction, thus enabling the pick-and-place assembly 13 to finally arrive at the target storage position.

Alternatively, in another example, the pick-and-place assembly 13 may also be driven by both the first driving structure 16 and the second driving structure 15, and move along the first direction.

For example, in some examples, the first driving structure 16 may first drive the movable base 12 to move, to drive the telescoping structure 14 and the pick-and-place assembly 13 to move a first preset distance toward the target storage position, and then the second driving structure 15 drives the telescoping structure 14 to extend out, to drive the pick-and-place assembly 13 to move a second preset distance toward the target storage position, to enable that the pick-and-place assembly 13 arrives at the target storage position and transfers the target object between the pick-and-place assembly 13 and the target storage position.

The first preset distance and the second preset distance are determined by the work distance. For example, a sum of the first preset distance and the second preset distance is equal to the work distance. Of course, due to reasons such as a driving deviation and a movement deviation, the sum of the first preset distance and the second preset distance may also be lower than or greater than the work distance.

For example, the first preset distance may be a suitable value such as 1/4, 1/2, or 2/3 of the work distance. For example, the first driving structure 16 may first move the pick-and-place assembly 13 by the movable base 12 to a frontmost end of the base 11, and then the second driving structure 15 drives the telescoping structure 14 to extend out, extending the pick-and-place assembly 13 to the target storage position. Of course, in another example, the first driving structure 16 may first drive the movable base 12 to the frontmost end of the base 11, and then the second driving structure 15 drives the telescoping structure 14 to extend out, extending the pick-and-place assembly 13 to the target storage position. A detailed ratio of the first preset distance to the second preset distance is not limited in embodiments of the disclosure, merely ensuring that the pick-and-place assembly 13 finally arriving at the target storage position.

In another example, the second driving structure 15 may first drive the telescoping structure 14 to extend out, to drive the pick-and-place assembly 13 to move a third preset distance toward the target storage position, and then the first driving structure 16 drives the movable base 12 to move, to drive the telescoping structure 14 and the pick-and-place assembly 13 to move a fourth preset distance toward the target storage position, to enable the pick-and-place assembly 13 to arrive at the target storage position.

The fourth preset distance and the fifth preset distance are determined by the work distance. For example, a sum of the fourth preset distance and the fifth preset distance is equal to the work distance. Due to reasons such as the driving deviation and the movement deviation, the sum of the third preset distance and the fourth preset distance may also be lower than or greater than the work distance.

For example, the fourth preset distance may be a suitable value such as 1/4, 1/2, or 2/3 of the work distance. For example, the second driving structure 15 may first move the pick-and-place assembly 131 by the telescoping structure 14 to the frontmost end of the base 1, and then the first driving structure 16 drives the movable base 12 to move forward until the pick-and-place assembly 13 arrives at the target storage position. A detailed ratio of the third preset distance to the fourth preset distance is not limited in embodiments of the disclosure, merely ensuring that the pick-and-place assembly 13 finally arrives at the target storage position to be ensured.

Of course, in another example, the movable base 12 and the telescoping structure 14 may be simultaneously driven to move by the first driving structure 16 and the second driving structure 15. That is, the first driving structure 16 drives the movable base 12 to move, and the second driving structure 15 drives the telescoping structure 14 to telescope simultaneously, to drive the pick-and-place assembly 13 to move the work distance toward the target storage position, to enable that the pick-and-place assembly 13 arrives at the target storage position and transfers the target object between the pick-and-place assembly 13 and the target storage position.

It may be understood that, in another example, the first driving structure 16 may first drive the movable base 12 to move, then the second driving structure 15 drives the telescoping structure 14 to extend out, and finally the first driving structure 16 drives the movable base 12 to move again until the pick-and-place assembly 13 arrives at the target storage position.

Alternatively, the second driving structure 15 may first drive the telescoping structure 14 to extend out, then the first driving structure 16 drives the movable base 12 to move, and finally, the second driving structure 15 drives the telescoping structure 14 to extend out again until the pick-and-place assembly 13 arrives at the target storage position. A work order and a number of work times of the first driving structure 16 and the second driving structure 15 are not limited in embodiments of the disclosure, merely ensured that the pick-and-place assembly 13 finally arrives at the target storage position.

With the pick-and-place mechanism 1 provided in embodiments of the disclosure, the movable base 12 is movably provided on the base 11, and the movable base 12 moves along the first direction on the base 11 when the target object is picked or returned. The telescoping structure 14 is provided on the movable base 12, the telescoping structure 14 has the first end 141 and the second end 142 along the first direction, the first end 141 is provided on the movable base 12, the second end 142 is capable of moving toward or away from the first end 141 along the first direction, and the pick-and-place assembly 13 is provided at the second end 142. In this way, when the target object is picked or returned by the pick-and-place assembly 13, a moving velocity of the pick-and-place assembly 13 is increased, i.e., the efficiency of picking or returning the target object is effectively improved, and the efficiency of transferring the goods is improved. Through a joint movement of the movable base 12 and the pick-and-place assembly 13 (e.g., the first driving structure 16 connected to the movable base 12 drives the movable base 12 to move along the first direction, and the second driving structure 15 drives the second end 142 of the telescoping structure 14 to move along the first direction), a moving distance of an end of the pick-and-place assembly 13 facing the target object may be effectively increased, thus facilitating picking or returning of a target object located at an inner side of a shelf.

In addition, in embodiments of the disclosure, by configuring the pick-and-place assembly 13 to act on a front end face of the target object (i.e., a side face of the target object that faces the pick-and-place assembly 13 in a state of being to be picked or returned) when the target object is picked or returned, the target object is transferred. Thus, compared with the related art, there is no need to insert an end of the pick-and-place assembly 13 facing away from the movable base 12 (facing toward the target object) into a gap between the two adjacent containers. That is, when the containers are stored, there is no need to maintain a certain gap between the two adjacent containers, thus reducing a gap between the adjacent containers and effectively improving the storage density of the containers.

In addition, in embodiments of the disclosure, the first driving structure 16 is connected to the movable base 12 and drives the movable base 12 to move along the first direction, thus driving the pick-and-place assembly 13 to move. The second driving structure 15 drives the telescoping structure 14 provided between the movable base 12 and the pick-and-place assembly 13, to enable the telescoping structure 14 to telescope, and drives the pick-and-place assembly 13 connected to the second end 142 of the telescoping structure 14 to move.

In this way, in a first aspect, it is achieved that a movement of the movable base 12 is decoupled from a movement of the telescoping structure 14 when the container is picked or returned. That is, the movement of the movable base 12 and the movement of the telescoping structure 14 become two independent movement processes. Thus, a moving velocity of the movable base 12 is decoupled from a telescoping velocity of the telescoping structure 14. The movable base 12 and the telescoping structure 14 are independent of each other, such that the pick-and-place mechanism 1 in embodiments of the disclosure, when picking or returning an object, arbitrarily selects one of the driving structures for driving based on an actual requirement, or freely control driving velocities of the two driving structures, thus allowing the free adjustment on a moving displacement of the movable base 12 and a telescoping amount of the telescoping structure 14.

In another aspect, with the above arrangement, in a case that a movement of any one of the movable base 12 and the telescoping structure 14 fails, the other may still maintain movement, which ensures smooth progress of picking or returning the target object without causing interference to pick or return the target object. Further, the efficiency of maintenance and replacement may be improved, thus improving the operation efficiency of picking or returning the container.

In another aspect, during picking or returning the target object, different moving modes of the pick-and-place assembly 13 may be selected based on an actual work condition requirement, which improves the flexibility of movement of the pick-and-place assembly 13 and may avoid a situation where a shutdown for maintenance is needed when a fault of any one of the movement of the movable base 12 and the movement of the pick-and-place assembly 13 occurs, thus improving the operation efficiency of container picking or returning.

In some examples of embodiments of the disclosure, referring to FIG. 2 and FIG. 3, the first driving structure 16 may include a first driving member 161 and a first transmission member. The first driving member 161 is fixedly provided on the base 11, one end of the first driving member 161 is connected to the first transmission member to drive the first transmission member to move along the first direction, and the first transmission member is connected to a side of the movable base 12 facing the base 11, to drive the movable base 12 to move along the first direction.

That is, in embodiments of the disclosure, the first transmission member may be provided on the base 11 along the first direction. In some examples, the first transmission member may be a lead screw, a cylinder, or an electric cylinder as described in the above embodiments of the disclosure.

In embodiments of the disclosure, the first transmission member is provided on a side of the movable base 12 facing the base 11. In this way, it is convenient to provide the telescoping structure 14 and the pick-and-place assembly 13 on a side of the movable base 12 facing away from the base 11, improving the space utilization.

For example, the first transmission member includes a first motivation wheel 162, a first transmission belt 163, and a first idler wheel 164.

In some examples, an output shaft of the first driving member 161 (also be referred to as a power output end of the first driving member 161) is connected to the first motivation wheel 162, thus driving the first motivation wheel 162 to rotate. Referring to FIG. 3, in embodiments of the disclosure, the first idler wheel 164 and the first motivation wheel 162 are provided at intervals along the first direction. In a detailed arrangement, axial directions of the first idler wheel 164 and the first motivation wheel 162 may be parallel or approximately parallel to a surface of the base 11. In some alternative examples, the axial directions of the first idler wheel 164 and the first motivation wheel 162 may also be perpendicular or approximately perpendicular to the surface of the base 11. In FIG. 3 of embodiments of the disclosure, the axial directions of the first motivation wheel 162 and the first idler wheel 164 being perpendicular or approximately perpendicular to the surface of the base 11 is illustrated as a detailed example.

Specifically, referring to FIG. 3, in embodiments of the disclosure, the first transmission belt 163 (e.g., the chain, the belt, the synchronous belt, or a the timing belt as described in the above embodiments of the disclosure) is tensioned between the first motivation wheel 162 and the first idler wheel 164 (e.g., the first transmission belt 163 is sleeved on the first motivation wheel 162 and the first idler wheel 164). That is, the first transmission belt 163 rotates under driving of the first motivation wheel 162 when the first driving member 161 drives the first motivation wheel 162 to rotate.

As a detailed example of embodiments of the disclosure, the movable base 12 may be fixed on the first transmission belt 163. For example, the movable base 12 is fixed on a first main body portion of the transmission belt 163. It may be understood that, referring to FIG. 3, the first main body portion may be located between the first motivation wheel 162 and the first idler wheel 164.

In some examples, referring to FIG. 3, in embodiments of the disclosure, the movable base 12 may be fixed to the first main body portion of the first transmission belt 163 through a first driving block 165, to move under driving of the first transmission belt 163. The first driving member 161 may be any one of a servo motor, a synchronous motor, or a stepping motor.

It may be understood that, referring to FIG. 4, in embodiments of the disclosure, a second driving structure 15 includes a second driving member 151 and a second transmission member, one end of the second driving member 151 is connected to the second transmission member, to drive the second transmission member to move along the first direction.

In embodiments of the disclosure, referring to FIG. 4, both the second driving member 151 and the second transmission member may be provided on the movable base 12. That is, in embodiments of the disclosure, the second driving member 151 and the second transmission member may move together with the movement of the movable base 12.

In some examples, referring to FIG. 4, the movable base 12 includes: a first moving portion 124 and a second moving portion 125. An extension direction of the first moving portion 124 is consistent with the first direction. The second moving portion 125 is connected to the first moving portion 124, and the second moving portion 125 is provided opposite to the pick-and-place assembly 13. The first end 141 of the telescoping structure 14 is provided on the second moving portion 125.

In some examples, the first moving portion 124 may be a plate-shaped structure or sheet-shaped structure. Of course, a structural shape of the second moving portion 125 may be the same as or similar to that of the first moving portion 124. As an alternative example, after the first moving portion 124 and the second moving portion 125 are constructed to form the movable base 12, a cross-sectional shape of the movable base 12 may be "L-shaped". That is, the first moving portion 124 and the second moving portion 125 may be perpendicular or approximately perpendicular to each other.

For example, referring to FIG. 2, the first moving portion 124 may be provided on the base 11 and be parallel or approximately parallel to the surface of the base 11. The second moving portion 125 is provided at an end of the first moving portion 124 facing away from the telescoping structure 14. Alternatively, in some examples, it may also be understood that the pick-and-place assembly 13 is provided on the first moving portion 124.

In some examples, the pick-and-place assembly 13 may be provided at an end opposite to the second moving portion 125. In addition, the telescoping structure 14 may be provided on the first moving portion 124. In some examples, the telescoping structure 14 is located between the second moving portion 125 and the pick-and-place assembly 13. That is, the first end 141 of the telescoping structure 14 may be provided on the second moving portion 125.

In some alternative examples of embodiments of the disclosure, referring to FIG. 4, the second driving member 151 may be provided on a side of the second moving portion 125 facing away from the telescoping structure 14, and the second transmission member may be provided on a side of the first moving portion 124 facing away from the telescoping structure 14.

It may be understood that, in embodiments of the disclosure, providing the second transmission member on the side of the first moving portion 124 facing away from the telescoping structure 14 is taken as a detailed example for illustration, and does not limit a specific providing position of the second transmission member. In some examples, the second transmission member may also be provided at other positions.

In another example, it may also be understood that the second transmission member is provided on a side of the first moving portion 124 facing the base 11. At least part of the second driving member 151 may extend out of the second moving portion 125 and be rotatingly connected to the second transmission member.

In embodiments of the disclosure, by configuring the movable base 12 to include the first moving portion 124 and the second moving portion 125, the second moving portion 125 is provided at one end of the first moving portion 124. The first end 141 of the telescoping structure 14 is provided on the second moving portion 125, and the telescoping structure 14 is provided between the second moving portion 125 and the pick-and-place assembly 13. Then, the second driving member 151 is provided on a side of the second moving portion 125 facing away from the telescoping structure 14, and the second transmission member is provided on a side of the first moving portion 124 facing away from the telescoping structure 14. In this way, it is convenient to layout positions of the telescoping structure 14, the second driving member 151, and the second transmission member, effectively improving the space utilization. Referring to FIG. 4, in embodiments of the disclosure, a type of the second driving member 151 may be the same as or similar to that of the first driving member 161. In some examples, the second transmission member includes: a second motivation wheel 152, a second idler wheel 154, and a second transmission belt 153.

In some examples, an output shaft of the second driving member 151 (in some examples, also referred to as a power output end) is connected to the second motivation wheel 152 and drives the second motivation wheel 152 to rotate. The second idler wheel 154 and the second motivation wheel 152 are provided at intervals along the first direction, and the second transmission belt 153 (e.g., the chain, the belt, the synchronous belt, or the timing belt as described in the above embodiments of the disclosure) may be tensioned between the second motivation wheel 152 and the second idler wheel 154 (e.g., the second transmission belt 153 is sleeved on the second motivation wheel 152 and the second idler wheel 154). When the second driving member 151 drives the second motivation wheel 152 to rotate, the second motivation wheel 152 drives the second transmission belt 153 to move between the second motivation wheel 152 and the second idler wheel 154.

In some alternative examples, the telescoping structure 14 may be connected to the second transmission belt 153. For example, the telescoping structure 14 may be connected to a second main body portion of the second transmission belt 153, and the second main body portion is located between the second motivation wheel 152 and the second idler wheel 154. In this way, movement of the second transmission belt 153 drives the telescoping structure 14 to telescope, thus driving the pick-and-place assembly 13 to move toward or away from the container.

It may be understood that, in embodiments of the disclosure, a transmission mode of the first driving structure 16 through the first motivation wheel 162, the first transmission belt 163, and the first idler wheel 164 is merely illustrated as a detailed example. In some possible examples, the first driving structure 16 may also be a transmission mode of the lead screw and the power block as described in the above embodiments of the disclosure. That is, a rotatable lead screw is provided on the base 11 along the first direction, and a power block having an internal thread is sleeved on the lead screw, and the power block is connected to the movable base 12. In this way, the power block may drive the movable base 12 to move along the first direction when the first driving member 161 drives the lead screw to rotate.

In some possible examples, the first driving structure 16 may also be the telescoping rod as described in the above embodiments of the disclosure.

It may also be understood that the second driving structure 15 may specifically be the same as or similar to the first driving structure 16. A difference between the second driving structure 15 and the first driving structure 16 is that the second driving structure 15 may be provided on the movable base 12 and driven by the second driving member 151 provided on the movable base 12.

In embodiments of the disclosure, by providing two different power sources, i.e., the first driving member 161 and the second driving member 151, the first driving member 161 drives the movable base 12 by the first transmission member to move, the second driving member 151 is provided on the movable base 12 and moves together with the movement of the movable base 12, and the second driving member 151 drives the telescoping structure 14 by the second transmission member provided on the movable base 12 to telescope, to drive the pick-and-place assembly 13 to move. In this way, when the container needs to be transferred, there are at least the following three ways to move the pick-and-place assembly 13, to enable the pick-and-place assembly 13 to approach or move away from the container located on the shelf.

A first moving mode:
the first driving member 161 drives the movable base 12 by the first transmission member to move along a first direction, thus moving the pick-and-place assembly 13 provided on the movable base 12 by the telescoping structure 14, and picking or returning the container.

A second moving mode:
the second driving member 151 drives the pick-and-place assembly 13 provided on the movable base 12 by the second transmission member to move along the first direction, thus picking or returning the container.

A third moving mode:
the first driving member 161 drives the movable base 12 by the first transmission member to move along the first direction, and the second driving member 151 simultaneously drives the pick-and-place assembly 13 provided on the movable base 12 by the second transmission member to move along the first direction, thus picking or returning the container.

It may be understood that, in some possible examples, the movement of the pick-and-place assembly 13 may also be a combination of the above three moving modes in embodiments of the disclosure. For example, the first driving member 161 drives the movable base 12 by the first transmission member to move a partial distance along the first direction, then the second driving member 151 drives the pick-and-place assembly 13 provided on the movable base 12 by the second transmission member to move a partial distance, and subsequently, the first driving member 161 drives the movable base 12 to move while the second driving member 151 drives the pick-and-place assembly 13 to move.

It should be noted that, in embodiments of the disclosure, a detailed moving mode of the pick-and-place assembly 13 may be set based on an actual work condition requirement. In embodiments of the disclosure, the detailed moving mode of the pick-and-place assembly 13 is not limited.

In embodiments of the disclosure, two different power sources are provided to drive the first transmission member and the second transmission member, i.e., the first driving member 161 drives the first transmission member, and the second driving member 151 drives the second transmission member. In this way, in a first aspect, it is achieved that the movement of the movable base 12 is decoupled from the movement of the pick-and-place mechanism 1 when the container is picked or returned. That is, the movement of the movable base 12 and the movement of the pick-and-place assembly 13 are two independent movement processes (although the movement of the movable base 12 may drive the movement of the pick-and-place assembly 13, the movement of the pick-and-place assembly 13 does not depend on the movement of the movable base 12, and may also be driven by the second driving member 151 driving the telescoping structure 14 by the second transmission member). In this way, in a case that the movement of any one of the movable base 12 and the movement of the pick-and-place assembly 13 fails, the other may still maintain movement, which ensures smooth progress of picking or returning the container without causing interference to picking or returning the target object. Further, the efficiency of maintenance and replacement is improved, and the operation efficiency of container picking or returning is improved. In a second aspect, during picking or returning the container, different moving modes of the pick-and-place assembly 13 may be selected based on an actual work condition requirement, which improves the flexibility of the movement of the pick-and-place assembly 13 and avoids a situation where a shutdown for maintenance is needed when any one of the movements of the movable base 12 and the movement of the pick-and-place assembly 13 fails, thus improving the operation efficiency of the container picking or returning.

In addition, the second driving member 151 and the second transmission member are provided on the movable base 12. In this way, when the container is picked or returned, the first driving member 161 may simultaneously drive the movable base 12 to move, and the second driving member 151 may drive the pick-and-place assembly 13 to move, thus improving a moving velocity of the pick-and-place assembly 13, i.e., improving the efficiency of picking or returning the container.

In an application scenario, in a case that the target storage position is a deep inner position of the target carrier, when the pick-and-place mechanism 1 provided in embodiments of the disclosure picks or returns the target object, the second driving structure 15 may start first. For example, the second driving member 151 starts, and drives the second transmission member by the second motivation wheel 152 to move along the first direction, and the second transmission member drives the telescoping structure 14 to move along the first direction, thus pushing the pick-and-place assembly 13 to move along the first direction. In this way, since a length of the telescoping structure 14 along the first direction increases, a width of the telescoping structure 14 along a third direction (e.g., a y-direction in FIG. 1) decreases, thus facilitating the telescoping structure 14 pushing the pick-and-place assembly 13 to extend into the target carrier. It may be understood that the third direction may intersect, e.g., be perpendicular to, the first direction, i.e., the telescoping direction.

It may be understood that, after the telescoping structure 14 drives the pick-and-place assembly 13 to move a preset distance, for example, after the telescoping structure 14 drives the pick-and-place assembly 13 to extend into the target carrier, the first driving structure 16 then works. For example, the first driving member 161 starts, to drive the movable base 12 connected to the first transmission member and the telescoping structure 14 provided on the movable base 12 to move together toward a direction approaching the target storage position until the pick-and-place assembly 13 arrives the target storage position. In this case, transfer of the target object between the pick-and-place assembly 13 and the target storage position may be performed.

For example, the pick-and-place assembly 13 takes away the target object from the target storage position, or the pick-and-place assembly 13 places the target object on the target storage position.

In this way, it is convenient that a target object with a relatively small width dimension is picked, and the telescoping structure 14 is extended into the target storage position at the deep inner position and transfers the object, thus improving the adaptability of the pick-and-place mechanism 1 to different target objects, i.e., improving an application range of the pick-and-place mechanism 1.

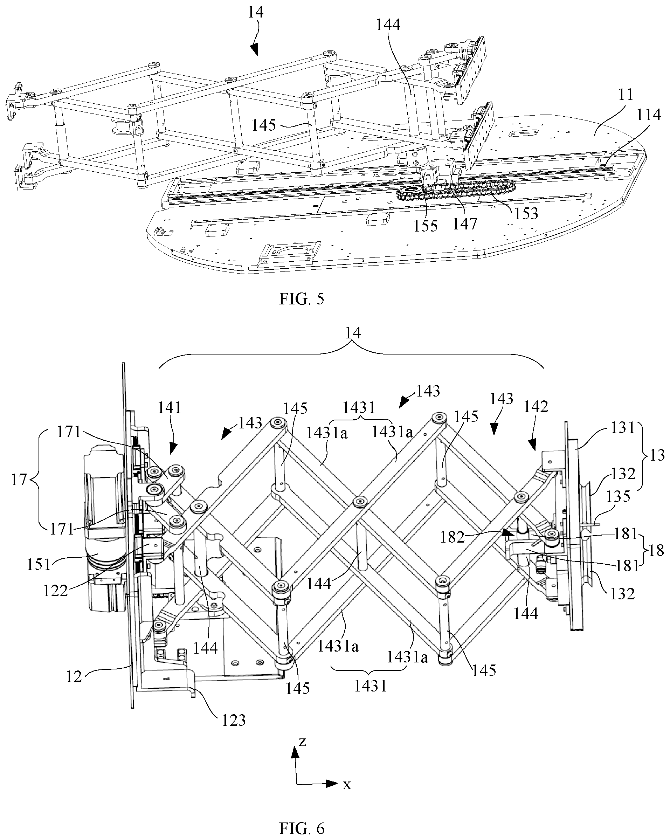

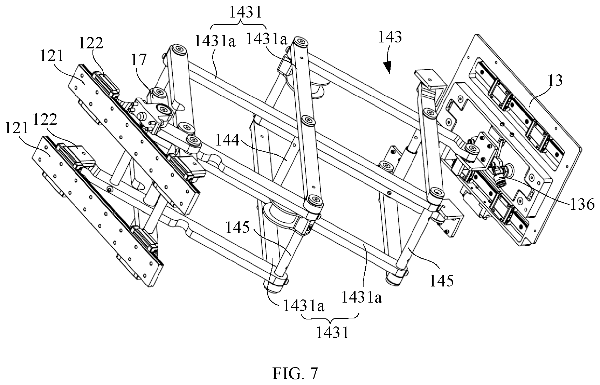

FIG. 5 is a schematic diagram illustrating a structure of a telescoping structure cooperating with a base in a pick-and-place mechanism according to an embodiment of the disclosure. FIG. 6 is a schematic diagram illustrating a structure of a movable base, a telescoping structure and a pick-and-place assembly in a pick-and-place mechanism cooperating with each other according to an embodiment of the disclosure. FIG. 7 is a schematic diagram illustrating a telescoping structure in a pick-and-place mechanism according to an embodiment of the disclosure.

In an alternative example of embodiments of the disclosure, referring to FIG. 5 to FIG. 7, the telescoping structure 14 includes: at least two cross member units 143 sequentially provided along the first direction.

Specifically, referring to FIG. 5 to FIG. 7, in embodiments of the disclosure, each cross member unit 143 may include two cross members 1431 oppositely provided. For example, the two cross members 1431 in each cross member unit 143 are oppositely provided along a second direction. The second direction may be a direction illustrated by a z-axis in FIG.6. An arrangement direction of the two cross members 1431 may specifically be along the direction illustrated by the z-axis in FIG. 6. As a detailed example of embodiments of the disclosure, after the telescoping structure 14 is provided on the movable base 12, the two cross members 1431 may specifically be arranged along a direction perpendicular to the surface of the base 11. In embodiments of the disclosure, by arranging the two opposite cross members 1431 along the second direction, the stability of telescoping of the telescoping structure 14 may be ensured when the telescoping structure 14 telescopes, thus improving the stability of the pick-and-place assembly 13 in picking or returning the container.

Referring to FIG. 5 to FIG. 7, in embodiments of the disclosure, each cross member 1431 includes two transmission rods 1431a crossed with each other. A cross member 1431 corresponding to a cross member unit 143 at the first end 141 is a first cross member, and a cross member 1431 corresponding to a cross member unit 143 at the second end 142 is a second cross member. Referring to FIG. 5 to FIG. 7, in embodiments of the disclosure, the first cross member is slidably connected to the movable base 12, and the second cross member is slidably connected to the pick-and-place assembly 13.

In some examples, referring to FIG. 7, a first sliding rail 121 may be provided at an end of the movable base 12 facing toward the pick-and-place assembly 13, and third sliders 122 may be provided at ends of the two transmission rods 1431a of the first cross member, and the third sliders 122 are slidably connected to the first sliding rail 121. It may be understood that, in embodiments of the disclosure, when the two transmission rods 1431a mutually crossed of the cross member 1431 mutually cross and rotate, the third sliders 122 approach or move away from each other on the first sliding rail 121. In addition, in embodiments of the disclosure, to ensure that the two transmission rods 1431a mutually crossed is capable of mutually crossing and rotating normally, the third sliders 122 are rotatably connected to the transmission rods 1431a, in which a rotation shaft of the third sliders 122 and the transmission rods 1431a is parallel or approximately parallel to a transmission shaft of the two transmission rods 1431a that mutually cross and rotate.

It should be noted that, in embodiments of the disclosure, a sliding connection mode between the second cross member and the pick-and-place assembly 13 may specifically be the same as or similar to a sliding connection mode between the first cross member and the movable base 12. For details, reference may be made to the detailed description of the sliding connection mode between the first cross member and the movable base 12 in the above embodiments of the disclosure, which is not described in detail in embodiments of the disclosure.

The cross members 1431 in each cross member unit 143 have a hinge shaft 144. It may be understood that the two transmission rods 1431a of the cross member 1431 are hinged by the hinge shaft 144. The second driving structure 15 is connected to a hinge shaft 144 in one of the cross member units 143, to drive an included angle of the cross members 1431 facing the pick-and-place assembly 13 to increase or decrease, thus enabling the second end 142 of the telescoping structure 14 to correspondingly move toward or away from the first end 141.

In some examples (not illustrated in the accompanying drawings), each cross member 1431 corresponds to one hinge shaft, i.e., one cross member unit 143 has two hinge shafts. Two transmission rods 1431a in one cross member 1431 are hinged by one hinge shaft 144, and two transmission rods 1431a in the other cross member 1431 are hinged by another hinge shaft 144. The second driving structure 15 may be connected to one hinge shaft in one of the cross member units 143, to drive the cross member 1431 connected to the hinge shaft to move along the first direction x.

Since in the two cross members 1431 moving opposite along the second direction, an end of one cross member 1431 and an end of the other cross member 1431 are also rotatably connected by a rotating shaft rod 145 (referring to FIG. 5). The rotating shaft rod 145 is used to connect two adjacent cross members 1431 along the first direction. In this way, when one of the cross members 1431 moves under driving of the second driving structure 15, the other cross member 1431 in the cross member unit 143 may be driven to move by the rotating shaft rod 145, achieving telescoping of a scissor-fork structure along the first direction.

In another example, each cross member unit 143 is correspondingly provided with one hinge shaft 144. That is, in embodiments of the disclosure, the number of hinge shafts 144 corresponds to the number of cross member units 143, and the two cross members 1431 in each cross member unit 143 share one hinge shaft 144. For example, referring to FIG. 5 to FIG. 7, in each cross member unit 143, two ends of the hinge shaft 144 respectively extend to the two cross members 1431, and the two cross members 1431 are respectively hinged to ends of the hinge shaft 144. That is, one cross member 1431 is hinged to one end of the hinge shaft 144, and the other cross member 1431 is hinged to the other end of the hinge shaft 144. In this way, the four transmission rods 1431a in each cross member unit 143 need only be connected by one hinge shaft 144, saving the number of hinge shafts 144, facilitating the installation and connection of the cross member units 143, and improving the stability of the cross member units 143 during telescopic transmission.

It may be understood that, in such example, the two cross members 1431 arranged along the second direction are connected by the hinge shaft 144. The second driving structure 15 may be connected to one hinge shaft 144 in the plurality of cross member units 143, thus driving the hinge shaft 144 to move along the first direction. The hinge shaft 144 may simultaneously drive the two cross members 1431 arranged along the second direction z to move along the first direction x, thus ensuring the stable movement of the entire scissor-fork structure along the first direction x, and improving the driving precision of the second driving structure 15 for the scissor-fork structure.

Referring to FIG. 6, when the second driving structure 15 drives the hinge shaft 144 to move in a positive direction of an x-axis in FIG. 6, ends of the two transmission rods 1431a in the cross member 1431 move toward a direction approaching each other (i.e., along a first direction, an included angle between the two transmission rods 1431a decreases), thus reducing an included angle between a length direction of the transmission rods 1431a and a direction illustrated by the x-axis, i.e., increasing a length component of the transmission rods 1431a along the direction illustrated by the x-axis. In this way, the telescoping structure 14 pushes the pick-and-place assembly 13 to move along the first direction which is away from the movable base 12. In some application scenarios, it may also be understood that the telescoping structure 14 pushes the pick-and-place assembly 13 to move along the first direction toward the container. That is, in the first direction, a distance between two ends of the cross member unit 143 increases.

It may be understood that, in this case, ends of the first cross member slidably connected to the movable base 12 move toward a convergence/approaching direction, and correspondingly, ends of the second cross member slidably connected to the pick-and-place assembly 13 also move toward a convergence/approaching direction.

It may be understood that, referring to FIG. 6, when the second driving structure 15 drives the hinge shaft 144 to move in a negative direction of the x-axis in FIG. 6, ends of the two transmission rods 1431a in the cross member 1431 move toward a direction away from each other (i.e., along the first direction, the included angle between the two transmission rods 1431a increases), thus increasing the included angle between the length direction of the transmission rods 1431a and the direction illustrated by the x-axis, i.e., decreasing the length component of the transmission rods 1431a along the direction illustrated by the x-axis. In this case, the telescoping structure 14 pulls the pick-and-place assembly 13 to move along the first direction in a direction facing toward the movable base 12. In some application scenarios, it may also be understood that the telescoping structure 14 pulls the pick-and-place assembly 13 to move along the first direction toward the movable base 12.

That is, in the first direction, a distance between two ends of the transmission assembly decreases. It may be understood that, in this case, the ends of the first cross member slidably connected to the movable base 12 move in a direction away from each other. Correspondingly, the ends of the second cross member slidably connected to the pick-and-place assembly 13 also move in a direction away from each other.

In embodiments of the disclosure, at least two cross member units 143 are provided sequentially along the first direction, each cross member unit 143 includes two cross members 1431 oppositely provided along a direction perpendicular to the first direction, each cross member 1431 includes the transmission rods 1431a mutually crossed, and each group of cross member units 143 is connected by one hinge shaft 144, thus enabling that the two transmission rods 1431a are rotatably connected by the hinge shaft 144, and the two cross members 1431 are connected by the hinge shaft 144, thus constructing a double-layer scissor-fork structure. In this way, when the second driving structure 15 is connected to one of the hinge shafts 144 and drives the telescoping structure 14 to telescope along the first direction, the stability of telescoping of the telescoping structure 14 is ensured, i.e., the stability and the success rate of picking or returning the target object are improved.

In addition, when the pick-and-place mechanism 1 provided in embodiments of the disclosure is employed to pick or return the container, the second transmission member may be first driven by the second driving member 151, thus extending the telescoping structure 14. In this way, the length component of the transmission rods 1431a in the cross member unit 1431 along the direction illustrated by the x-axis in FIG. 6 increases, i.e., the length component of the transmission rods 1431a in the direction perpendicular to the x-axis and parallel to the surface of the base 11 decreases. Thus, a width space required for the transmission rods 1431a is relatively small. For containers with a relatively narrow width and located at a deep inner position (in some examples, also understood as a position stored relatively inside), the pick-and-place assembly 13 may first be inserted along the first direction into a channel 136 formed after a container at an outer deep position is taken away. After the pick-and-place assembly 13 provides sufficient moving/transfer force to the container, the first driving member 161 first drives the movable base 12 to move, the movable base 12 drives the telescoping structure 14 and the pick-and-place assembly 13 to move, thus moving the container to a position at the outer deep position, and then the second driving member 151 drives the telescoping structure 14 to retract, thus effectively adapting to picking and transferring of the container with the relatively narrow width.

It may be understood that, when a container returning operation is performed on the container, opposite control to the container picking operation in the above embodiments of the disclosure may be performed. For example, the second driving member 151 may first drive the telescoping structure 14 to extend, to place a container to be returned into the position at the outer deep position. In this case, since the telescoping structure 14 is in an extended state, the length component of the transmission rods 1431a along the direction illustrated by the x-axis in FIG. 6 increases, and correspondingly, the length component of the transmission rods 1431a along the direction perpendicular to the x-axis in FIG. 6 and parallel to the surface of the base 11 is relatively small, requiring a relatively small space. In this case, the first driving member 161 then drives the movable base 12 to move along the first direction (i.e., the direction illustrated by the x-axis in FIG. 6), to move the container to be returned to the position at the deep inner position.

In some alternative examples of embodiments of the disclosure, referring to FIG. 5 to FIG. 7, the telescoping structure 14 includes a plurality of cross member units 143. Specifically, in the accompanying drawings of embodiments of the disclosure, three groups of cross member units 143 are illustrated as a detailed example. It may be understood that, in some examples, there may also be 4 groups, 5 groups, or more groups of cross member units 143. In a detailed arrangement, a detailed number of the cross member units 143 may be determined based on a depth of a warehouse. In an embodiment of the disclosure, the detailed number of the cross member units 143 is not limited.

It may also be understood that, when there are the plurality of cross member units 143, ends connected to each other in two adjacent groups of cross member units 143 are connected through the hinge shaft 144. In some detailed examples, the hinge shaft 144 may be a rotating shaft rod 145. That is, the transmission rods 1431a between the two adjacent groups of cross member units 1431 are rotatably connected by the rotating shaft rod 145, thus facilitating the overall telescoping of the entire telescoping structure 14.

In embodiments of the disclosure, the plurality of cross member units 143 are provided. In this way, it is convenient to extend a telescoping range of the telescoping structure 14, thus facilitating picking or returning the target object for different warehousing requirements, and improving the adaptability to different warehousing requirements.

In some alternative examples of embodiments of the disclosure, referring to FIG. 6, the pick-and-place mechanism 1 also includes a first limiting member 17. Specifically, in embodiments of the disclosure, the first limiting member 17 is connected between the first cross member and the movable base 12. That is, the first cross member may be connected to the movable base 12 by the first limiting member 17. Alternatively, in some examples, it may also be understood that one end of the first limiting member 17 is connected to the movable base 12, and the other end of the first limiting member 17 is connected to the first cross member, thus limiting movement of the first cross member on the movable base 12.

It should be noted here that ends of transmission rods 1431a of the first cross member may specifically be slidably connected by the first sliding rail 121 and the third sliders 122 as described in the above embodiments of the disclosure. Since the two transmission rods 1431a of the first cross member are mutually crossed and rotatably connected, sliding directions of the two third sliders 122 are always opposite, specifically sliding toward each other (converging or approaching) or sliding away from each other (moving apart). In embodiments of the disclosure, the first limiting member 17 specifically limits overall sliding of the first cross member along the first sliding rail 121. That is, the first limiting member 17 specifically limits the two third sliders 122 from sliding in a same direction, thus limiting translational movement of the first end 141 of the telescoping structure 14 on the movable base 12.

In a detailed example, the first limiting member 17 may be a connecting rod 171, one end of the connecting rod 171 is rotatably connected to the movable base 12, and the other end of the connecting rod 171 is rotatably connected to the transmission rod 1431a. In this way, the connecting rod 171 may rotate following the transmission rod 1431a when the transmission rod 1431a rotates to enable the telescoping structure 14 to telescope, and the connecting rod 171 may limit translation of the telescoping structure 14 when the telescoping structure 14 translates.

It should be noted here that a first rotation axis exists between the connecting rod 171 and the movable base 12, and a second rotation axis exists between the connecting rod 171 and the transmission rod 1431a, in which the first rotation axis is parallel or approximately parallel to the second rotation axis. In addition, the first rotation axis and the second rotation axis are parallel or approximately parallel to the rotation axis between the two transmission rods 1431a.

In another example of embodiments of the disclosure, referring to FIG. 6, the pick-and-place mechanism 1 further includes a second limiting member 18, the second limiting member 18 is connected between a second cross member and the pick-and-place assembly 13, thus limiting translational movement of the second end 142 of the telescoping structure 14 on the pick-and-place assembly 13. That is, one end of the second limiting member 18 is connected to the pick-and-place assembly 13, and the other end of the second limiting member 18 is connected to the second cross member.

As a detailed example of embodiments of the disclosure, a structure and a detailed arrangement of the second limiting member 18 may be the same as or similar to the structure and the detailed arrangement of the first limiting member 17. For details, reference may be made to the detailed description of the first limiting member 17 in the above embodiments of the disclosure, which is not described in detail in embodiments of the disclosure.

In embodiments of the disclosure, the first limiting member 17 is provided between the first cross member and the movable base 12 to limit translation between the first end 141 of the telescoping structure 14 and the movable base 12. In this way, it is ensured that a position of the telescoping structure 14 relative to the movable base 12 is relatively fixed when the telescoping structure 14 telescopes along the first direction to move the pick-and-place assembly 13, thus ensuring the stability of the container picking or returning process, and avoiding a situation where translation of the telescoping structure 14 in the container picking or returning process causes that the container is not normally picked or returned.

In addition, the second limiting member 18 is provided between the second cross member and the pick-and-place assembly 13, and translation between the pick-and-place assembly 13 and the second end 142 of the telescoping structure 14 is limited by the second limiting member 18. It is ensured that the pick-and-place assembly 13 does not translate or shift relative to the second end 142 of the telescoping structure 14 during picking or returning the container, thus ensuring the accuracy of the container picking or returning.

In other alternative examples of embodiments of the disclosure, referring to FIG. 6, one of the first limiting member 17 or the second limiting member 18 includes two connecting rods 171. Specifically, in embodiments of the disclosure, the first limiting member 17 including two connecting rods 171 is illustrated as a detailed example.

Specifically, one of the two connecting rods 171 is rotatably connected to one transmission rod 1431a of the first cross member, and the other of the two connecting rods 171 is rotatably connected to the other transmission rod 1431a of the first cross member. The two connecting rods 171 are rotatably connected to the movable base 12. In a detailed arrangement, a rotation shaft of the two connecting rods 171 and the movable base 12 may be one rotation shaft. That is, the two connecting rods 171 rotate on the movable base 12 about a same rotation point. In this way, the two connecting rods 171 and the two transmission members in the first cross member form a parallelogram structure (or in some examples, also referred to as a four-bar linkage 171 structure). Since a rotation point of the two connecting rods 171 on the movable base 12 is fixed, translation of the telescoping structure 14 on the movable base 12 is limited.

It may be understood that, in some alternative examples of embodiments of the disclosure, a detailed structure of the second limiting member 18 may be the same as or similar to that of the first limiting member 17.

It may also be understood that, as described in detail in the above embodiments of the disclosure, in embodiments of the disclosure, all the movable base 12, the telescoping structure 14, and the pick-and-place assembly 13 are provided on the base 11. That is, during telescoping movement of the telescoping structure 14 along the first direction, the telescoping structure 14 has a tendency to move relative to the base 11. To avoid structural interference between the first limiting member 17 and the base 11, referring to FIG. 1, in embodiments of the disclosure, the first limiting member 17 is provided on a side of the telescoping structure 14 facing away from the base 11, thus facilitating the telescoping movement of the telescoping structure 14.

In other alternative examples of embodiments of the disclosure, referring to FIG. 6, the other one of the first limiting member 17 or the second limiting member 18 may include two extension portions 181 oppositely provided. Specifically, in embodiments of the disclosure, the second limiting member 18 including two extension portions 181 oppositely provided is illustrated as a detailed example.

Specifically, in embodiments of the disclosure, the two extension portions 181 are fixedly connected to a side of the pick-and-place assembly 13 facing the movable base 12. Alternatively, in some examples, it may also be understood that the two extension portions 181 are fixedly connected to a side of the pick-and-place assembly 13 facing the telescoping structure 14. A limiting cavity 182 or a limiting notch is formed between the two extension portions 181. In a detailed arrangement, a hinge shaft 144 between the two second cross members passes through the limiting cavity 182 or the limiting notch, thus enabling the hinge shaft 144 to move along the limiting cavity 182 or the limiting notch during the telescoping movement of the telescoping structure 14 along the first direction.

That is, in embodiments of the disclosure, an extension direction of the limiting cavity 182 or the limiting notch may specifically be consistent with the first direction. For example, the extension direction of the limiting cavity 182 or the limiting notch is parallel or approximately parallel to the first direction.

In some alternative examples, a length of the limiting cavity 182 or the limiting notch extending along the first direction may be greater than or equal to a distance that the hinge shaft 144 between the two second cross members capable of moving along the first direction. In this way, it may be ensured that the hinge shaft 144 is always limited within the limiting cavity 182 or the limiting notch, thus avoiding a situation where the hinge shaft 144 comes out of the limiting cavity 182 or the limiting notch, and improving the stability of position limitation between the telescoping structure 14 and the pick-and-place assembly 13.

It may be understood that, referring to FIG. 6, in embodiments of the disclosure, the second limiting member 18 may specifically be provided between the two second cross members. In this way, the hinge shaft 144 between the two second cross members may be directly used to pass through the limiting cavity 182, without needing to extend the hinge shaft 144, effectively saving material used for the hinge shaft 144 and reducing a required space.

It may also be understood that, in other alternative examples of embodiments of the disclosure, the first limiting member 17 may also be provided in a manner of two extension portions 181 oppositely provided.

As a detailed example, in embodiments of the disclosure, the first limiting member 17 specifically includes the two connecting rods 171, and the second limiting member 18 specifically includes the two extension portions 181 oppositely provided. That is, a detailed structure of the first limiting member 17 may be different from a detailed structure of the second limiting member 18.

Referring to FIG. 4, in an alternative example of embodiments of the disclosure, a hinge shaft 144 connected to the second driving structure 15 is configured as a power shaft. In a detailed arrangement, the second driving structure 15 also includes a second driving block 155, and the second driving block 155 is connected to one end of the power shaft. Specifically, the second driving block 155 is fixedly connected to the power shaft. In some examples, referring to FIG. 4, a second transmission belt 153 in the second driving structure 15 may specifically be one of the chain, the belt, the synchronous belt, or the timing belt. In this case, the second driving block 155 may be fixed on the second transmission belt 153. The second driving block 155 is driven when a second driving member 151 drives the second transmission belt 153 to move, thus driving a transmission shaft to move along the first direction.

In embodiments of the disclosure, the hinge shaft 144 connected to the second driving structure 15 in the hinge shafts 144 corresponding to a cross member unit 143 is configured as the power shaft, and the power shaft is connected to the second driving structure 15 by the second driving block 155. In this way, it is convenient for the second driving structure 15 to drive the telescoping structure 14, without needing to separately provide an additional power mechanism, thus simplifying an overall structure of the telescoping structure 14.

It may be understood that, referring to FIG. 4, in embodiments of the disclosure, three groups of cross member units 143 being provided along the first direction is taken as a detailed example for illustration. In embodiments of the disclosure, the hinge shaft 144 corresponding to any one of three groups of transmission assemblies may serve as the power shaft and be connected to the second driving structure 15 by the second driving block 155.

In a detailed example of embodiments of the disclosure, a hinge shaft 144 corresponding to one transmission assembly approaching/facing the movable base 12 in the three groups of cross member units 143 is used as the power shaft. That is, the hinge shaft 144 provided between two first cross members is connected to the second driving block 155. Then the second driving block 155 is connected to the second driving structure 15, to enable the second driving structure 15 to drive the telescoping structure 14 to telescope along the first direction.

In embodiments of the disclosure, the hinge shaft 144 between the two first cross members is taken as the power shaft. In this way, a length of the second transmission belt 153 that needs to be provided along the first direction may be decreased, thus effectively saving space occupied by the second transmission belt 153 and saving material for the second transmission belt 153.

In other alternative examples of embodiments of the disclosure, referring to FIG. 1 and FIG. 4, in embodiments of the disclosure, a second guide rail 114 is provided on the base 11, and a second slider 147 is provided on the telescoping structure 14. The second guide rail 114 may specifically extend along the first direction. That is, an extension direction of the second guide rail 114 is consistent with the first direction, and the second slider 147 specifically slides along the second guide rail 114.

It may be understood that, in a detailed arrangement, in embodiments of the disclosure, the telescoping structure 14 is specifically the telescoping structure 14 formed by connecting a plurality of cross member units 143, and a parallelogram structure (which may also be understood as a four-bar linkage 171 structure) is formed between the two adjacent groups of transmission rods 1431a. In a detailed telescoping process, positions of the two transmission rods 1431a mutually crossed in each group of cross member units 143 change at all points other than an intersection point where the two transmission rods 1431a mutually crossed rotate together. In embodiments of the disclosure, to ensure the normal telescoping of the telescoping structure 14 and avoid a situation where stress between the second slider 147 and the second guide rail 114 prevents sliding, the second slider 147 may specifically be provided on any hinge shaft 144 other than the power shaft, thus ensuring that there is no movement tendency to deviate relative to the first direction when the second slider 147 slides along the second guide rail 114, and ensuring smoothness of the second slider 147 sliding along the second guide rail 114.

In embodiments of the disclosure, the second guide rail 114 extending along the first direction is provided on the base 11, the second slider 147 is provided on the telescoping structure 14, and the second slider 147 slides on the second guide rail 114 when the telescoping structure 14 telescopes along the first direction. In this way, cooperation between the second slider 147 and the second guide rail 114 may provide a certain guiding and position limiting function for the telescoping direction of the telescoping structure 14, ensuring the stability of the telescoping of the telescoping structure 14.

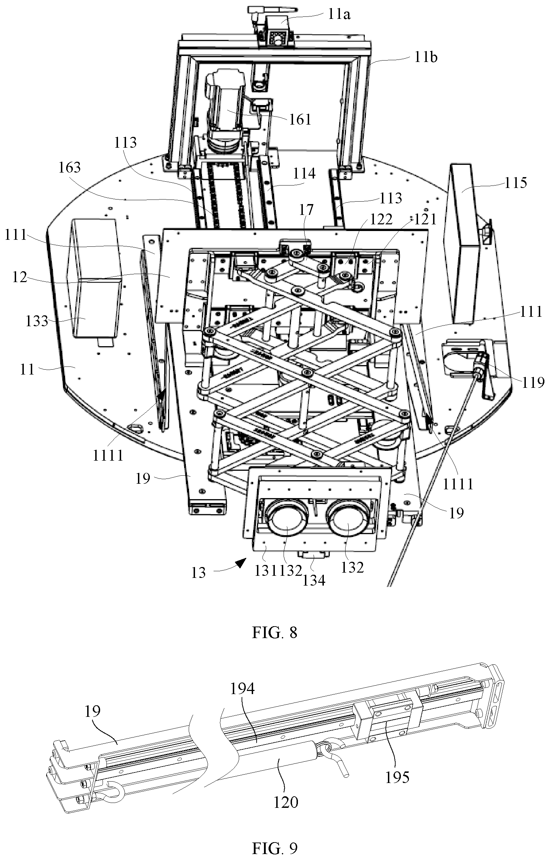

FIG. 8 is a schematic diagram illustrating a second overall structure of a pick-and-place mechanism according to an embodiment of the disclosure.

Referring to FIG. 1 and FIG. 8, in other alternative examples of embodiments of the disclosure, the pick-and-place mechanism 1 also includes: a follow-up pallet 19. Specifically, the follow-up pallet 19 may be movably provided on the base 11. It may be understood that, in embodiments of the disclosure, a movement direction of the follow-up pallet 19 may specifically be consistent with the first direction. That is, the movement direction of the follow-up pallet 19 on the base 11 may be parallel or approximately parallel to the first direction. In a detailed application scenario, the follow-up pallet 19 abuts against a front end face of the target carrier when the pick-and-place assembly 13 picks or returns the target object, to fill a gap between the base 11 and the target carrier. In this way, the follow-up pallet 19 may support and bear the target object carried on the pick-and-place assembly 13 when the pick-and-place assembly 13 picks or returns the target object, effectively avoiding a situation where the target object falls through the gap between the base 11 and the target carrier.

It may be understood that, as detailed description in the above embodiments of the disclosure, the pick-and-place assembly 13 may specifically be driven to move by movement of the movable base 12when the pick-and-place assembly 13 picks or returns the target object. Alternatively, in some examples, the pick-and-place assembly 13 may be driven to move by movement of the telescoping structure 14. Alternatively in another example, the pick-and-place assembly 13 may be driven to move by a combination action of the movable base 12 and the telescoping structure 14. Thus, in embodiments of the disclosure, movement of the follow-up pallet 19 may move together with at least one of the movable base 12 or the pick-and-place assembly 13. For example, the follow-up pallet 19 may be driven to move by the movable base 12 or the pick-and-place assembly 13.

In an alternative example of embodiments of the disclosure, the follow-up pallet 19 may specifically be fixedly connected to the movable base 12. During picking or returning the target object by the pick-and-place assembly 13, it may be first determined whether a gap exists between the base 11 and the target carrier. In a case that the gap exists between the base 11 and the target carrier, the first driving member 161 may first drive the movable base 12 to move, to enable the follow-up pallet 19 to abut against the front end face of the target carrier. In this case, driving of the movable base 12 may be stopped, and the second driving member 151 drives the telescoping structure 14, to enable the pick-and-place assembly 13 to continue to move.

Referring to FIG. 8 continuously, in other alternative examples of embodiments of the disclosure, two follow-up pallets 19 may be provided, the two follow-up pallets 19 are arranged along a direction perpendicular to a third direction. In a detailed arrangement, there is a gap between the two follow-up pallets 19, thus facilitating sliding connection between the second guide rail 114 and the second slider 147 provided on the telescoping structure 14.

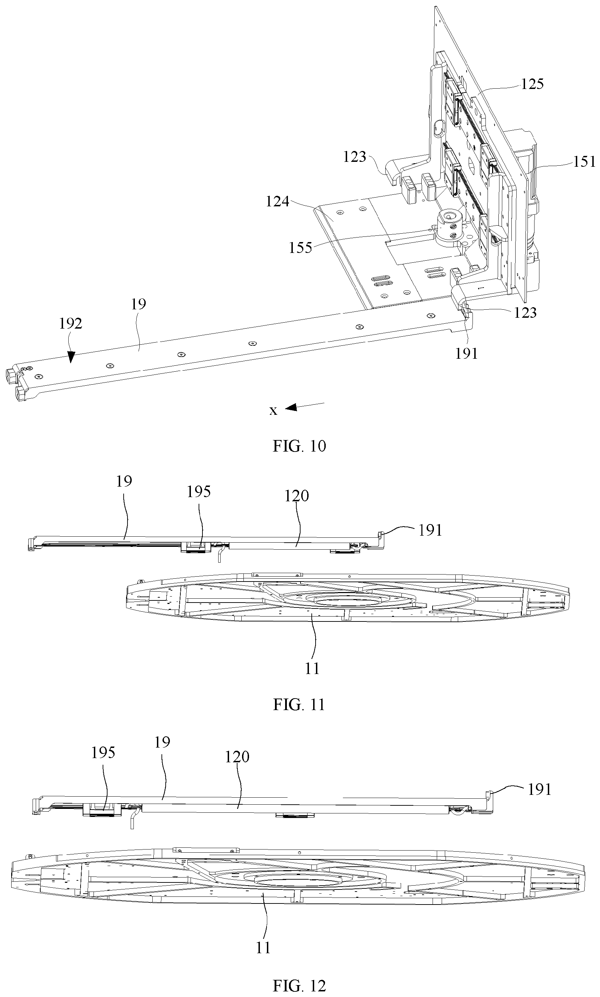

FIG. 9 is a schematic diagram illustrating a structure of a base cooperating with a follow-up pallet in a pick-and-place mechanism according to an embodiment of the disclosure. FIG. 10 is a schematic diagram illustrating a structure of a movable base cooperating with a follow-up pallet in a pick-and-place mechanism according to an embodiment of the disclosure. FIG. 11 is a schematic diagram illustrating a state structure where a follow-up pallet in a pick-and-place mechanism extends out of the base according to an embodiment of the disclosure. FIG. 12 is a schematic diagram illustrating a state structure where a follow-up pallet in a pick-and-place mechanism retracts back into a base according to an embodiment of the disclosure.

In other alternative examples of embodiments of the disclosure, referring to FIG. 9, the pick-and-place mechanism 1 also includes: an elastic assembly 120. Specifically, the elastic assembly 120 has a third end and a fourth end oppositely provided along an elastic direction. The third end is connected to the follow-up pallet 19, and the fourth end is connected to the base 11. In a detailed arrangement, referring to FIG. 10, one end of the movable base 12 may be provided with a bent portion 123, and one end of the follow-up pallet 19 has an extending portion 191. When the follow-up pallet 19 is at an initial position (here, the initial position may be a position where the follow-up pallet 19 does not extend out of the base 11, for example, a position illustrated in FIG. 12), referring to FIG. 10, the bent portion 123 abuts against a side of the extending portion 191 facing a front end face of the follow-up pallet 19. In this case, referring to FIG. 12, the elastic assembly 120 has a first deformation amount.

In embodiments of the disclosure, the initial position may specifically refer to a position where any one of the movable base 12 and the pick-and-place assembly 13 does not move, i.e., a position where position movement of the follow-up pallet 19 located on the base 11 does not occur. In a detailed example, the elastic assembly 120 may specifically be a compression spring. When the follow-up pallet 19 is at the initial position, the third end may specifically be an end of the elastic assembly 120 facing away from the movable base 12, and the fourth end may specifically be an end of the elastic assembly 120 facing the movable base 12. In this case, the elastic assembly 120 may be in a compressed state, i.e., the first deformation of the elastic assembly 120 is a compressive deformation.

In addition, referring to FIG. 11, the elastic assembly 120 has a second deformation amount when the follow-up pallet 19 is at a termination position. Referring to FIG. 11, in embodiments of the disclosure, the termination position may specifically be a position of the follow-up pallet 19 on the base 11 when the follow-up pallet 19 abuts against the front end face of the target carrier (in some examples, at least part of the follow-up pallet 19 extends out of the base 11). In this case, due to relative movement between the follow-up pallet 19 and the base 11, the compressed state of the elastic assembly 120 is gradually released, to enable a compression amount (or deformation amount) of the elastic assembly 120 to gradually decrease, i.e., the second deformation amount is lower than the first deformation amount.

As a detailed example, when the follow-up pallet 19 is in a termination state, the compressive deformation of the elastic assembly 120 may be completely released, i.e., in this case, the second deformation amount of the elastic assembly 120 may specifically be zero.

In other alternative examples of embodiments of the disclosure, the elastic assembly 120 may also include an extension spring. The third end and the fourth end are each provided with an extension spring hook (not numbered in the accompanying drawings). In a detailed arrangement, the third end may specifically be an end of the extension spring facing the movable base 12, and the fourth end may specifically be an end of the extension spring facing away from the movable base 12. That is, the third end of the extension spring is hooked onto the follow-up pallet 19 by the extension spring hook, and the fourth end of the extension spring is hooked onto the base 11 through the extension spring hook. The extension spring has a first deformation amount when the follow-up pallet 19 is located at the initial position. In this case, the extension spring may be in a stretched state, i.e., the first deformation of the extension spring is a stretched deformation. The stretched state of the extension spring is gradually released when the follow-up pallet 19 is located at the termination position, thus gradually recovering from the stretched state to a naturally extended state.

It may be understood that, in embodiments of the disclosure, to ensure that the follow-up pallet 19 may abut against the front end of the target carrier when the follow-up pallet 19 is located at the termination position, it is still kept that the elastic assembly 120 may maintain a certain deformation amount (i.e., the second deformation amount) when the follow-up pallet 19 is located at the termination position. In this way, the follow-up pallet 19 is still subjected to a certain elastic force provided by the elastic assembly 120, when the follow-up pallet 19 is located at the termination position, thus ensuring tightness and stability of abutment between the follow-up pallet 19 and the front end of the target carrier.

Referring to FIG. 9, FIG. 11, and FIG. 12, in some alternative examples of embodiments of the disclosure, a third guide rail 194 and a fourth slider 195 are provided between the follow-up pallet 19 and the base 11. Specifically, in embodiments of the disclosure, one of the third guide rail 194 or the fourth slider 195 may be provided on a side of the follow-up pallet 19 facing the base 11 (in a detailed application, it may be understood as a lower side of the follow-up pallet 19). For example, the third guide rail 194 may be fixedly connected to the follow-up pallet 19. In addition, the other one of the third guide rail 194 or the fourth slider 195 may be specifically provided on the base 11, and the fourth slider 195 is slidably connected to the third guide rail 194. In a detailed example, the fourth slider 195 may be fixed on the base 11, and the third guide rail 194 slides relative to the fourth slider 195 when moving together with the follow-up pallet 19. It may be understood that, in some alternative examples, the third guide rail 194 may also be fixed on the base 11, and the fourth slider 195 may be provided on the follow-up pallet 19, thus enabling the follow-up pallet 19 to move along a direction of the third guide rail 194. In this way, stability of movement of the follow-up pallet 19 driven by the elastic assembly 120 may be effectively improved.

In a detailed example of embodiments of the disclosure, referring to FIG. 9, two fourth sliders 195 may be provided, and the two fourth sliders 195 are arranged side by side along the first direction. In this way, stability of movement of the follow-up pallet 19 may be effectively improved. Of course, it may be understood that, referring to FIG. 1, when there are two follow-up pallets 19, each follow-up pallet 19 may be correspondingly provided with two fourth sliders 195.

A detailed movement process of the follow-up pallet 19 in embodiments of the disclosure is described in detail below.

Referring to FIG. 10 and FIG. 12, when the follow-up pallet 19 is located at the initial position, the bent portion 123 abuts against a side of the extending portion 191 facing the target carrier, or the bent portion 123 applies a force in a negative direction of an x-axis in FIG. 10 to the follow-up pallet 19 by the extending portion 191, thus causing the elastic assembly 120 to deform and have the first deformation amount. When the container needs to be picked or returned, the first driving member 161 drives the movable base 12 to move in a positive direction of the x-axis in FIG. 10. At this time, as the movable base 12 moves, a force applied by the bent portion 123 to the extending portion 191 changes, and an elastic force provided by the elastic assembly 120 to the follow-up pallet 19 causes the follow-up pallet 19 to move in the positive direction of the x-axis in FIG. 10. With the deformation amount of the elastic assembly 120 gradually decreasing, the follow-up pallet 19 moves until the follow-up pallet 19 abuts against the front end of the target carrier. In this case, the follow-up pallet 19 may not move continuously, and the elastic assembly 120 has the second deformation amount.

It may be understood that, in embodiments of the disclosure, after the follow-up pallet 19 abuts against the front end of the target carrier, since the movable base 12 and the follow-up pallet 19 interact with each other through the bent portion 123 and the extending portion 191, i.e., the movable base 12 and the follow-up pallet 19 are not fixedly connected, the movable base 12 may continue to move under driving of the first driving structure 16, and the follow-up pallet 19 does not affect movement of the movable base 12, thus facilitating picking or returning the container located at the deep inner position.

It may also be understood that, in embodiments of the disclosure, after the pick-and-place assembly 13 completes returning or picking the container, the first driving structure 16 may drive the movable base 12 to move until the bent portion 123 contacts the extension portion 181, and the telescoping structure 14 retracts along the first direction, thus driving the pick-and-place assembly 13 and the container on the pick-and-place assembly 13 to move, and moving the container to the follow-up pallet 19. The follow-up pallet 19 supports and bears the container. Then, the first driving structure 16 continues to drive the movable base 12 to move. In this case, the bent portion 123 applies the force in the negative direction of the x-axis in FIG. 10 to the extension portion 181, and drives the follow-up pallet 19 and the container on the follow-up pallet 19 to move together, thus taking out the container. The elastic assembly 120 deforms and stores energy until the follow-up pallet 19 arrives at the initial position.

In embodiments of the disclosure, the third end of the elastic assembly 120 is connected to the follow-up pallet 19 and the fourth end of the elastic assembly 120 is connected to the base 11. In this way, when the pick-and-place assembly 13 picks or returns the target object, the follow-up pallet 19 may move under a deformation change of the elastic assembly 120. In this way, movement of the follow-up pallet 19 does not require a separate driving mechanism, which may effectively simplify a structure of the pick-and-place mechanism 1. Moreover, the movement of the follow-up pallet 19 is synchronized with the movement of the movable base 12, which may effectively ensure that the follow-up pallet 19 may fill the gap between the base 11 and the target carrier during picking or returning the target object, thus effectively avoiding a situation where the target object falls.

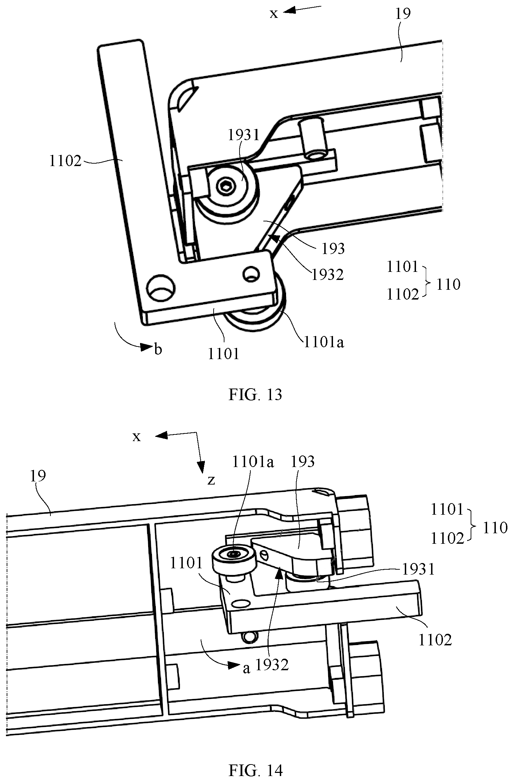

FIG. 13 is a schematic diagram illustrating a structure of a third limiting member cooperating with a follow-up pallet in a pick-and-place mechanism according to an embodiment of the disclosure. FIG. 14 is a schematic diagram illustrating another structure of a third limiting member cooperating with a follow-up pallet in a pick-and-place mechanism according to an embodiment of the disclosure.

In other alternative examples of embodiments of the disclosure, referring to FIG. 1, FIG. 13, and FIG. 14, the pick-and-place mechanism 1 also includes a third limiting member 110. Specifically, in embodiments of the disclosure, the third limiting member 110 may be specifically provided on the base 11, and the third limiting member 110 is located at the front end of the follow-up pallet 19.

It should be noted here that, referring to FIG. 1, in embodiments of the disclosure, the third limiting member 110 may be specifically provided at an edge of a front end of the base 11. The front end of the base 11 may specifically refer to an end of the base 11 facing the target carrier when the pick-and-place mechanism 1 picks or returns the target object.

Specifically, in embodiments of the disclosure, referring to FIG. 13, the third limiting member 110 has a first state. In the first state, at least part of the third limiting member 110 extends out a supporting face 192 of the follow-up pallet 19. It may be understood that, referring to FIG. 1, the supporting face 192 of the follow-up pallet 19 may specifically refer to a surface of the follow-up pallet 19 that supports the target object. In some detailed examples, the supporting face 192 may also refer to a surface of the follow-up pallet 19 facing away from the base 11. That is, in embodiments of the disclosure, at least part of the third limiting member 110 extends along a direction perpendicular to the surface of the base 11, and at least part of the third limiting member 110 protrudes beyond the supporting face 192 of the follow-up pallet 19. In this way, when there is the target object or the container on the follow-up pallet 19, a portion of the third limiting member 110 protruding beyond the supporting face 192 may perform position limitation or blocking to the target object on the follow-up pallet 19.

Referring to FIG. 14, the third limiting member 110 further has a second state. In the second state, the entire third limiting member 110 is located between the follow-up pallet 19 and the base 11. That is, in a detailed application, the third limiting member 110 switches from the first state to the second state when the follow-up pallet 19 extends out of the base 11 under an action of the elastic assembly 120. In this way, it may be effectively avoided that the third limiting member 110 affects or blocks movement of the follow-up pallet 19, facilitating movement of the follow-up pallet 19.

In an alternative example of embodiments of the disclosure, the third limiting member 110 may be specifically rotatably connected to the base 11. When the third limiting member 110 switches from the first state to the second state, the third limiting member 110 rotates from being perpendicular to the surface of the base 11 to being parallel to the surface of the base 11. When the third limiting member 110 switches from the second state to the first state, the third limiting member 110 may rotate from being parallel to the surface of the base 11 to being perpendicular to the surface of the base 11.

In some possible examples, rotation of the third limiting member 110 may specifically be driven by a motor. For example, it may be determined that there is no target object or container supported on the follow-up pallet 19 when the follow-up pallet 19 needs to extend out. In this case, the third limiting member 110 may be driven to switch to the second state (i.e., the third limiting member 110 is parallel to the base 11) by the motor, and then the first driving structure 16 drives the movable base 12 to move, thus enabling the follow-up pallet 19 to follow and extend out of the base 11. The third limiting member 110 is driven to switch to the first state by the motor when the follow-up pallet 19 returns to the initial position.

In other alternative examples of embodiments of the disclosure, referring to FIG. 13 and FIG. 14, the third limiting member 110 includes a first portion 1101 and a second portion 1102 forming a certain angle. It should be noted here that, in embodiments of the disclosure, the first portion 1101 and the second portion 1102 may specifically be an integrally formed structure. Of course, in some examples, the first portion 1101 and the second portion 1102 may also be connected as one whole by welding. The first portion 1101 and the second portion 1102 forming the certain angle specifically means that the first portion 1101 and the second portion 1102 are not parallel. In some detailed examples, the angle between the first portion 1101 and the second portion 1102 may be an acute angle, a right angle, or an obtuse angle. As a detailed example of embodiments of the disclosure, referring to FIG. 13 and FIG. 14, the angle between the first portion 1101 and the second portion 1102 may be a right angle or approximately a right angle.

In a detailed arrangement, a connection portion of the first portion 1101 and the second portion 1102 is rotatably connected to the base 11. In this way, a space occupied by a side of the third limiting member 110 facing the base 11 when the third limiting member 110 rotates is effectively decreased, facilitating rotation of the third limiting member 110. Referring to FIG. 13 and FIG. 14, in embodiments of the disclosure, the second portion 1102 is located between the first portion 1101 and the front end of the base 11. That is, the second portion 1102 is connected to a side of the first portion 1101 facing the front end of the base 11, and the first portion 1101 is located between the follow-up pallet 19 and the base 11. That is, the first portion 1101 is located at a bottom of the follow-up pallet 19.

It may be understood that, referring to FIG. 13, when the third limiting member 110 is in the first state (i.e., when the follow-up pallet 19 is located at the initial position), the second portion 1102 is located at the front end of the follow-up pallet 19, and the first portion 1101 is located at the bottom of the follow-up pallet 19. In addition, referring to FIG. 13, an abutting member 193 is provided at the front end of the follow-up pallet 19. The abutting member 193 is located between the follow-up pallet 19 and the base 11, and the abutting member 193 is provided between the first portion 1101 and the second portion 1102. Referring to FIG. 13, when the third limiting member 110 is in the first state, the abutting member 193 may contact the first portion 1101 (e.g., directly or indirectly), thus locking the third limiting member 110 in the first state. That is, when there is the target object or the container supported on the follow-up pallet 19, a position of the follow-up pallet 19 remains unchanged. In this case, the abutting member 193 abuts against the first portion 1101, preventing the third limiting member 110 from rotating relative to the base 11, thus ensuring that the second portion 1102 perform position limitation on the target object or the container on the follow-up pallet 19.

It may also be understood that, referring to FIG. 14, in embodiments of the disclosure, when the front end of the follow-up pallet 19 extends out of the base 11 (i.e., when the position of the follow-up pallet 19 switches from the initial position to the termination position), the abutting member 193 pushes against the second portion 1102 (the abutting member 193 may be in direct contact with the second portion 1102 to push the second portion 1102, or may be in indirect contact with the second portion 1102 to push the second portion 1102), thus enabling the third limiting member 110 to rotate relative to the base 11, i.e., the third limiting member 110 switches from the first state to the second state.

Referring to FIG. 14, in embodiments of the disclosure, when the third limiting member 110 is in the second state, a distance between the second portion 1102 and the supporting face 192 of the follow-up pallet 19 may be greater than or equal to a length of the first portion 1101, thus ensuring smooth rotation of the first portion 1101 when the third limiting member 110 switches from the first state to the second state.

In embodiments of the disclosure, the third limiting member 110 is configured to include the first portion 1101 and the second portion 1102 forming the certain angle, the abutting member 193 is provided at the front end of the follow-up pallet 19, and the abutting member 193 is provided between the first portion 1101 and the second portion 1102. In this way, during the follow-up pallet 19 switching from the initial position to the termination position, the abutting member 193 may abut against and push the second portion 1102, thus enabling the third limiting member 110 to rotate on the base 11 around the connection portion of the first portion 1101 and the second portion 1102, and facilitating switching of the third limiting member 110 from the first state to the second state. In addition, the abutting member 193 pushes the first portion 1101 when the follow-up pallet 19 switches from the termination position to the initial position, thus enabling the third limiting member 110 to switch from the second state to the first state, facilitating performing position limitation on the target object or the container supported on the follow-up pallet 19, and avoiding a situation where the target object falls.

It may be understood that, referring to FIG. 13, in a case that there is the target object or the container supported on the follow-up pallet 19, when the target object applies a force to the second portion 1102, since the abutting member 193 applies an abutting force to the first portion 1101, the third limiting member 110 is maintained in the first state, and play a role of position limitation on the target object or the container.

In some alternative examples of embodiments of the disclosure, a rotational connection between the third limiting member 110 and the base 11 may be a damped rotational connection. That is, when the position of the follow-up pallet 19 switches from the initial position to the termination position, after the third limiting member 110 switches from the first state (as illustrated in FIG. 13) to the second state (as illustrated in FIG. 14), the position of the follow-up pallet 19 may not yet arrive at the termination position. That is, in this case, the follow-up pallet 19 may continue to move. In embodiments of the disclosure, the rotational connection between the third limiting member 110 and the base 11 is provided as a damped rotation, the state of the third limiting member 110 may be maintained at an angle in the second state illustrated in FIG. 14, i.e., the second portion 1102 remains parallel to the surface of the base 11. In this way, when the follow-up pallet switches from the termination position to the initial position, an influence of the second portion 1102 on the abutting member 193 may be effectively avoided, facilitating position switching of the follow-up pallet and state switching of the third limiting member 110.

It may also be understood that, referring to FIG. 14, a reinforcing rib is usually provided at a bottom of the follow-up pallet 19. In embodiments of the disclosure, there is a gap between the first portion 1101 and the bottom of the follow-up pallet 19 when the third limiting member 110 is in the second state, the gap is greater than or equal to a distance that the reinforcing rib protrudes from the bottom of the follow-up pallet 19. In addition, it may also be understood that the gap between the first portion 1101 and the bottom of the follow-up pallet 19 is lower than a distance that the abutting member 193 protrudes from the bottom of the follow-up pallet 19.

In other alternative examples of embodiments of the disclosure, referring to FIG. 13 and FIG. 14, a first roller 1101a rotatable about an axis of the first roller 1101a is provided on the first portion 1101, and a circumferential surface of the first roller 1101a is provided facing the abutting member 193. In some detailed examples, the first roller 1101a may be provided at an end of the first portion 1101 facing away from the second portion 1102. Alternatively, it may also be understood that the first roller 1101a is provided at an end of the first portion 1101. In this way, during the follow-up pallet 19 switching from the termination position to the initial position, the abutting member 193 pushes the first portion 1101 by the first roller 1101a, thus enabling the third limiting member 110 to rotate. That is, a face-to-face contact between the abutting member 193 and the first portion 1101 is converted into a face-to-line contact between the abutting member 193 and the first roller 1101a, which may effectively decrease a friction force applied to the abutting member 193, and facilitating position switching of the follow-up pallet 19.

It may be understood that, in some specific examples of embodiments of the disclosure, referring to FIG. 13 and FIG. 14, a side of the abutting member 193 facing the first portion 1101 has a guiding inclined surface 1932, and the guiding inclined surface 1932 is inclined toward the base 11. In this way, during the follow-up pallet 19 switching from the termination position to the initial position (e.g., when moving in a direction illustrated by an x-axis in FIG. 14), with the follow-up pallet 19 moving, the guiding inclined surface 1932 may provide a component force (e.g., a component force in a direction illustrated by a z-axis in FIG. 14) perpendicular to the follow-up pallet 19 to the first portion 1101 by the first roller 1101a. Alternatively, it may also be understood that a thrust of the guiding inclined surface 1932 on the first roller 1101a enables the first portion 1101 to form a rotational torque at a rotational connection with the base 11, thus enabling the third limiting member 110 to rotate in a direction illustrated by an arc arrow a in FIG. 14, i.e., the third limiting member 110 switches from the second state to the first state.

In addition, it may also be understood that, in embodiments of the disclosure, the first roller 1101a and the first portion 1101 may specifically be connected in a rotatable manner. In this way, a face-to-line sliding friction between the guiding inclined surface 1932 and the first roller 1101a is converted into rolling friction, thus reducing a friction force between the guiding inclined surface 1932 and the first roller 1101a, and improving smoothness of position switching of the follow-up pallet 19.

In other alternative examples of embodiments of the disclosure, referring to FIG. 13 and FIG. 14, a second roller 1931 rotatable about an axis of the second roller 1931 is provided on the abutting member 193. In a detailed arrangement, a circumferential surface of the second roller 1931 faces the second portion 1102. Referring to FIG. 13, when the position of the follow-up pallet 19 switches from the initial position to the termination position (e.g., when the follow-up pallet 19 moves in the direction illustrated by the x-axis in FIG. 14), the second roller 1931 abuts against the second portion 1102 and applies a thrust to the second portion 1102, thus enabling the second portion 1102 to form a rotational torque at a rotational connection with the base 11, enabling the third limiting member 110 to rotate in a direction illustrated by an arc arrow b in FIG. 13 (i.e., the third limiting member 110 switches from the first state to the second state).

In embodiments of the disclosure, the second portion 1102 is pushed by the second roller 1931. In this way, friction between the abutting member 193 and the second portion 1102 may be effectively decreased, and smoothness of position switching of the follow-up pallet 19 is improved. It may also be understood that the second roller 1931 may also be rotatably connected to the abutting member 193.

In other alternative examples of embodiments of the disclosure, referring to FIG. 1, the pick-and-place mechanism 1 also includes: two guide strips 111. In embodiments of the disclosure, the two guide strips 111 may be specifically oppositely provided on two sides of the follow-up pallet 19. For example, an arrangement direction of the two guide strips 111 (also referred to as a third direction), in which the third direction is parallel to the surface of the base 11 and intersects a moving direction of the pick-and-place assembly 13, e.g., the first direction. For example, the third direction is perpendicular to the first direction. That is, along the third direction (specifically the direction illustrated by the y-axis in FIG. 1), one side of the follow-up pallet 19 may be provided with one guide strip 111, and the other side of the follow-up pallet 19 may be provided with the other guide strip 111.

In some specific examples of embodiments of the disclosure, the guide strips 111 may be specifically fixedly provided on the base 11. Of course, in other alternative examples of embodiments of the disclosure, the guide strips 111 may also be provided on the follow-up pallet 19 and move together with the follow-up pallet 19. A side of the guide strip 111 facing away from the base 11 protrudes beyond a surface of the follow-up pallet 19. In this way, when the target object or the container is beared on the follow-up pallet 19, the guide strips 111 may limit the target object or the container on the follow-up pallet 19, i.e., may prevent the target object on the follow-up pallet 19 from moving along the third direction, improving the stability of the target object on the pick-and-place mechanism 1 during picking, returning, or transferring of the target object by the pick-and-place mechanism 1.

Referring to FIG. 1 continuously, in other alternative examples of embodiments of the disclosure, inclined surfaces 1111 are formed at front ends of opposite sides of the two guide strips 111. That is, in embodiments of the disclosure, a target object inlet/outlet of the pick-and-place mechanism 1 (which may also be referred to as an object access end) may be provided as a flared shape (which may also be understood as a flared structure) along the first direction, which may avoid the guide strips 111 obstructing movement of the target object, facilitate picking and returning of the target object, and improve the efficiency of picking and returning the target object by the pick-and-place mechanism 1.

In other alternative examples of embodiments of the disclosure, referring to FIG. 1, a first guide rail 113 is also provided on the base 11, the first guide rail 113 extends along the first direction. In addition, a first slider (not illustrated in the accompanying drawings) is provided on the movable base 12, and the first slider is slidably connected to the first guide rail 113.

It may be understood that, in embodiments of the disclosure, an arrangement of the first guide rail 113 may be specifically the same as or similar to the arrangement of the second guide rail 114 in the above embodiments of the disclosure. For details, reference may be made to the detailed description of the second guide rail 114 in the above embodiments of the disclosure, which is not described in detail in embodiments of the disclosure.

It may also be understood that, in embodiments of the disclosure, two first guide rails 113 may be provided, and the two first guide rails 113 are provided at intervals along the second direction. In this way, the stability of the movable base 12 during movement of the movable base 12 may be effectively improved.

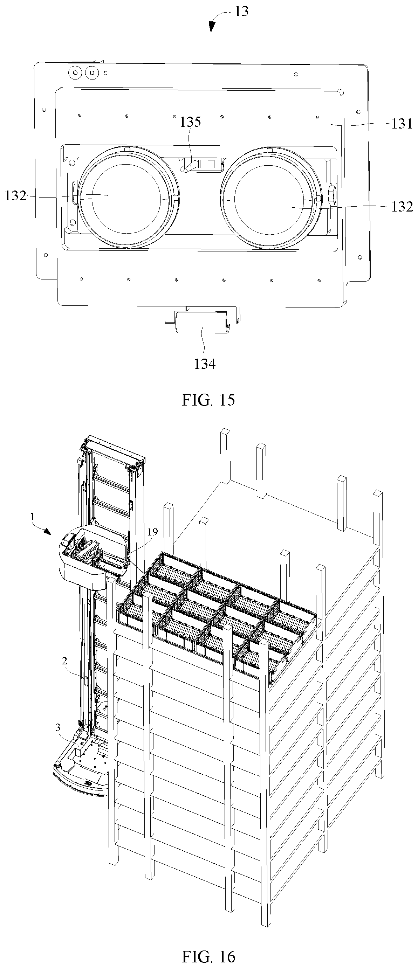

FIG. 15 is a schematic diagram illustrating a structure of a pick-and-place assembly in a pick-and-place mechanism according to an embodiment of the disclosure.

Referring to FIG. 15, in another example of embodiments of the disclosure, the pick-and-place assembly 13 includes a mounting plate 131 and a suction cup 132, i.e., a force providing member may be the suction cup 132.

Specifically, in embodiments of the disclosure, the mounting plate 131 is connected to the second end 142 of the telescoping structure 14. It may be understood that, in embodiments of the disclosure, the mounting plate 131 may be specifically connected to the movable base 12 through the telescoping structure 14. In a detailed arrangement, referring to FIG. 15, in embodiments of the disclosure, the suction cup 132 is provided on the mounting plate 131, and a channel 136 is formed on the mounting plate 131. One end of the channel 136 is in communication with an inner cavity of the suction cup 132, and the other end of the channel 136 is used to be in communication with an air source device 133. As a detailed example, in embodiments of the disclosure, the air source device 133 may be a vacuum pump. As illustrated in FIG. 1, the air source device 133 may be specifically provided on the base 11.

Specifically, the channel 136 on the mounting plate 131 may be formed by drilling or slotting the mounting plate 131. The other end of the channel 136 may be specifically in communication with the air source device 133 by a vacuum tube. In this way, when the air source device 133 operates, the air source device 133 reduces pressure in the channel 136 and the inner cavity of the suction cup 132 by the vacuum tube, to enable external atmospheric pressure to press and adsorb the target object to be transferred onto the suction cup 132.

In some possible examples, the air source device 133 may specifically be an air source device 133 capable of forward and reverse rotation. For example, when the air source device 133 rotates forward, the air source device 133 sucks air from the channel 136 and the inner cavity of the suction cup 132 by the vacuum tube, to reduce pressure in the inner cavity of the suction cup 132, facilitating adsorption of the target object to be transferred. When the air source device 133 rotates in reverse, the air source device 133 supplies air to the channel 136 and the inner cavity of the suction cup 132 by the vacuum tube, thus releasing the suction force of the suction cup 132 on the target object, facilitating unloading of the target object from the suction cup 132.

It may also be understood that, in some alternative examples of embodiments of the disclosure, components such as a solenoid valve and a vacuum pressure gauge may also be provided on the vacuum tube. The solenoid valve is configured to close the vacuum tube by the solenoid valve when the suction cup 132 provides sufficient suction force to the target object (e.g., when the pressure in the channel 136 or the vacuum tube is detected by the pressure gauge to reach a preset negative pressure value), thus maintaining the negative pressure in the inner cavity of the suction cup 132, avoiding long-term operation of the vacuum pump, and effectively saving the energy consumption.

In another example, the pick-and-place assembly 13 may include a claw structure, i.e., a force providing member may be a claw structure, and the claw structure is configured to hook the target object.

In some examples, the claw structure may be a hook, and a slot for insertion of the hook may be provided on a front end face of an object such as a container. The hook may be inserted into the slot when the container is picked or returned, thus connecting with the front end face of the container and providing a force for transferring the container.

In another example, the claw structure may also be a dual-axis or multi-axis claw, and a through hole for insertion of the claw may be provided on the front end face of the container. Specifically, the claw may be controlled to be in a clamped state and inserted into the through hole when the container is picked or returned. Then the claw is opened, to enable an outer side wall of the claw to contact an inner wall of the through hole, and the container is transferred by friction between the outer side wall of the claw and the inner wall of the through hole. It may be understood that, in some possible examples, a barb may also be provided on the outer side wall of the claw. In this way, the barb may hook onto a hole edge on the inner wall of the container, thus ensuring that the claw structure may provide sufficient transfer force when transferring the container.

Referring to FIG. 15 continuously, in some alternative examples of embodiments of the disclosure, a support member 134 is provided at a bottom of the pick-and-place assembly 13. For example, the support member 134 is provided at a bottom of the mounting plate 131. Specifically, the support member 134 is fixedly connected to the mounting plate 131. The bottom of the mounting plate 131 may specifically refer to a side of the mounting plate 131 facing the base 11. In this way, referring to FIG. 8, during the second driving structure 15 driving the pick-and-place assembly 13 to move by the telescoping structure 14 (e.g., during the pick-and-place assembly 13 moves the target object), the support member 134 may be supported on a surface of the target carrier, thus providing a good support for the telescoping structure 14 and the pick-and-place assembly 13, avoiding a situation where the telescoping structure 14 may be damaged when the target object is heavy, and effectively protecting the telescoping structure 14.

It may be understood that the support member 134 may also be provided at other positions of the pick-and-place assembly 13, such as at a bottom of the suction cup 132 or the claw structure. A providing position of the support member 134 is not limited in embodiments of the disclosure, which ensures that the support member 134 may be supported on the surface of the target carrier when the pick-and-place assembly 13 moves into the target carrier.

As a specific example of embodiments of the disclosure, referring to FIG. 15, the support member 134 may specifically be a third roller or a rotating roller, and the third roller or the rotating roller is rotatably connected to a bottom of the support member 134. In this way, during the support member 134 moving on the surface of the target carrier, friction force received by the support member 134 may be effectively decreased, and the surface of the target carrier may also be well protected.

In embodiments of the disclosure, the support member 134 is provided at the bottom of the mounting plate 131, the support member 134 contacts the surface of the target carrier when the pick-and-place assembly 13 extends out and moves onto the target carrier, thus providing support to the pick-and-place assembly 13. In this way, it may be prevented a situation where the pick-and-place assembly 13 sags (in some examples, also referred to as drooping) when the telescoping structure 14 telescopes over a relatively long distance, and the accuracy of a contact position of the pick-and-place assembly 13 is ensured when the target object is picked.

In some alternative examples of embodiments of the disclosure, referring to FIG. 1, the pick-and-place mechanism 1 may also include a two-dimensional code camera 116. The two-dimensional code camera 116 may be specifically configured to recognize a two-dimensional code of the target carrier, thus accurately determining a detailed object to be picked by the current pick-and-place mechanism 1.

It may be understood that, referring to FIG. 1, in embodiments of the disclosure, the two-dimensional code camera 116 may be specifically provided at a front end of the base 11, and located at a bottom of the movable base 12. In some possible examples, the two-dimensional code camera 116 may also be provided at an upper of the pick-and-place assembly 13, for example, provided at an upper of the mounting plate 131 in the above embodiments of the disclosure.

It may also be understood that, referring to FIG. 1, in embodiments of the disclosure, a controller 115 may also be provided on the base 11. The controller 115 may specifically be a central processing unit (CPU), a microcontroller unit (MCU), a field programmable gate array (FPGA), or a programmable logic controller (PLC), etc. It may be understood that, in embodiments of the disclosure, a type of the controller 115 is only illustrated as some detailed examples. In some possible examples, the controller 115 may also be other types of controllers 115, which are not listed one by one in embodiments of the disclosure. The controller 115 may be specifically configured to control the two-dimensional code camera 116. Of course, the controller 115 may also control the first driving member 161 and the second driving member 151 in the above embodiments of the disclosure.

For example, the target carrier may have a plurality of layers of target storage positions, and a two-dimensional code may be provided on a front crossbeam of each layer of target storage positions, for example, provided at a middle portion of the front crossbeam.

In embodiments of the disclosure, when the pick-and-place mechanism 1 moves to the target carrier based on target position information issued by a host computer, the two-dimensional code camera 116 may identify a two-dimensional code corresponding to the target storage position during moving toward the target the position, thus determining whether the target carrier arrives at a storage position height corresponding to the target storage position.

Generally, the pick-and-place mechanism 1 may be provided on a gantry 2 of the transfer robot. A driving structure on the gantry 2 adjusts a height of the pick-and-place mechanism 1 by a transmission chain when the transfer robot moves to a specified position. It may be understood that there is a certain fitting gap usually between a driving wheel and the chain, i.e., an actual driving height of the pick-and-place mechanism 1 driven by the driving structure may be lower than the storage position height of the target storage position. After the two-dimensional code camera scans the two-dimensional code of the target storage position, the controller may determine an actual storage position height of the target storage position based on the two-dimensional code, and then compare the actual storage position height with a recorded height (i.e., an operating height of the pick-and-place mechanism 1) of rotation of a motor encoder of the driving structure on the gantry 2, thus adjusting the height of the pick-and-place mechanism 1, to enable the height of the pick-and-place mechanism 1 to be aligned with the height of the target storage position (here, a height difference may be within a preset range).

In some examples, the pick-and-place mechanism 1 may also include a depth camera 11a, and the depth camera 11a may be provided on the base 11 or the movable base 12. In embodiments of the disclosure, the controller 115 may also determine an offset distance between the pick-and-place assembly 13 and the target storage position based on an image of the target storage position captured by the depth camera 11a.

In embodiments of the disclosure, the controller 115 may compare the image captured by the depth camera 11a with a standard image, thus determining an offset distance. In this way, it is convenient that the offset distance between the pick-and-place assembly 13 and the target storage position maintain within a preset distance range, facilitating alignment between the pick-and-place assembly 13 and the target storage position, and improving stability when the target object is picked from the target storage position.

In other alternative examples of embodiments of the disclosure, a first sensor 117 is also provided on the base 11. The first sensor 117 may be specifically configured to detect positions of the movable base 12 and the pick-and-place assembly 13. That is, in embodiments of the disclosure, the first sensor 117 is triggered and generates a first trigger signal when the movable base 12 and the pick-and-place assembly 13 are located at the initial position. The controller 115 may determine, based on the first trigger signal, that the movable base 12 and the pick-and-place assembly 13 are located at the initial position. As a detailed example, the first sensor 117 may be a contact switch or a magnetic switch.

It may be understood that, in embodiments of the disclosure, the first sensor 117 being provided on the base 11 is merely illustrated as a detailed example. In some examples, the first sensor 117 may also be provided on the movable base 12, or may be provided at other positions, which are not described in detail in embodiments of the disclosure.

In embodiments of the disclosure, it is detected by the first sensor 117, whether the movable base 12 and the pick-and-place assembly 13 are located at the initial position. In this way, it may be accurately determined whether the movable base 12 and the pick-and-place assembly 13 moves to a specific position when retracted, facilitating the controller 115 to accurately control the first driving member 161 and the second driving member 151 to stop operating. In addition, it is detected by the first sensor 117 whether the movable base 12 and the pick-and-place assembly 13 are located at the initial position, which facilitates determining a distance that the pick-and-place assembly 13 needs to move toward the target storage position during picking or returning the target object.

For example, in some examples, a distance between the pick-and-place assembly 13 and the front end of the base 11. Generally, when the pick-and-place assembly 13 and the movable base 12 are located at the initial position, the distance between the pick-and-place assembly 13 and the front end of the base 11 may be a determined distance (in some examples, may be referred to as a second distance).

In another example, it may also be determined whether the pick-and-place assembly 13 is located at the initial position based on a first zero signal of a motor encoder of the first driving structure 16 and a second zero signal of a motor encoder of the second driving structure 15, facilitating determination of the distance between the pick-and-place assembly 13 and the front end of the base 11.

In another alternative example of embodiments of the disclosure, referring to FIG. 2 continuously, the pick-and-place mechanism 1 also includes a second sensor 118. The second sensor 118 may be provided on the base 11, and the second sensor 118 is configured to detect whether there is the target object in the pick-and-place assembly 13 at the initial position.

For example, during the pick-and-place mechanism 1 picking an object, after the pick-and-place assembly 13 picks the target object from the target storage position and retracts back onto the base 11 under driving of the movable base 12 and/or the telescoping structure 14, a situation where the target object detaches from the pick-and-place assembly 13 may occur due to reasons such as unstable force of the pick-and-place assembly 13, causing that the target object is not retracted into place when the pick-and-place assembly 13 finally retracts to the initial position. It may be caused that the target object easily falls from the front end of the base 11 during movement of the transfer robot in a warehousing system, or may be caused that a problem such as uncontrollable action timing between the pick-and-place assembly 13 and the target object occurs when the transfer robot unloads the object at a workstation.

Based on the above, the second sensor 118 is provided, in a case that the pick-and-place assembly 13 retracts to the initial position, when there is the target object in the pick-and-place assembly 13, the second sensor 118 may send a second trigger signal to the controller 115. The controller 115 determines, based on the second trigger signal of the second sensor 118, that there is the target object in the pick-and-place assembly 13 when the pick-and-place assembly 13 is located at the initial position. Conversely, in a case that the pick-and-place assembly 13 retracts to the initial position, when the controller 115 does not receive the second trigger signal of the second sensor 118, the controller 115 determines that the pick-and-place assembly 13 does not carry the target object when the pick-and-place assembly 13 is located at the initial position. Thus, it may be timely detected that the target object does not retract to the initial position.

In a case that the pick-and-place assembly 13 retracts to the initial position, when the pick-and-place assembly 13 does not carry the target object, i.e., the controller 115 does not receive the second trigger signal, the controller 115 may again control the first driving structure 16 and/or the second driving structure 15 to work (e.g., forward driving), to enable that the pick-and-place assembly 13 moves forward along the first direction under driving of the movable base 12 and/or the telescoping structure 14 (as illustrated in the positive direction of the x-direction in FIG. 1), and controls the pick-and-place assembly 13 to act on the front end face of the target object until the controller 115 receives the second trigger signal. Subsequently, the controller 115 again controls the first driving structure 16 and/or the second driving structure 15 to work (e.g., reverse driving), to enable that the pick-and-place assembly 13 moves backward along the first direction under driving of the movable base 12 and/or the telescoping structure 14 (e.g., to reverse direction of the x-direction in FIG. 1), until the pick-and-place assembly 13 carries the target object and retracts to the initial position.

Through the arrangement of the second sensor 118, it may be timely detected that the target object does not retract to the initial position, thus enabling timely control of the first driving structure 16 and/or the second driving structure 15 to again drive the pick-and-place assembly 13 to arrive at the target object, and to bring the target object back to the initial position, thus improving or avoiding problems such as the target object easily falling from the front end of the base 11 during movement of the transfer robot in the warehousing system, or problems such as uncontrollable action timing between the pick-and-place assembly 13 and the target object when the transfer robot unloads the object at the workstation.

As a specific example, in embodiments of the disclosure, the second sensor 118 may also be a contact switch or a magnetic switch. Specifically, in embodiments of the disclosure, a work principle of the second sensor 118 is the same as or similar to that of the first sensor 117. For details, reference may be made to the detailed description of the first sensor 117 in the above embodiments of the disclosure.

It may be understood that, in embodiments of the disclosure, the second sensor 118 may also be provided at other positions. In embodiments of the disclosure, the second sensor 118 being provided on the base 11 is merely taken as an example for illustration.

Referring to FIG. 1, in another alternative example of embodiments of the disclosure, the pick-and-place mechanism 1 may also include a third sensor 119. In some examples, the third sensor 119 may be provided on the base 11. Specifically, the third sensor 119 may be an infrared sensor or an ultrasonic sensor. The third sensor 119 is configured to detect the target object on the target carrier. For example, the controller 115 determines, based on a third trigger signal of the third sensor 119, whether there is the target object on a storage position of the target carrier to be picked.

In other alternative examples of embodiments of the disclosure, referring to FIG. 15, the pick-and-place mechanism 1 may also include a fourth sensor 135. Referring to FIG. 15, the fourth sensor 135 may be provided on the pick-and-place assembly 13. The fourth sensor 135 is configured to detect a position state between the target object and the pick-and-place assembly 13. For example, the controller 115 determines the position state between the target object and the pick-and-place assembly 13 based on a fourth trigger signal of the fourth sensor 135.

The position state may include that, a distance between the pick-and-place assembly 13 and the target object is lower than or equal to a fifth preset distance during moving the pick-and-place assembly 13 toward the target storage position. In addition, the position state may also include that, the distance between the pick-and-place assembly 13 and the target object is lower than or equal to a sixth preset distance during retracting the pick-and-place assembly 13 back into the base 11.

For example, when the distance between the pick-and-place assembly 13 and the target object is lower than or equal to the fifth preset distance during moving the pick-and-place assembly 13 toward the target storage position, the controller 115 may control the pick-and-place assembly 13 to approach the target object at a first preset velocity. In some examples, the first preset velocity is lower than a second preset velocity. The second preset velocity is a moving velocity of the pick-and-place assembly 13 when the distance between the pick-and-place assembly 13 and the target object is greater than the fifth preset distance. In this way, it may be ensured that when the pick-and-place assembly 13 moves to the vicinity of the target object, the pick-and-place assembly 13 may slowly approach the target object until the pick-and-place assembly 13 contacts the target object, thus avoiding a situation where the target object moves backward or even falls from the target storage position, and ensuring safety during picking the object.

For another example, when the distance between the pick-and-place assembly 13 and the target object is lower than or equal to the sixth preset distance during retracting the pick-and-place assembly 13 back into the base 11, it is determined that there is the target object in the pick-and-place assembly 13, i.e., the pick-and-place assembly 13 and the target object are not separated, ensuring that the pick-and-place assembly 13 carries the target object and smoothly arrives at the initial position. In some examples, the fifth preset distance is greater than the sixth preset distance. It may be understood that the fourth sensor 135 may trigger the fourth trigger signal when the distance between the pick-and-place assembly 13 and the target object is lower than or equal to the fifth preset distance or the sixth preset distance. Conversely, the fourth sensor 135 does not trigger the fourth trigger signal when the distance between the pick-and-place assembly 13 and the target object is greater than the fifth preset distance or the sixth preset distance. In this way, when the controller 115 receives the fourth trigger signal of the fourth sensor 135, it is determined that the distance between the pick-and-place assembly 13 and the target object is lower than or equal to the fifth preset distance or the sixth preset distance. When the controller 115 does not receive the fourth trigger signal of the fourth sensor 135, it is determined that the distance between the pick-and-place assembly 13 and the target object is greater than the fifth preset distance or the sixth preset distance.

For example, during the pick-and-place assembly 13 carrying the target object and retracting back into the base 11, when the controller 115 does not receive the fourth trigger signal of the fourth sensor 135, it is determined that the distance between the pick-and-place assembly 13 and the target object is greater than the sixth preset distance, thus determining that the pick-and-place assembly 13 and the target object are separated. Then, the pick-and-place assembly 13 may be driven by the first driving structure 16 and/or the second driving structure 15 to move toward the target object until the pick-and-place assembly 13 contacts the target object, and then the pick-and-place assembly 13 is controlled again to carry the target object and to retract until the pick-and-place assembly 13 arrives at the initial position.

In some specific examples, the fourth sensor 135 may specifically be any one of a contact switch, an infrared sensor, or an ultrasonic sensor. The fourth sensor 135 may also be a magnetic sensor (e.g., a Hall switch).

In some examples, during picking or returning the object by the pick-and-place assembly 13, to determine a moving distance of the pick-and-place assembly 13 toward the target storage position, the moving distance may be determined by motor encoders of the driving structure, such as the motor encoder of the first driving structure 16 and the motor encoder of the second driving structure 15. A gear position in the motor encoder is determined by a motor rotation velocity and a rotation time. The gear position of the motor encoder determines a distance that the motor drives the telescoping structure 14 and/or the movable base 12 to move, thus determining the moving distance of the pick-and-place assembly 13 toward the target storage position. For example, the motor encoder of the first driving structure 16 may detect a moving distance of the movable base 12, and the second driving structure 15 may detect a moving distance of a power shaft of the telescoping structure 14, thus determining the moving distance of the pick-and-place assembly 13.

In another example, the pick-and-place mechanism 1 may also include a detection structure. The detection structure is configured to detect the moving distance of the pick-and-place assembly 13 toward the target storage position, to determine a position of the pick-and-place assembly 13 in real time. For example, a position of the pick-and-place assembly 13 relative to the base 11 may be determined based on the moving distance of the pick-and-place assembly 13 toward the target storage position and an initial position of the pick-and-place assembly 13 relative to the base 11. It may be understood that the moving distance refers to a distance that the pick-and-place assembly 13 extends out relative to the initial position on the base 11, i.e., a distance between a current position of the pick-and-place assembly 13 and the initial position. The initial position is a position of the pick-and-place assembly 13 on the base 11 when the pick-and-place mechanism 1 does not yet perform picking or returning.

The detection structure may include, but is not limited to, any one of a draw-wire encoder, a laser ranging sensor, an ultrasonic sensor, and a millimeter-wave sensor.

Taking the detection structure being the draw-wire encoder as an example, one end of a draw wire in the draw-wire encoder may be fixed on the base 11 (e.g., fixed on a fixing portion 11b of the base 11) during installation. For example, one end of the draw wire of the draw-wire encoder may be provided at a rear end of the base 11 (an end facing away from the target storage position), and the other end of the draw wire of the draw-wire encoder is fixed on the pick-and-place assembly 13. Thus, when the pick-and-place assembly 13 extends out or retracts, the draw wire of the draw-wire encoder also extends out or retracts accordingly, thus accurately feedbacking the moving distance of the pick-and-place assembly 13 toward the target storage position by a length of the draw wire, and controlling the extension precision.

The fixing portion 11b is located at a side of the movable base 12 facing away from the telescoping structure 14.

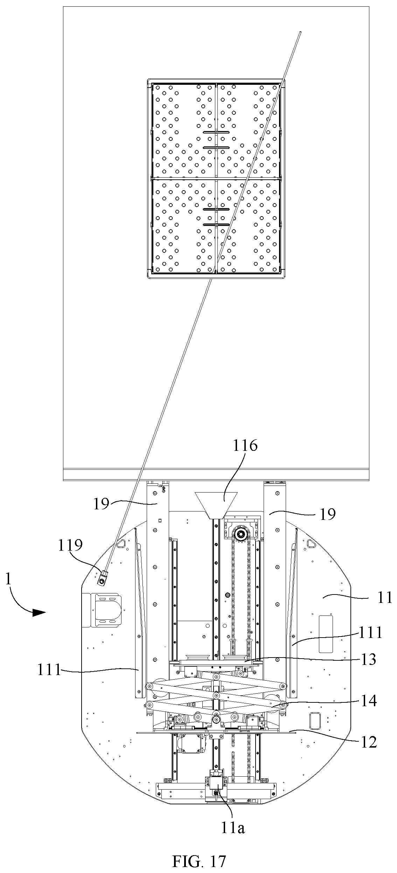

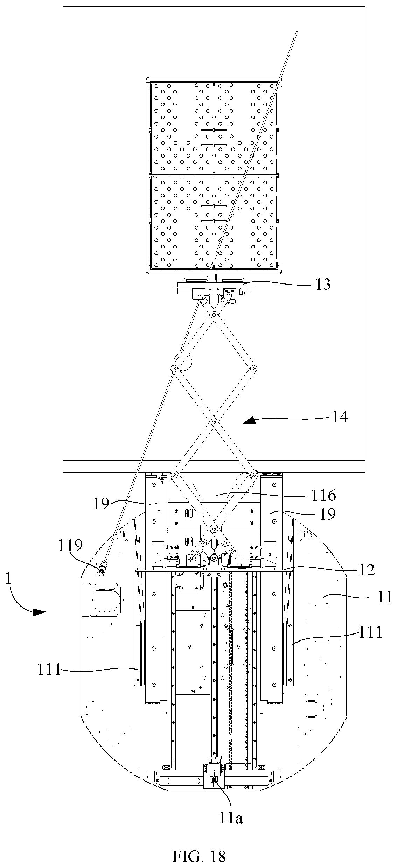

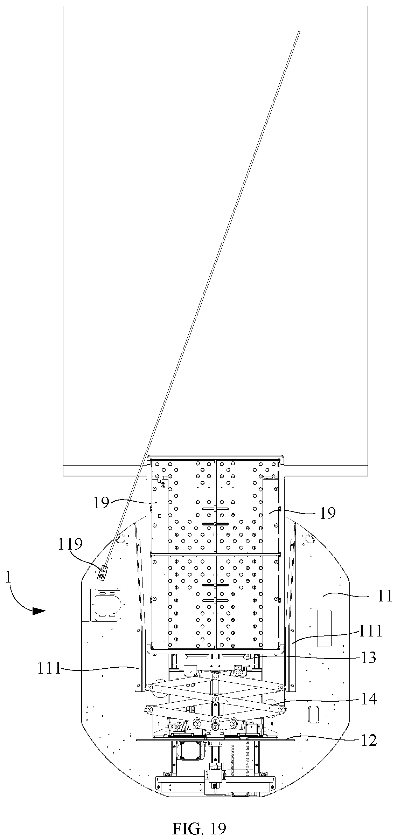

FIG. 16 is a schematic diagram illustrating an application scenario of a pick-and-place mechanism according to an embodiment of the disclosure. FIG. 17 is a schematic diagram illustrating a work state of a pick-and-place mechanism according to an embodiment of the disclosure. FIG. 18 is a schematic diagram illustrating another work state of a pick-and-place mechanism according to an embodiment of the disclosure. FIG. 19 is a schematic diagram illustrating yet another working state of a pick-and-place mechanism according to an embodiment of the disclosure.

Description is made below to a process of picking or returning a target object by the pick-and-place mechanism 1 provided in embodiments of the disclosure with reference to FIG. 15 to FIG. 18 respectively.

A picking process includes the following.

First, the pick-and-place mechanism may move under driving of the transfer robot. For example, a host computer may issue order information to the transfer robot, and the transfer robot moves to a corresponding target carrier based on the order information. Alternatively, the host computer may also determine a position of the corresponding target carrier based on the order information, and send corresponding position information to the transfer robot, and the transfer robot moves based on the corresponding position information, and drives the pick-and-place mechanism to arrive at the corresponding position.

Generally, referring to FIG. 15, the target carrier has a plurality of layers of storage positions, and each layer of storage positions may store a plurality of target objects (such as, containers or bins illustrated in FIG. 15). The pick-and-place mechanism 1 is usually provided on the gantry 2 of the transfer robot, and may move up and down along the gantry 2. After the transfer robot moves to the target carrier, the pick-and-place mechanism 1 moves up and down along the gantry 2, thus arriving at a storage position height where the corresponding target object is located.

For example, a two-dimensional code is provided on an end face of each layer of storage positions, and the two-dimensional code may record an actual height of a current storage position. When a driving structure on the gantry 2 drives the pick-and-place mechanism to move up and down, a height to which the pick-and-place mechanism rises may be detected and recorded by, such as, a motor encoder. In embodiments of the disclosure, the controller 115 compares the height to which the pick-and-place mechanism rises with a storage position height corresponding to the two-dimensional code, thus determining a possible deviation (mainly from a fitting gap of the driving structure) between the pick-and-place mechanism and a target storage position in a height direction. In this case, the height of the pick-and-place mechanism may be adjusted based on a compared result, to enable the height of the pick-and-place mechanism to be the same as the height of the target storage position.

In some examples, an image corresponding to the target carrier may also be captured by the depth camera 11a, and the image captured by the depth camera 11a may be analyzed by the controller 115, to determine a deviation condition of the base 11 or the pick-and-place assembly 13 relative to the target storage position, thus facilitating alignment of the pick-and-place assembly 13 with the target storage position, and ensuring the effectiveness and accuracy of picking the object.

Generally, during the pick-and-place mechanism 1 moving under driving of the transfer robot, the transfer robot walks along a path planned on the ground based on the position information issued by the host computer, and identifies ground markings, to determine a position of the target carrier by the ground markings. After the transfer robot moves to a specified position based on the position information issued by the host computer, there is a first distance between the front end of the base 11 of the pick-and-place mechanism 1 and the front end face of the target carrier.

Subsequently, the controller 115 may determine whether the first sensor 117 issues the first trigger signal, thus determining whether the pick-and-place assembly 13 and the movable base 12 are located at an initial position. For example, when the first sensor 117 issues the first trigger signal, it is determined that the pick-and-place assembly 13 and the movable base 12 are located at the initial position. In this way, it is convenient to determine the second distance between the pick-and-place assembly 13 and the front end of the base 11.

Alternatively, in some examples, it may also be determined whether the movable base 12 and the telescoping structure 14 are located at an initial position based on the first zero signal of the motor encoder of the first driving structure 16 and the second zero signal the a motor encoder of the second driving structure 15, thus determining whether the pick-and-place assembly 13 is located at the initial position. Alternatively, a detection structure, such as the draw-wire encoder, may also be configured to detect the moving distance of the pick-and-place assembly 13 toward the target storage position. When the moving distance is zero, it may be determined that the pick-and-place assembly 13 is located at the initial position. That is, when neither the first driving member 161 nor the second driving member 151 rotates, it may be determined that the movable base 12 and the telescoping structure 14 are located at the initial position. In this way, it is convenient to determine the second distance between the pick-and-place assembly 13 and the front end of the base 11.

Further, in some examples, the controller 115 may also determine, by the third sensor 119, whether there is the target object on the target carrier. For example, the controller 115 may determine that there is the target object on the target storage position when the third sensor 119 issues the third trigger signal, and may perform a picking operation. When the third sensor 119 does not issue the third trigger signal, it indicates that no target object exists on the target storage position, or that the target object on the target storage position is tilted. In this case, the controller 115 may issue an alarm prompt message or report to the host computer, to enable timely processing.

Referring to FIG. 17, a detection signal issued by the third sensor 119 may be transmitted to the target object, and the target object gives a feedback signal, for example, a reflected signal of the detection signal.

It may be understood that, during the movable base 12 moving and extending out, referring to FIG. 17, the follow-up pallet 19 extends out of the base 11 under an action of the elastic assembly 120. As the movable base 12 moves, the abutting member 193 at the front end of the follow-up pallet 19 pushes the third limiting member 110 to switch from the first state to the second state, and the follow-up pallet 19 stops moving until the front end of the follow-up pallet 19 abuts against the target carrier (as illustrated in FIG. 17). The movable base 12 may continue to move under driving of the first driving member 161.

During the suction cup 132 of the pick-and-place assembly 13 contacting or approaching the container (as illustrated in FIG. 18), the fourth sensor 135 issues a fourth trigger signal. The controller 115 determines, based on the fourth trigger signal of the fourth sensor 135, that a distance between the suction cup 132 and the target object is lower than or equal to a preset distance. In this case, the controller 115 may control the first driving structure 16 and the second driving structure 15 to decelerate driving of the pick-and-place assembly 13, thus avoiding collision damage to the target object by the pick-and-place assembly 13.

In some examples, the first distance, the second distance, and a third distance (the third distance may be the distance between the target storage position and the front end of the target carrier, generally a fixed value) may be employed to determine a work distance that the pick-and-place assembly 13 needs to move from the initial position to the target storage position. After the pick-and-place assembly 13 moves the work distance toward the target storage position, it may be determined that the pick-and-place assembly 13 arrives at the target storage position, and the suction cup 132 is in contact with the target object. In this case, the controller 115 controls the air source device 133 to start and to suck air from the inner cavity of the suction cup 132, thus enabling the suction cup 132 to firmly adsorb to the surface of the target object. For example, when the detection structure detects that the moving distance of the pick-and-place assembly 13 toward the target storage position is the work distance, it may be determined that the pick-and-place assembly 13 arrives at the target storage position.

When a vacuum degree in the suction cup 132 or the channel 136 reaches a preset vacuum degree (the preset vacuum degree may also be a preset negative pressure, which may be specifically determined based on a weight of the target object to be transferred and picked), the controller 115 controls the first driving member 161 and the second driving member 151 to operate, and the pick-and-place assembly 13 drives the target object to move toward the base 11. When the target object moves onto the follow-up pallet 19, the target object may be supported by the follow-up pallet 19 (as illustrated in FIG. 19), thus effectively avoiding a situation where the target object falls. As the movable base 12 continues to move, the bent portion 123 on the movable base 12 contacts the extending portion 191 of the follow-up pallet 19, and drives the follow-up pallet 19 to move toward the base 11. The movement of the follow-up pallet 19 causes deformation of the elastic assembly 120, to enable the elastic assembly 120 to store energy, for driving the follow-up pallet 19 in a next extension.

When the first sensor 117 detects that the movable base 12 and the pick-and-place assembly 13 are located at the initial position (i.e., the movable base 12 and the pick-and-place assembly 13 retract to the initial position after picking the target object), the controller 115 controls the first driving member 161 to stop, and the movable base 12 stops. Moreover, when the second sensor 118 detects the target object, it indicates that the pick-and-place assembly 13 is also located at the initial position. The target object arrives at a specific position, and the controller 115 controls the second driving member 151 to stop, and the telescoping structure 14 stops moving.

Finally, the controller 115 controls the air source device 133 to supply air to the suction cup 132 in a reverse direction, thus releasing the negative pressure between the suction cup 132 and the target object, and releasing the target object from the pick-and-place assembly 13. During the follow-up pallet 19 retracting with the movable base 12, the abutting member 193 at the front end of the follow-up pallet 19 pushes the first portion 1101 of the third limiting member 110, to enable the third limiting member 110 to switch from the second state to the first state, and to perform position limitation on the target object.

Afterwards, the transfer robot may transfer the target object to another position based on a transfer instruction issued by the host computer.

A returning process includes the following.

It may be understood that, in embodiments of the disclosure, the returning process is similar to the process where the movable base 12 and the pick-and-place assembly 13 extend out of the base 11 in the picking process. A difference is that the pick-and-place assembly 13 carries the target object in the extension process of the movable base 12 and the pick-and-place assembly 13 in the returning process. For details, reference may be made to the detailed description of the picking process in the above embodiments of the disclosure, which is not described in detail in embodiments of the disclosure.

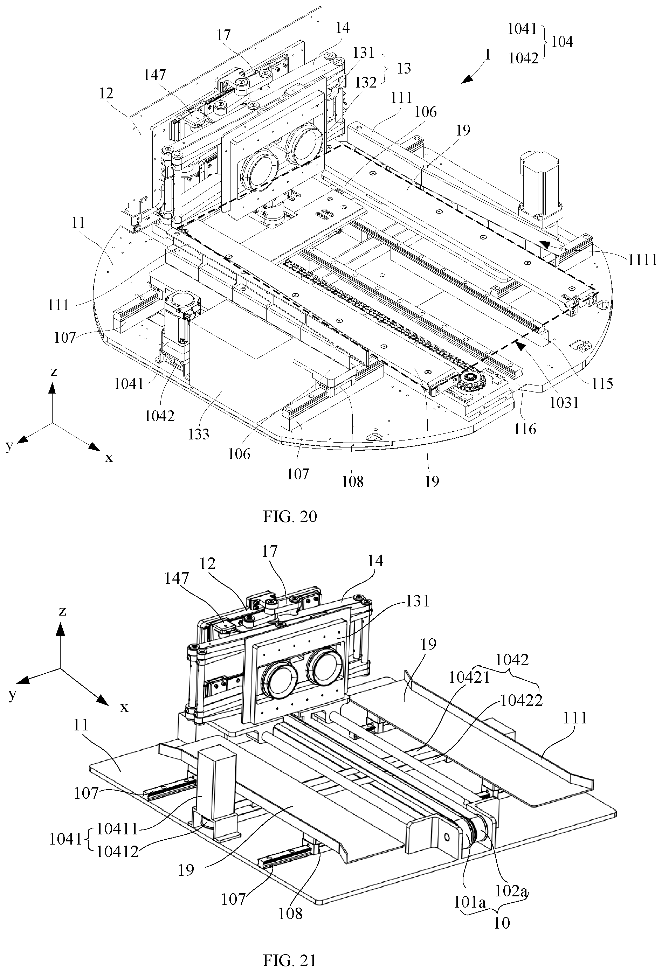

FIG. 20 is a schematic diagram illustrating a second overall structure of a pick-and-place mechanism according to an embodiment of the disclosure. FIG. 21 is a first schematic diagram illustrating a third overall structure of a pick-and-place mechanism according to an embodiment of the disclosure.

Referring to FIG. 20 and FIG. 21, embodiments of the disclosure provide the pick-and-place mechanism 1 also including a width adjustment assembly 104.

It should be noted that the pick-and-place assembly 13 may move along a first direction (referring to the direction illustrated by the x-direction in the figures) under driving of the driving mechanism 10, and the first direction may be parallel to a picking direction. In some examples, there is a preset angle between the first direction and the picking direction, and the preset angle may be an acute angle, to enable the first direction x to have a component in the picking direction, which ensures that the pick-and-place assembly 13 may finally arrive at the target storage position.

The picking direction refers to an extension direction of a line connecting the pick-and-place assembly 13 and the target storage position. Embodiments of the disclosure specifically take the first direction being parallel to the picking direction as an example.

It may be understood that the target storage position may be a storage position on a target carrier 5, such as a shelf, or may be a temporary storage position formed by a temporary storage plate. Correspondingly, the picking direction may be a direction in which the pick-and-place assembly 13 moves toward the target carrier 5 when picking or returning a target object 4, or may be a direction in which the pick-and-place assembly 13 moves toward the storage position of the temporary storage plate. It may be understood that the direction in which the pick-and-place assembly 13 moves toward the storage position of the target carrier 5 may be perpendicular to the direction in which the pick-and-place assembly 13 moves toward the storage position of the temporary storage plate.

In addition, the pick-and-place assembly 13 is configured to act on a front end face of the target object 4 when picking or returning the target object 4, to transfer the target object 4. The front end face of the target object 4 is an end face of the target object 4 that faces the pick-and-place assembly 13 when the target object 4 is to be picked or returned.

In some examples, the target carrier 5 may also refer to the temporary storage plate of the transfer robot. That is, the pick-and-place assembly 13 may also extend out of the base 11 to the temporary storage plate, and pick the target object 4 from the temporary storage plate, or place the target object 4 onto the temporary storage plate.

Referring to FIG. 20 and FIG. 21 continuously, in embodiments of the disclosure, a support region 1031 for supporting the container is formed on the follow-up pallet 19. Specifically, in embodiments of the disclosure, referring to FIG. 20 and FIG. 21, at least part of the support region 1031 is located on a movement path of the pick-and-place assembly 13. For example, the support region 1031 may extend along the first direction, and the pick-and-place assembly 13 may move within the support region 1031, to enable the support region 1031 of the follow-up pallet 19 to support the object (e.g., the container) carried on the pick-and-place assembly 13 when the pick-and-place assembly 13 picks or returns an object.

In some examples, when there is one follow-up pallet 19, the supporting face of the follow-up pallet 19 forms the support region 1031. When there are two follow-up pallets 19, the supporting faces of the two follow-up pallets 19 and a region between the two supporting faces form the support region 1031.

Referring to FIG. 20 and FIG. 21, in embodiments of the disclosure, at least part of the follow-up pallet 19 moves relative to the base 11, to adjust a bearing size of the follow-up pallet 19 for bearing the target object 4. It may be understood that the bearing size of the follow-up pallet 19 for bearing the target object 4 may specifically refer to a size of the support region 1031 formed by the above-mentioned follow-up pallet 19.

For example, at least part of the follow-up pallet 19 moves on the base 11 along the second direction, thus adjusting a width of the support region 1031 along the second direction.

Specifically, in embodiments of the disclosure, the second direction intersects, for example, is perpendicular or approximately perpendicular to, the first direction. The second direction is along a surface of the base 11, or the second direction is parallel or approximately parallel to the surface of the base 11. That is, in embodiments of the disclosure, the at least part of the follow-up pallet 19 may also move relative to the base 11 along the second direction. Alternatively, in some examples, movement of the at least part of the follow-up pallet 19 on the base 11 has a component along the second direction, to enable the width of the support region 1031 formed by the follow-up pallet 19 along the second direction to be adjustable. As a detailed example of embodiments of the disclosure, referring to the figures, the second direction may specifically be a direction illustrated by a y-axis in the figures. That is, the at least part of the follow-up pallet 19 may move along the direction illustrated by the y-axis in the figures, thus adjusting the width of the support region 1031.

In an alternative example of embodiments of the disclosure, the follow-up pallet 19 may be specifically configured as a telescoping plate structure that may telescope along the second direction. The width adjustment assembly 104 may be connected to the front end or the first telescoping section of the telescoping plate structure. By adjusting a distance between the front end or the first telescoping section and a tail telescoping section, the width of the support region 1031 is adjusted. In a detailed arrangement, the tail telescoping section of the telescoping plate structure may be specifically provided to relatively fixed to the base 11, while the first telescoping section may be specifically connected to the width adjustment assembly 104, thus moving along the second direction under driving of the width adjustment assembly 104.

In other alternative examples of embodiments of the disclosure, the follow-up pallet 19 may also have a middle portion relatively fixed to the base 11, and two ends or two sides of the follow-up pallet 19 along the second direction telescope relative to the middle portion, thus adjusting the width of the support region 1031 of the follow-up pallet 19. It may be understood that a detailed arrangement where the follow-up pallet 19 telescopes from the middle portion along the second direction toward both sides is similar to the arrangement where one end of the telescoping plate structure is fixed in the above embodiments of the disclosure. For details, reference may be made to the detailed description in the above embodiments of the disclosure, which is not described in detail in embodiments of the disclosure.

In addition, in embodiments of the disclosure, the at least part of the follow-up pallet 19 is configured to move along the second direction, in which the second direction intersects, for example, is perpendicular to, the first direction. In this way, the width of the support region 1031 of the follow-up pallet 19 along the second direction may be changed and adjusted, thus improving the adaptability for picking or returning objects with different sizes.

The bearing size of the follow-up pallet 19 may be adjusted manually. For example, when a width of the target object 4 to be picked or returned, such as the container, is a first width, the follow-up pallet 19 may be manually adjusted to enable the bearing size (e.g., bearing width) to be greater than or equal to the first width. When a width of a target object 4 to be picked or returned next time, such as the container, is a second width, the follow-up pallet 19 may be manually adjusted to enable the bearing size (e.g., bearing width) to be greater than or equal to the second width. The second width is different from the first width.

In another example, the pick-and-place mechanism 1 may also include the width adjustment assembly 104. The width adjustment assembly 104 is connected to the follow-up pallet 19 and is configured to drive the follow-up pallet 19 to move, to adjust the bearing size of the follow-up pallet 19 for bearing the target object 4. For example, the width adjustment assembly 104 may drive the at least part of the follow-up pallet 19 to move along the second direction. For example, the width adjustment assembly 104 may be electrically connected to the controller. When the width of the target object 4 to be picked or returned is the first width, the controller may control the width adjustment assembly 104 to work, to enable that the width adjustment assembly 104 drives the follow-up pallet 19 to move along the second direction, to adjust the bearing size of the follow-up pallet 19 to be greater than or equal to the first width. Thus, the entire process is automatically controlled, the working efficiency of the pick-and-place mechanism 1 is improved.

Referring to FIG. 20 and FIG. 21, in some alternative examples of embodiments of the disclosure, there are two follow-up pallets 19. Specifically, the two follow-up pallets 19 are provided at intervals. For example, the two follow-up pallets 19 may be oppositely provided along the second direction. Alternatively, in some examples, it may also be understood that the two follow-up pallets 19 are arranged along the second direction, to enable that the two follow-up pallets 19 together forms the support region 1031 (referring to FIG. 20). Referring to FIG. 20 and FIG. 21, in embodiments of the disclosure, the at least part of the pick-and-place assembly 13 is located between the two follow-up pallets 19. Thus, when the pick-and-place assembly 13 picks or returns an object, the pick-and-place assembly 13 moves and transfers the object onto the two follow-up pallets 19, facilitating support of the object by the follow-up pallets 19.

It should be noted that, when the follow-up pallet 19 includes two follow-up pallets 19, the support region 1031 in embodiments of the disclosure includes supporting faces of the two follow-up pallets 19 and a suspended region between the supporting faces.

By providing the two follow-up pallets 19 at intervals, the supporting function for the target object is achieved, while material usage for the follow-up pallets 19 is saved, thus reducing cost. In addition, the two spaced-apart follow-up pallets 19 are installed, which is convenient to provide clearance for other structures on the base 11.

In embodiments of the disclosure, the width adjustment assembly 104 is connected to at least one follow-up pallet 19, and drives the at least one follow-up pallet 19 to approach or move away from the other follow-up pallet 19, thus adjusting a distance between the two follow-up pallets 19, to change the width of the support region 1031.

In some specific examples of embodiments of the disclosure, the width adjustment assembly 104 may be connected to one of the follow-up pallets 19, and the other follow-up pallet 19 may be relatively fixed to the base 11. When the width of the two support regions 1031 is specifically adjusted, the width adjustment assembly 104 may drive one follow-up pallet 19, thus enabling the distance between the two follow-up pallets 19 to move away from or toward each other, to adjust the width of the support region 1031.

In other alternative examples of embodiments of the disclosure, the width adjustment assembly 104 may also be connected to the two follow-up pallets 19. That is, in embodiments of the disclosure, the two follow-up pallets 19 are connected to the width adjustment assembly 104 and move under driving of the width adjustment assembly 104.

Specifically, in embodiments of the disclosure, the width adjustment assembly 104 may be a lead screw and power blocks as described in the above embodiments of the disclosure. It may be understood that each follow-up pallet 19 may be connected to one of the power blocks, and the two power blocks are sleeved on the lead screw, and thread directions of internal threads in through holes on the two power blocks are opposite. In this way, when the lead screw rotates, moving directions of the two power blocks are always driven to an opposite direction (e.g., moving toward each other or moving away from each other), thus adjusting the width of the support region 1031.

In another example of embodiments of the disclosure, two width adjustment assemblies 104 may also be provided, in which one width adjustment assembly 104 is connected to one of the two follow-up pallets 19, and the other width adjustment assembly 104 is connected to the other of the two follow-up pallets 19. That is, in embodiments of the disclosure, the two follow-up pallets 19 may be respectively driven by the two width adjustment assemblies 104, to adjust the support region 1031 formed by the two follow-up pallets 19.

In some detailed examples, driving directions of the two width adjustment assemblies 104 for the two follow-up pallets 19 may be opposite. For example, when there needs to increase the width of the support region 1031, the two width adjustment assemblies 104 may drive the two follow-up pallets 19 to move away from each other along the second direction, thus increasing the width of the support region 1031, to adapt to a larger-sized container. When there needs to decrease the width of the support region 1031, the two width adjustment assemblies 104 may drive the two follow-up pallets 19 to move toward each other along the second direction, to decrease the width of the support region 1031, thus avoiding shaking of a smaller-sized container in the support region 1031, and improving the stability of container transfer.

In other detailed examples of embodiments of the disclosure, driving directions of the two width adjustment assemblies 104 for the two follow-up pallets 19 may be the same, and driving velocities of the two width adjustment assemblies 104 for the two follow-up pallets 19 may be different, thus enabling the two follow-up pallets 19 to move toward or away from each other due to different moving velocities, to adjust the width of the support region 1031 formed by the two follow-up pallets 19.

In embodiments of the disclosure, the two follow-up pallets 19 are provided along the second direction, the two follow-up pallets 19 form the support region 1031, and the at least part of the pick-and-place assembly 13 is provided between the two follow-up pallets 19. In this way, the two follow-up pallets 19 may support an object carried on the pick-and-place assembly 13. In addition, the width adjustment assembly 104 is connected to at least one of the follow-up pallets 19, thus driving the two follow-up pallets 19 to move toward or away from each other. In this way, a structure of the follow-up pallets 19 is simplified, facilitating driving of the follow-up pallets 19, i.e., improving the convenience of adjusting the width of the support region 1031, improving the adaptability of the pick-and-place mechanism 1 to containers with different sizes, and expanding an application scenario of the pick-and-place mechanism 1.

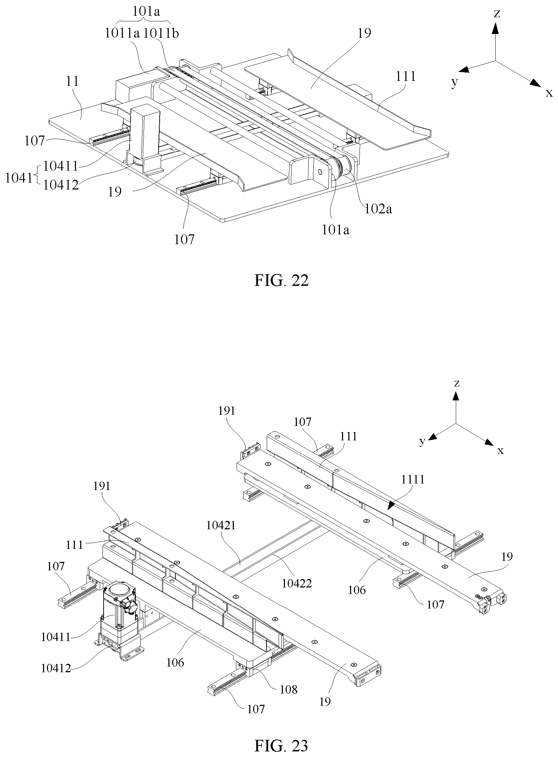

FIG. 22 is a schematic diagram illustrating a structure of a base 11, a width adjustment assembly 104 and a follow-up pallet 19 in a pick-and-place mechanism 1 cooperating with each other according to an embodiment of the disclosure. FIG. 23 is a schematic diagram illustrating a structure of a width adjustment assembly 104 cooperating with a follow-up pallet 19 in a pick-and-place mechanism 1 according to an embodiment of the disclosure.

Referring to FIG. 22 and FIG. 23, in some specific examples of embodiments of the disclosure, the width adjustment assembly 104 includes a width adjustment driving member 1041 and a width adjustment transmission member 1042.

Specifically, in embodiments of the disclosure, one end of the width adjustment transmission member 1042 is connected to the width adjustment driving member 1041, and the width adjustment transmission member 1042 has a first transmission section 10421 and a second transmission section 10422. In a detailed arrangement, the width adjustment driving member 1041 may be a motor capable of forward rotation and reverse rotation (e.g., the servo motor, the synchronous motor, or the stepping motor). It may be understood that, in some alternative examples of embodiments of the disclosure, the width adjustment driving member 1041 may also be a handwheel. In a detailed arrangement, the width adjustment transmission member 1042 has the first transmission section 10421 and the second transmission section 10422, and the first transmission section 10421 and the second transmission section 10422 move in opposite directions along the second direction under driving of the width adjustment driving member 1041. For example, referring to the figures, in some examples of embodiments of the disclosure, the first transmission section 10421 may specifically move in a positive direction of a y-axis in the figures, and the second transmission section 10422 may specifically move in a negative direction of the y-axis in the figures. Alternatively, in another example of embodiments of the disclosure, the first transmission section 10421 may move in the negative direction of the y-axis in the figures, and the second transmission section 10422 may move in the positive direction of the y-axis.

As a detailed example of embodiments of the disclosure, the width adjustment transmission member 1042 may specifically be a lead screw and two power blocks sleeved on the lead screw. One of the two power blocks may be the first transmission section 10421, and the other of the two power blocks may be the second transmission section 10422. In embodiments of the disclosure, for a detailed cooperation connection relationship between the lead screw and the two power blocks, please refer to the detailed description in the above embodiments of the disclosure, which is not described in detail in embodiments of the disclosure.

It may be understood that, in embodiments of the disclosure, one of the two follow-up pallets 19 is connected to the first transmission section 10421, and the other of the two follow-up pallets 19 is connected to the second transmission section 10422. In this way, when the first transmission section 10421 and the second transmission section 10422 move in opposite directions, the two follow-up pallets 19 approach or move away from each other, thus adjusting the width of the support region 1031 along the second direction, and facilitating adaptation to the containers with different sizes.

In embodiments of the disclosure, the first transmission section 10421 and the second transmission section 10422 of the width adjustment transmission member 1042 are driven by the width adjustment driving member 1041 to move in opposite directions along the second direction, then the two follow-up pallets 19 are driven to approach or move away from each other. In this way, an overall structure of the width adjustment assembly 104 is simplified, i.e., the overall structure of the pick-and-place mechanism 1 is simplified, facilitating a lightweight design of the pick-and-place mechanism 1. In addition, material usage for the width adjustment assembly 104 may be saved, thus saving processing and production costs of the pick-and-place mechanism 1.

Referring to FIG. 22 and FIG. 23 continuously, in a detailed example of embodiments of the disclosure, the width adjustment driving member 1041 specifically includes a driving motor 10411 and a driving wheel 10412. Specifically, an output end of the driving motor 10411 is connected to the driving wheel 10412, and the driving wheel 10412 rotates under driving of the driving motor 10411. In some possible examples, an axial direction of the driving wheel 10412 may be perpendicular or approximately perpendicular to the surface of the base 11, i.e., a rotation direction of the driving wheel 10412 is parallel to the surface of the base 11. Alternatively, in other possible examples of embodiments of the disclosure, the axial direction of the driving wheel 10412 may also be parallel or approximately parallel to the surface of the base 11. A detailed arrangement of the driving wheel 10412 is not limited in embodiments of the disclosure. It may be understood that, in embodiments of the disclosure, the driving motor 10411 may specifically be the servo motor, the synchronous motor, the stepping motor, or the like. Of course, it may be understood that, in embodiments of the disclosure, the driving motor 10411 may also be other types of motors. A specific type of the driving motor 10411 is not limited in embodiments of the disclosure.

In embodiments of the disclosure, referring to FIG. 22 and FIG. 23, the width adjustment transmission member 1042 includes a driven wheel and a synchronous belt. It may be understood that, in embodiments of the disclosure, the driving wheel 10412 and the driven wheel are provided at intervals along the second direction. The synchronous belt is sleeved on the driving wheel 10412 and the driven wheel, and is tensioned by the driving wheel 10412 and the driven wheel. In this way, when the driving motor 10411 drives the driving wheel 10412 to rotate, the driving wheel 10412 drives the synchronous belt and the driven wheel to rotate together through tension.

It may also be understood that, after the synchronous belt is sleeved on the driving wheel 10412 and the driven wheel, referring to FIG. 23, the synchronous belt forms opposite first and second portions along the first direction. The first portion may specifically be the first transmission section 10421, and the second portion may be the second transmission section 10422. That is, in embodiments of the disclosure, the first portion is connected to one of the two follow-up pallets 19, and the second portion is connected to the other of the two follow-up pallets 19.

Specifically, in embodiments of the disclosure, the synchronous belt may specifically be any one of the chain, the belt, the synchronous belt, or the timing belt. That is, in embodiments of the disclosure, the driving wheel 10412 may be a sprocket, and the driven wheel may be an idler wheel.

In a detailed arrangement, in embodiments of the disclosure, the driving wheel 10412 may be connected to the output end (in some examples, also referred to as an output shaft) of the driving motor 10411 by a coupling, a reducer, or the like, to enable the driving wheel 10412 to rotate relative to the base 11 under driving of the driving motor 10411. The driven wheel may be specifically provided on the base 11 by a rotating shaft, and rotatably connected to the base 11.

In embodiments of the disclosure, the synchronous belt sleeved on the driving wheel 10412 and the driven wheel is driven by the driving motor 10411 and the driving wheel 10412. One of the two follow-up pallets 19 is fixed on the first portion of the synchronous belt, and the other of the two follow-up pallets 19 is fixed on the second portion of the synchronous belt. In this way, the driving wheel 10412 and the driven wheel act as two fixed pulleys, thus changing movement directions of the first portion and the second portion, i.e., enabling the first portion and the second portion to move in opposite directions, thus driving the two follow-up pallets 19 to move, s to adjust a width of the support region 1031 formed by the two follow-up pallets 19.

Specifically, referring to FIG. 23, when the first portion moves in a negative direction of the y-axis in the figure, one follow-up pallet 19 located at a far end of the y-axis (an end away from an origin of coordinates in the figure) is driven by the first portion to move in the negative direction of the y-axis. The second portion moves in a positive direction of the y-axis in the figure, to drive the other follow-up pallet 19 located at a near end of the y-axis (an end approaching the origin of coordinates in the figure) to move in the positive direction of the y-axis, thus enabling the two follow-up pallets 19 to approach each other, i.e., reducing the width of the support region 1031. In another specific scenario, when the first portion moves in the positive direction of the y-axis in the figure, the follow-up pallet 19 located at the far end of the y-axis is driven by the first portion to move in the positive direction of the y-axis. In this case, the second portion moves in the negative direction of the y-axis in the figure, to drive the follow-up pallet 19 located at the near end of the y-axis to move in the negative direction of the y-axis, enabling the two follow-up pallets 19 to move away from each other, i.e., increasing the width of the support region 1031.

In embodiments of the disclosure, two ends of the synchronous belt are connected to the two follow-up pallets 19 respectively, i.e., one follow-up pallet 19 is connected to the first portion and the other follow-up pallet 19 is connected to the second portion. In this way, when the driving wheel 10412 is driven by the driving member, the synchronous belt may simultaneously drive the two follow-up pallets 19 to move in opposite directions along the second direction. That is, within a same time, the two follow-up pallets 19 move the same distance in opposite directions, and an actual adjustment distance of the support region 1031 is twice the moving distance of the follow-up pallet 19, thus effectively improving the adjustment efficiency of the width adjustment of the support region 1031.

In addition, in embodiments of the disclosure, the two follow-up pallets 19 are driven by the synchronous belt to move in opposite directions. In this way, the two follow-up pallets 19 has the same moving distance, but are in opposite directions. That is, the moving distances of the two follow-up pallets 19 always maintain symmetrical. 338. In this way, it may be ensured that after the support region 1031 is adjusted, the pick-and-place assembly 13 is always maintained at a middle of the two follow-up pallets 19, thus ensuring that an object carried by the pick-and-place assembly 13 is located at the middle of the two follow-up pallets 19, avoiding a situation where the object tilts, and improving the accuracy of picking or returning the object.

Referring to FIG. 23, in an alternative example of embodiments of the disclosure, the pick-and-place mechanism 1 also includes two guide strips 111.

The two guide strips 111 may perform position limitation on movement of the object supported on the follow-up pallet 19 (or on the support region 1031) along the second direction, thus effectively avoiding shaking of a container during picking, returning, or transferring the container, thus ensuring the stability of the container during the picking, returning, and transferring the container.

It may be understood that, in some alternative examples of embodiments of the disclosure, the width adjustment assembly 104 is connected to each guide strip 111, and during driving the two follow-up pallets 19 to approach or move away from each other, the width adjustment assembly 104 synchronously drives the two guide strips 111 to approach or move away from each other. That is, in embodiments of the disclosure, when the width adjustment assembly 104 adjusts the two follow-up pallets 19, the width adjustment assembly 104 synchronously adjusts the two guide strips 111, thus ensuring that the two guide strips 111 may adapt to the containers with different sizes, and perform position limitation for the containers with different sizes.

In a detailed implementation manner, referring to FIG. 20, in embodiments of the disclosure, the guide strips 111 are fixedly connected to the follow-up pallets 19. That is, in embodiments of the disclosure, each follow-up pallet 19 is fixedly connected with one guide strip 111, and the two guide strips 111 are oppositely provided along the second direction, thus forming the support region 1031 between the two guide strips 111. Specifically, in embodiments of the disclosure, the follow-up pallet 19 may be specifically made of a sheet metal part, and the guide strip 111 may be specifically formed by bending the sheet metal part. In some possible examples, the guide strip 111 may also be fixedly connected to the follow-up pallet 19 by components such as bolts, screws, or threaded rods. Alternatively, in other possible examples, the guide strip 111 may also be connected to the follow-up pallet 19 by welding.

In embodiments of the disclosure, one guide strip 111 is provided on a side of each follow-up pallet 19 facing away from the other follow-up pallet 19, and the width adjustment assembly 104 is connected to each guide strip 111. When the width adjustment assembly 104 drives the follow-up pallets 19 to move, the two guide strips 111 approach or move away from each other following the follow-up pallets 19, thus adjusting a distance between the two guide strips 111. In this way, it is convenient to adjust the distance between the guide strips 111, facilitating adaptation of the two guide strips 111 to the containers with different sizes, facilitating position limitation and guidance for the containers with different sizes, and improving the stability during container picking, returning, and transferring.

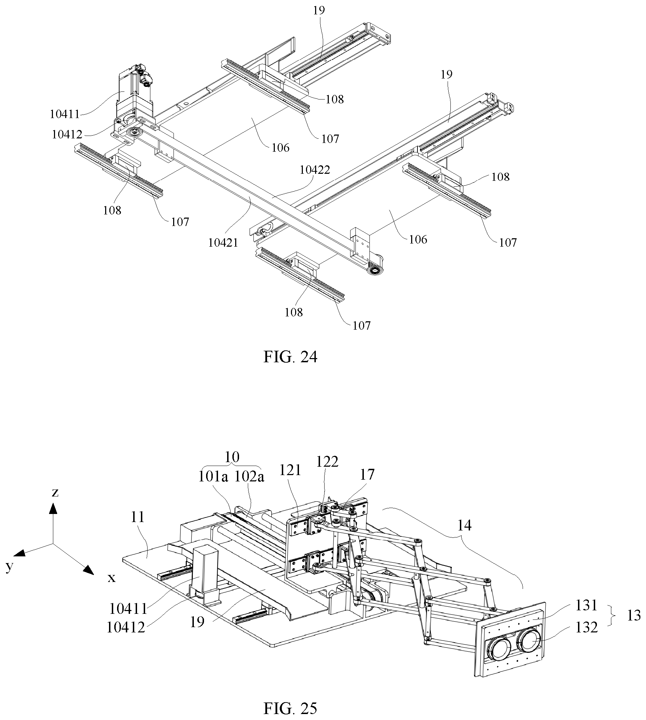

FIG. 24 is a schematic diagram illustrating another structure of a width adjustment assembly 104 cooperating with a follow-up pallet 19 in a pick-and-place mechanism 1 according to an embodiment of the disclosure.

It may be understood that the follow-up pallet 19 needs to be movable along the second direction under driving of the adjustment assembly, and the follow-up pallet 19 may also move relative to the base 11 along the first direction, to extend out of or retract back into the base 11 following the pick-and-place assembly 13. Thus, to ensure stable movement of the follow-up pallet 19 in different directions, in some alternative examples of embodiments of the disclosure, referring to FIG. 22 to FIG. 24, the pick-and-place mechanism 1 may also include a support platform 106. The support platform 106 is movably provided on the base 11. The follow-up pallet 19 is located on the support platform 106 and is movable relative to the support platform 106, to extend out of the base 11. For example, the support platform 106 is located between the base 11 and the follow-up pallet 19. The width adjustment assembly 104 is connected to the support platform 106, to drive the support platform 106 to move relative to the base 11. For example, the width adjustment assembly 104 may drive the support platform 106 to move along the second direction, to adjust a size of the support platform 106 along the second direction. The follow-up pallet 19, driven by the support platform 106, adjusts the bearing size for bearing the target object 4.

In some examples, the support platform 106 may be a telescoping plate that may telescope along the second direction. The follow-up pallet 19 may be provided on the telescoping plate, to enable the support platform 106 to drive the follow-up pallet 19 to move along the second direction when the support platform 106 telescopes along the second direction, thus adjusting the bearing size of the follow-up pallet 19 along the second direction.

In another example, referring to FIG. 7, the pick-and-place mechanism 1 includes two support platforms 106. Specifically, the support platform 106 is provided between the width adjustment assembly 104 and the follow-up pallet 19. In a detailed arrangement, one follow-up pallet 19 and one guide strip 111 are provided on one support platform 106. That is, in embodiments of the disclosure, one follow-up pallet 19 and a guide strip 111 adjacent to the one follow-up pallet 19 are located on one support platform 106, and the other follow-up pallet 19 and a guide strip 111 adjacent to the other follow-up pallet 19 are located on the other support platform 106.

Specifically, in embodiments of the disclosure, the width adjustment assembly 104 may be respectively connected to the two support platforms 106, thus driving the two support platforms 106 to move in an opposite direction along the second direction (e.g., to move toward each other or away from each other).

It may be understood that, in embodiments of the disclosure, a connection manner between the width adjustment assembly 104 and the two support platforms 106 is the same as or similar to the connection manner between the width adjustment assembly 104 and the two follow-up pallets 19 in the above embodiments of the disclosure. For details, reference may be made to the detailed description of the connection manner between the width adjustment assembly 104 and the two follow-up pallets 19 in the above embodiments of the disclosure, which is not described in detail in embodiments of the disclosure.

In embodiments of the disclosure, the two support platforms 106 are provided, the width adjustment assembly 104 is connected to the two support platforms 106, and one follow-up pallet 19 and one guide strip 111 are correspondingly provided on each support platform 106. In this way, it is convenient that the width adjustment assembly 104 is connected to the follow-up pallets 19 and the guide strips 111, thus improving the installation and production efficiency of the pick-and-place mechanism 1.

In an alternative example of embodiments of the disclosure, referring to FIG. 23 and FIG. 24, the pick-and-place mechanism 1 also includes a width adjustment guide rail 107 and a width adjustment slider 108. Specifically, in embodiments of the disclosure, the width adjustment guide rail 107 may be provided on one of the base 11 or the support platform 106, and the width adjustment guide rail 107 extends along the second direction. The width adjustment slider 108 is provided on the other one of the bases 11 or the support platform 106, and the width adjustment slider 108 is slidably connected to the width adjustment guide rail 107.

In a specific example of embodiments of the disclosure, referring to FIG. 21 and FIG. 22, the width adjustment guide rail 107 may be specifically provided on the base 11, and the width adjustment slider 108 may be provided on the support platform 106. In a detailed arrangement, the width adjustment guide rail 107 may be fixedly connected to the base 11, and correspondingly, the width adjustment slider 108 may be fixedly connected to the support platform 106. In this way, the width adjustment slider 108 may slide along the width adjustment guide rail 107 when the support platform 106 moves, thus facilitating guidance and support for movement of the support platform 106, and improving the stability of movement of the support platform 106.

In some alternative examples of embodiments of the disclosure, referring to FIG. 23 and FIG. 24, two width adjustment guide rails 107 may be provided, and the two width adjustment guide rails 107 are provided at intervals along the first direction. One width adjustment slider 108 is provided on each width adjustment guide rail 107. In this way, the support platform 106 is supported and translated through the two width adjustment guide rails 107 and the two width adjustment sliders 108, which may effectively improve the stability of movement of the support platform 106.

In other alternative examples of embodiments of the disclosure, referring to FIG. 24, each support platform 106 is correspondingly provided with two width adjustment guide rails 107 along the first direction. That is, in embodiments of the disclosure, four width adjustment guide rails 107 may be provided in total. Of course, it may be understood that three width adjustment guide rails 107 may also be provided (for example, one support platform 106 is correspondingly provided with two width adjustment guide rails 107 arranged along the first direction, and the other support platform 106 is correspondingly provided with one width adjustment guide rail 107). Alternatively, in some examples, the number of width adjustment guide rails 107 may also be five. A detailed number of the width adjustment guide rails 107 is not limited in embodiments of the disclosure, which may be selected based on an actual requirement in a detailed arrangement.

It may also be understood that, in other alternative examples of embodiments of the disclosure, the width adjustment guide rail 107 may also be provided on the support platform 106, and correspondingly, the width adjustment slider 108 may be provided on the base 11. It may be understood that, in embodiments of the disclosure, a detailed arrangement that the width adjustment guide rail 107 is provided on the support platform 106 is the same as or similar to the detailed arrangement that the width adjustment guide rail 107 is provided on the base 11 in the above embodiments of the disclosure. For details, reference may be made to the detailed description in the above embodiments of the disclosure, which is not described in detail in embodiments of the disclosure.

In embodiments of the disclosure, there may be a plurality of arrangements of the pick-and-place assembly 13.

In some examples, the pick-and-place mechanism 1 may include a telescoping structure 14, and the telescoping structure 14 is provided on the base 11. That is, the telescoping structure 14 is movably provided on the base 11 by the base 11. The pick-and-place assembly 13 is provided at a free end of the telescoping structure 14. The driving mechanism 10 drives the telescoping structure 14 to telescope, to enable the free end of the telescoping structure 14 to drive the pick-and-place assembly 13 to extend out of or retract back into the base 11.

For example, the telescoping structure 14 may be provided on the base 11. For example, one end of the telescoping structure 14, such as a fixed end, is connected to a fixing portion of the base 11 (which is provided opposite to the pick-and-place assembly 13), and the other end may be a free end. The free end of the telescoping structure 14 may selectively extend out of or retract back into the base 11.

In an alternative example of embodiments of the disclosure, the telescoping structure 14 may specifically be a telescoping rod (e.g., a telescoping cylinder, a hydraulic cylinder, or an electric cylinder). In other possible examples, the telescoping structure 14 may also be a scissor-fork structure. A detailed type of the telescoping structure 14 is not limited in embodiments of the disclosure.

In some examples of embodiments of the disclosure, the pick-and-place assembly 13 is provided at the free end, and the pick-and-place assembly 13 may move relative to the base 11 under driving of the free end.

In some examples, the driving mechanism 10 may be connected to the telescoping structure 14. The driving mechanism 10 is configured to drive the free end to extend out of or retract back into the base 11, to drive the pick-and-place assembly 13 to perform reciprocating motion between a target storage position and the base 11 (e.g., the base 11).

Taking the telescoping structure 14 being the scissor-fork structure as an example, the driving mechanism 10 may specifically include a driving motor and a pulley structure. The pulley structure may include a driving wheel and a driven wheel provided at an interval, and a transmission belt sleeved on the driving wheel and the driven wheel. The driving motor is connected to the driving wheel, to drive the driving wheel to rotate, thus driving the transmission belt and the driven wheel to move. It may be understood that the scissor-fork structure may include a plurality of hinge positions arranged along a telescoping direction. One of the hinge positions is connected to the transmission belt, to move along the telescoping direction under driving of the transmission belt, and to enable the free end of the scissor-fork structure to telescope along an x-direction, thus driving the pick-and-place assembly 13 to extend out of or retract back into the base 11.

FIG. 25 is a second schematic diagram illustrating a third overall structure of a pick-and-place mechanism according to an embodiment of the disclosure.

Referring to FIG. 20 and FIG. 25, in another example, the pick-and-place mechanism 1 may include a telescoping structure 14 and a movable base 12.

Specifically, in embodiments of the disclosure, the first end (i.e., a fixed end) of the telescoping structure 14 is provided on the movable base 12, and the second end (i.e., a free end) of the telescoping structure 14 is provided on the pick-and-place assembly 13. That is, in embodiments of the disclosure, the telescoping structure 14 is provided between the movable base 12 and the pick-and-place assembly 13. Extension of the telescoping structure 14 pushes the pick-and-place assembly 13 to move away from the movable base 12, and retraction of the telescoping structure 14 drives the pick-and-place assembly 13 to move toward the movable base 12.

As one example, the driving mechanism 10 may simultaneously drive the movable base 12 and the telescoping structure 14 to move, to drive the pick-and-place assembly 13 to extend out of or retract back into the base 11.

For example, the driving mechanism 10 may include a driving assembly 101a and a transmission assembly 102a. The driving assembly 101a is connected to one of the movable bases 12 or the telescoping structure 14, x the transmission assembly 102a is connected to the other one of the movable bases 12 or the telescoping structure 14, and the transmission assembly 102a is connected to the driving assembly 101a, to move under driving of the driving assembly 101a.

Referring to FIG. 22, in embodiments of the disclosure, the driving assembly 101a may include a driving member 1011a, such as a driving motor, and a transmission member 1011b, such as a first pulley structure. The first pulley structure may include two transmission rollers provided on the base 11 and oppositely arranged along the first direction. The two transmission rollers are rotatably connected by a transmission member such as the chain, the belt, the synchronous belt, or the timing belt. A driving block is fixed on the chain, the belt, the synchronous belt, or the timing belt, and the driving block is fixedly connected to the telescoping structure 14. In this way, when the driving motor drives one of the transmission rollers to rotate, the chain, the belt, the synchronous belt, or the timing belt rotates accordingly, thus driving the driving block to drive the telescoping structure 14 to telescope, and further driving the pick-and-place assembly 13 provided on the second end 1413 of the telescoping structure 14 to move along the first direction.

In a specific example of embodiments of the disclosure, an axial direction of the two transmission rollers may be perpendicular to the surface of the base 11. Alternatively, in some examples, referring to the figures, the axial direction of the two transmission rollers may also be parallel to the surface of the base 11. In embodiments of the disclosure, it is sufficient to ensure that an arrangement direction of the two transmission rollers is along the first direction. That is, in embodiments of the disclosure, it is sufficient to ensure that a transmission direction of the two transmission rollers for the chain, the belt, the synchronous belt, or the timing belt is along the first direction.

In addition, the transmission assembly 102a may be a second pulley structure. For example, the second pulley structure may include two transmission rollers. The two transmission rollers are drivingly connected by a transmission member such as the chain, a belt, the synchronous belt, or the timing belt. A driving block is fixed on the chain, the belt, the synchronous belt, or the timing belt, and the driving block is fixedly connected to the movable base 12. One of the transmission rollers of the second pulley structure is also connected to an output shaft of the driving motor. In this way, when the driving motor drives the one transmission roller of the second pulley structure to rotate, the chain, the belt, the synchronous belt, or the timing belt rotates accordingly, thus driving the driving block to drive the movable base 12 to move, and further driving the telescoping structure 14 and the pick-and-place assembly 13 provided on the movable base 12 to move along the first direction.

It may be understood that one transmission roller of the first pulley structure and the transmission roller of the second pulley structure are provided side by side and coaxially along an axial direction of the output shaft of the motor, thus simultaneously driving the two pulley structures to move by one driving motor. That is, in embodiments of the disclosure, the movable base 12 and the pick-and-place assembly 13 may specifically move synchronously.

It may be understood that, in embodiments of the disclosure, during synchronous movement of the movable base 12 and the pick-and-place assembly 13, mutual interference may occur between the movable base 12 and the pick-and-place assembly 13. Referring to FIG. 22 and FIG. 25, in embodiments of the disclosure, wheel diameters of the two transmission rollers of the first pulley structure may be specifically set to be different from the two transmission rollers of the second pulley structure.

Specifically, referring to FIG. 25, when one driving motor provides power to the first pulley structure and the second pulley structure, rotational angular velocities of driving wheels (i.e., the transmission rollers connected to the driving motor) of the first pulley structure and the second pulley structure are the same. However, in a picking or returning process, the pick-and-place assembly 13 is located on a side of the movable base 12 facing toward a container. Generally, there needs to ensure that a moving velocity of the pick-and-place assembly 13 is greater than a moving velocity of the movable base 12. Thus, in s embodiments of the disclosure, wheel diameters of the two transmission rollers of the first pulley structure may be set to be greater than wheel diameters of the two transmission rollers of the second pulley structure. In this way, under driving of the same driving motor, the two transmission rollers of the first pulley structure have a greater linear velocity than the two transmission rollers of the second pulley structure, to enable the chain, the belt, the synchronous belt, or the timing belt of the first pulley structure to have a higher transmission velocity than the second pulley structure, i.e., the pick-and-place assembly 13 has a faster moving velocity than the movable base 12, thus effectively avoiding the mutual interference between the pick-and-place assembly 13 and the movable base 12.

As another example, the driving mechanism 10 may include the first driving structure 16 and the second driving structure 15. The first driving structure 16 is connected to the movable base 12, and the first driving structure 16 is configured to drive the movable base 12 to move (e.g., along a direction illustrated by an x-axis in FIG. 3), thus enabling the movable base 12 to drive the pick-and-place assembly 13 to move along the first direction.

In some examples, the second driving structure 15 may be connected to the telescoping structure 14. The second driving structure 15 is configured to drive the second end of the telescoping structure 14 to move toward or away from the first end along the first direction, to enable the pick-and-place assembly 13 driven by the second end of the telescoping structure 14 to move along the first direction.

It should be noted that detailed structures of the first driving structure 16 and the second driving structure 15, a cooperation manner of the first driving structure 16 and the second driving structure 15 in the pick-and-place mechanism 1, etc., may directly refer to the relevant content of the first structure of the pick-and-place mechanism 1, which is not described in detail in embodiments of the disclosure.

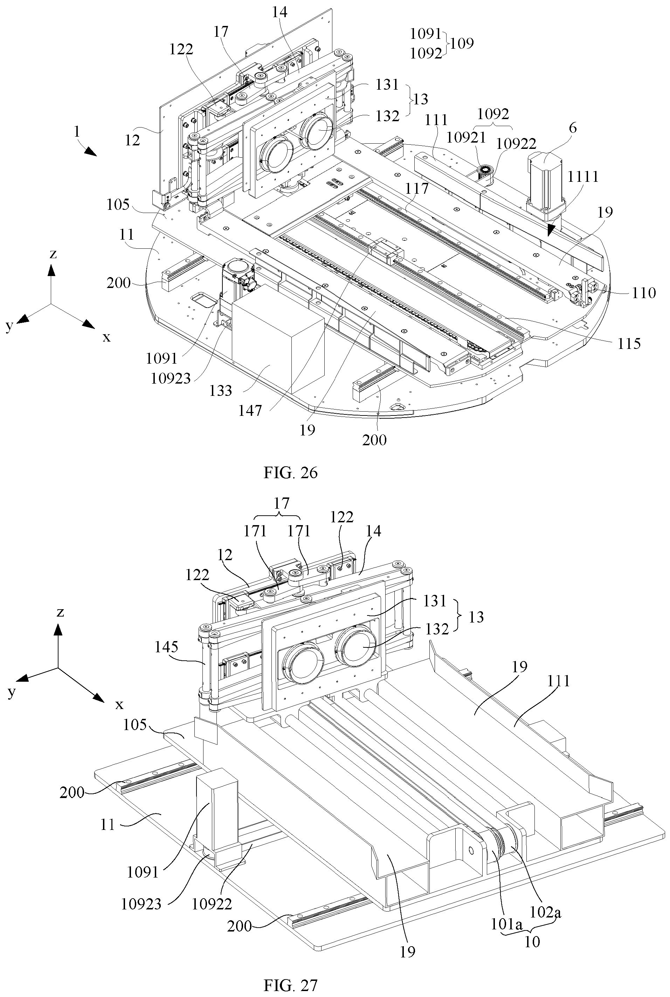

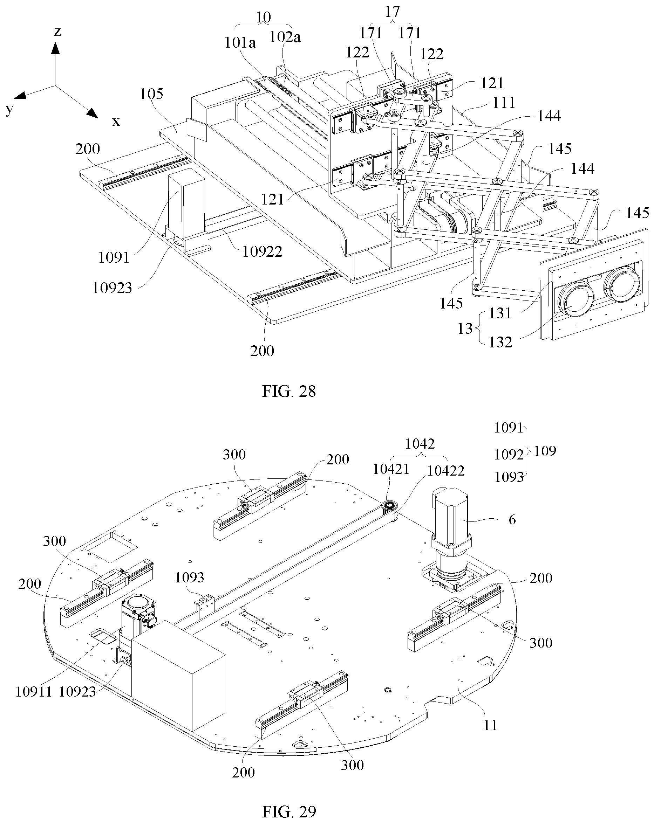

FIG. 26 is a schematic diagram illustrating a fourth overall structure of a pick-and-place mechanism according to an embodiment of the disclosure. FIG. 27 is a first schematic diagram illustrating a fifth overall structure of a pick-and-place mechanism according to an embodiment of the disclosure. FIG. 28 is a second schematic diagram illustrating a fifth overall structure of a pick-and-place mechanism according to an embodiment of the disclosure.

Referring to FIG. 26 to FIG. 28, the pick-and-place mechanism 1 provided in embodiments of the disclosure also includes a translation assembly 109.

Referring to FIG. 26 to FIG. 27, in embodiments of the disclosure, the translation assembly 109 may be provided on the base 11, and the translation assembly 109 is configured to drive the pick-and-place assembly 13 to move on the base 11, to adjust an offset distance of the pick-and-place assembly 13 relative to the target storage position.

In embodiments of the disclosure, the offset distance refers to a misalignment distance between the pick-and-place assembly 13 and the target storage position along a second direction. For example, an offset distance in the second direction between a projection area of the pick-and-place assembly 13 on a target carrier 5 and the target storage position. For example, an offset distance in the second direction between a projection area of a center of the pick-and-place assembly 13 on the target carrier 5 and a center of the target storage position.

For example, the translation assembly 109 may drive the pick-and-place assembly 13 to move along the second direction. The second direction intersects a first direction and may be parallel to a surface of the base 11. For example, the second direction may be specifically perpendicular to the first direction. That is, in embodiments of the disclosure, the translation assembly 109 drives the pick-and-place assembly 13 to move in a direction perpendicular to the first direction. In some specific examples, referring to FIG. 26, the second direction may specifically be a direction illustrated by a y-axis in FIG. 26 to FIG. 28.

It may also be understood that, in some specific examples of embodiments of the disclosure, when the translation assembly 109 drives the pick-and-place assembly 13 to move, a movement of the pick-and-place assembly 13 has a displacement component in the second direction. That is, an actual moving direction of the pick-and-place assembly 13 driven by the translation assembly 109 may have a certain angle with the second direction. In this case, there only needs to ensure that the movement of the pick-and-place assembly 13 by the translation assembly 109 is not parallel to the first direction, to enable the movement of the pick-and-place assembly 13 to have a displacement component in the second direction.

In some alternative examples of embodiments of the disclosure, the translation assembly 109 may specifically be a telescoping rod (e.g., a cylinder, a piston cylinder, an electric cylinder, or a hydraulic cylinder) connected to the movable base 12 or the pick-and-place assembly 13. Of course, in some alternative examples, the translation assembly 109 may also be connected to the pick-and-place assembly 13 through a telescoping rod, and a driving member is connected to a telescoping section of the telescoping rod, to drive the telescoping rod to telescope through the driving member, thus translating the pick-and-place assembly 13 along the second direction.

Alternatively, in other alternative examples of embodiments of the disclosure, the translation assembly 109 may also drive the pick-and-place assembly 13 through cooperation between a lead screw and a power block, to enable the pick-and-place assembly 13 to translate along the second direction. For example, a lead screw extending along the second direction is provided on the base 11, and the power block is provided on a side (usually a bottom or lower side of the movable base 12) of the pick-and-place assembly 13 facing the base 11, and the power block is connected to a thread of the lead screw (which may also be referred to as a screw connection). In this way, when the lead screw is driven to rotate by a motor, the lead screw drives the pick-and-place assembly 13 connected to the power block to move through the thread.

It may be understood that, during storing target objects 4, to fully utilize a vertical space of the shelf or the warehouse, the target objects 4 usually need to be stacked to a certain height in a vertical direction. During picking or returning the target object 4 to be picked or returned by the transfer robot, the pick-and-place mechanism 1 is usually at a certain height from the ground (for example, a height of the pick-and-place mechanism 1 is raised or lowered by a lifting device). In this case, the pick-and-place mechanism may have a certain swing, which may cause a certain deviation or error in a position between the pick-and-place assembly 13 and the target storage position.

In embodiments of the disclosure, the pick-and-place assembly 13 is driven by the translation assembly 109 to move, for example, along the second direction y, to decrease the offset distance between the pick-and-place assembly 13 and the target storage position, and a deviation (or offset) caused by swing of the pick-and-place assembly 13 in the picking or returning process may be effectively compensated, thus ensuring the accuracy of picking or returning the target object 4 by the pick-and-place assembly 13, and improving the efficiency of picking or returning the target object 4.

Compared with a manner of translating the entire transfer robot by driving the chassis of the transfer robot to translate the pick-and-place assembly 13, in embodiments of the disclosure, the translation assembly 109 is added to the pick-and-place mechanism 1, and the pick-and-place assembly is driven by the translation assembly 109 to translate relative to the base 11, thus shortening a transmission path of a driving force, improving an adjustment velocity of the pick-and-place assembly 13, and also improving or avoiding a situation where the driving force is weakened due to an excessively long transmission path of the driving force, thus improving the adjustment accuracy of the pick-and-place assembly 13.

Referring to FIG. 26 to FIG. 28, in some alternative examples of embodiments of the disclosure, the pick-and-place mechanism 1 also includes a support base 105.

Specifically, referring to FIG. 26, in embodiments of the disclosure, the support base 105 is provided on the base 11. In a detailed arrangement, both the pick-and-place assembly 13 and at least part of a driving mechanism 10 are provided on the support base 105, and the translation assembly 109 is connected to the support base 105, for example, may be provided between the base 11 and the support base 105. That is, in embodiments of the disclosure, movement of the pick-and-place assembly 13 along the second direction may specifically be movement of the support base 105 driven by the translation assembly 109, thus driving the pick-and-place assembly 13 and the driving structure provided on the support base 105 to move.

It should be noted that the driving mechanism 10 is configured to drive the pick-and-place assembly 13 to move between the base 11 and the target storage position.

Specifically, in embodiments of the disclosure, a specific connection manner between the translation assembly 109 and the support base 105 may refer to the detailed description of the connection manner between the translation assembly 109 and the pick-and-place assembly 13 in the above embodiments of the disclosure, which is not described in detail in embodiments of the disclosure.

In embodiments of the disclosure, the support base 105 is provided on the base 11, and the driving mechanism 10 and the pick-and-place assembly 13 are provided on the support base 105. In this way, by driving the support base 105 through the translation assembly 109, the pick-and-place assembly 13 and the driving mechanism 10 on the support base 105 are driven to translate together, which may avoid a situation where translation of the driving mechanism 10 and the pick-and-place assembly 13 is not synchronized, also prevent interference between driving of the pick-and-place assembly 13 through the driving mechanism 10 and driving of the pick-and-place assembly 13 through the translation assembly 109, and ensure that movement of the pick-and-place assembly 13 along the first direction and along the second direction do not interfere with each other, thus effectively improving the accuracy of translational adjustment of a position of the pick-and-place assembly 13, and improving the efficiency of picking or returning the target object 4 by the pick-and-place assembly 13.

FIG. 29 is a schematic diagram illustrating a structure of a base cooperating with a translation assembly in a pick-and-place mechanism according to an embodiment of the disclosure.

Referring to FIG. 29, in an alternative example of embodiments of the disclosure, the translation assembly 109 may specifically extend along the second direction on the base 11. The translation assembly 109 specifically includes: a translation driving member 1091 and a translation transmission member 1092.

Specifically, in embodiments of the disclosure, the translation driving member 1091 may be a motor capable of forward and reverse rotation (e.g., a servo motor, a stepping motor, or a synchronous motor). In some detailed examples of embodiments of the disclosure, the translation transmission member 1092 may specifically extend along the second direction.

As a detailed example of embodiments of the disclosure, the translation transmission member 1092 may be the lead screw as described in the above embodiments of the disclosure. One end of the lead screw is connected to the translation driving member 1091 by a connecting component such as a coupling or a reducer, and rotates under driving of the translation driving member 1091.

In embodiments of the disclosure, when the translation transmission member 1092 is the lead screw, a power block having an internal thread may be provided on a side of the support base 105 facing the translation transmission member 1092, and the power block is threadedly connected to the lead screw. In this way, the power block drives the support base 105 to move when the lead screw rotates.

In other alternative examples of embodiments of the disclosure, the translation driving member 1091 may also be the cylinder, the piston cylinder, the hydraulic cylinder, or the like. It may be understood that an output end of the cylinder, the piston cylinder, or the hydraulic cylinder may be provided along the second direction and extend along the second direction. The cylinder, the piston cylinder, or the hydraulic cylinder drives the support base 105 to move when the output end of the cylinder, the piston cylinder, or the hydraulic cylinder moves along the second direction, thus translating and adjusting a position of the pick-and-place assembly 13.

In embodiments of the disclosure, the translation assembly 109 is provided on the base 11, and the translation transmission member 1092 is configured to perform reciprocating motion along the second direction under driving of the translation driving member 1091. In this way, a moving distance of the support base 105 may be conveniently controlled by a driving angle or a driving displacement of the translation driving member 1091. Thus, the accuracy of translational adjustment of the position of the pick-and-place assembly 13 may be improved, facilitating accurate picking or returning of the target object 4.

Referring to FIG. 28 and FIG. 29 continuously, in a specific detailed of embodiments of the disclosure, the translation driving member 1091 includes a driving motor 10911, and the translation transmission member 1092 may specifically include a translation driving wheel 10923, a translation driven wheel 10921, and a translation transmission belt 10922 (e.g., a chain, a belt, a synchronous belt, or a timing belt).

The translation driven wheel 10921 and the translation driving wheel 10923 are provided at intervals along the second direction. The translation transmission belt 10922 is sleeved on the translation driving wheel 10923 and the translation driven wheel 10921, and the translation transmission belt 10922 is tensioned by the translation driving wheel 10923 and the synchronous wheel. An output end of the driving motor 10911 is connected to the translation driving wheel 10923, and the translation driving wheel 10923 rotates under driving of the driving motor 10911.

Specifically, referring to FIG. 28 and FIG. 29, in an alternative example of embodiments of the disclosure, the translation driving wheel 10923 may be specifically rotatably connected to the base 11. The output end of the driving motor 10911 (in some examples, also referred to as an output shaft of the driving motor 10911) may be connected to the translation driving wheel 10923 by a device such as a coupling or a reducer. In some examples, the output shaft may also be directly connected to the translation driving wheel 10923. In embodiments of the disclosure, a detailed connection manner between the translation driving wheel 10923 and the output shaft is not limited.

It may be understood that, referring to FIG. 28 and FIG. 29, in embodiments of the disclosure, an axial direction of the translation driving wheel 10923 may be specifically set perpendicular or approximately perpendicular to a surface of the base 11. In some examples, the axial direction of the translation driving wheel 10923 may also be set parallel or approximately parallel to the surface of the base 11.

In a detailed example of embodiments of the disclosure, referring to FIG. 28 and FIG. 29, when the driving motor 10911 drives the translation driving wheel 10923, the translation driving wheel 10923 drives the translation transmission belt 10922 to rotate, and the translation transmission belt 10922 synchronously drives the translation driven wheel 10921 to rotate.

It may be understood that, referring to FIG. 29, in embodiments of the disclosure, after the translation transmission belt 10922 is sleeved on the translation driving wheel 10923 and the translation driven wheel 10921, the translation transmission belt 10922 has two portions extending along the second direction in the first direction. It may be understood that moving directions of the two portions are opposite. In embodiments of the disclosure, the support base 105 is connected to one of the portions, and moves under driving of the translation transmission belt 10922.

In embodiments of the disclosure, by the translation driving wheel 10923, the translation driven wheel 10921, and the translation transmission belt 10922 sleeved between the translation driving wheel 10923 and the translation driven wheel 10921 to rotate through the driving motor 10911, the support base 105 is driven to move. In this way, the entire translation assembly 109 has a simple structure, simplifying an overall structure of the pick-and-place mechanism, and facilitating a lightweight design of the pick-and-place mechanism.

It should be noted that the pulley transmission structure (e.g., the translation transmission member 1092) in embodiments of the disclosure may extend a transmission distance and increase smoothness, with a constant transmission ratio and a high transmission efficiency.

The translation transmission belt 10922 may be a belt. Since belt transmission may suffer from fatigue defects such as slipping and loosening after long-term use, in some embodiments, the translation transmission belt 10922 may adopt a toothed synchronous belt (or a chain belt). Correspondingly, the translation driving wheel 10923 and the translation driven wheel 10921 are also toothed pulleys (or sprockets). By meshing of internal teeth of the chain belt with teeth on the toothed pulleys, efficient power transmission is provided, synchronization is improved, a return difference is reduced, and a high torque transmission capability is supported, thus improving a carrying capacity of the translation assembly 109.

As a detailed example of embodiments of the disclosure, referring to FIG. 29, in embodiments of the disclosure, a driving block 1093 is provided on the translation transmission belt 10922. The driving block 1093 is fixedly connected to the translation transmission belt 10922, thus moving synchronously with the translation transmission belt 10922 when the translation transmission belt 10922 moves. In embodiments of the disclosure, the support base 105 may be specifically fixedly connected to the driving block 1093.

Specifically, referring to FIG. 29, the driving block 1093 may be specifically fixed to the translation transmission belt 10922 by connecting components such as a bolt, a screw, and a threaded rod. In a detailed arrangement, a mounting groove may be provided on a side of the driving block 1093 facing the translation transmission belt 10922, and the translation transmission belt 10922 may be specifically embedded into the mounting groove. Then, connecting the components such as the bolt, the screw, and the threaded rod sequentially pass through the driving block 1093 and the synchronous belt for fixation.

In embodiments of the disclosure, by fixedly connecting the driving block 1093 on the translation transmission belt 10922 and fixedly providing the support base 105 on the driving block 1093, it is convenient to install and fix the support base 105 to the translation transmission belt 10922.

In other alternative examples of embodiments of the disclosure, referring to FIG. 26, two ends of the translation transmission member 1092 respectively extend out to an outside of the support base 105, to enable the translation driving member 1091 to be provided outside the base 11. For example, a distance between the translation driving wheel 10923 and the translation driven wheel 10921 is greater than or equal to a width of the support base 105 along the second direction.

Specifically, referring to FIG. 26, in embodiments of the disclosure, the translation driving wheel 10923 and the translation driven wheel 10921 may be specifically located on two sides of the support base 105 along the second direction. In this way, it is convenient to connect the translation driving wheel 10923 and the driving motor 10911, and convenient to provide the driving motor 10911, thus effectively avoiding an influence of the driving motor 10911 on movement of the support base 105 along the second direction.

In another alternative example of embodiments of the disclosure, referring to FIG. 29, the pick-and-place mechanism further includes a translation guide rail 200 and a translation slider 300. The translation guide rail 200 is provided on the base 11, and an extension direction of the translation guide rail 200 is the same as or consistent with an extension direction of the translation transmission belt 10922. For example, the translation guide rail 200 may extend along the second direction. In embodiments of the disclosure, the translation slider 300 may be provided on the support base 105. Specifically, the translation slider 300 is provided on a side of the support base 105 facing the base 11. The translation slider 300 is slidably connected to the translation guide rail 200.

In other alternative examples of embodiments of the disclosure, the translation guide rail 200 may also be provided on the support base 105, and correspondingly, the translation slider 300 may be provided on the base 11, with the translation guide rail 200 slidably connected to the translation slider 300.

In embodiments of the disclosure, the translation guide rail 200 is provided on one of the base 11 or the support base 105, the translation slider 300 is provided on the other one of the base 11 or the support base 105, and the translation guide rail 200 is slidably connected to the translation slider 300. In this way, when the support base 105 is translated by the translation assembly 109, the support base 105 moves along a direction of the translation guide rail 200 by guidance of the translation guide rail 200 and the translation slider 300. In this way, accuracy of a moving direction of the support base 105 during ensuring movement. In addition, cooperation between the translation guide rail 200 and the translation slider 300 may play a certain role in limiting and supporting movement of the support base 105, thus improving stability of translation of the support base 105.

Referring to FIG. 29 continuously, in an alternative example of embodiments of the disclosure, at least two translation guide rails 200 are provided, and one translation slider 300 is slidably provided on each translation guide rails 200.

Specifically, referring to FIG. 29, in embodiments of the disclosure, the two translation guide rails 200 are located on two sides of the translation assembly 109 along the first direction. That is, in the first direction, one translation guide rail 200 is provided on one side of the translation assembly 109, and the other translation guide rail 200 is provided on the other side of the translation assembly 109. It may be understood that, in embodiments of the disclosure, the two translation guide rails 200 may be specifically arranged parallel or approximately parallel to each other.

In some specific examples of embodiments of the disclosure, referring to FIG. 29, in embodiments of the disclosure, there may be three or four translation guide rails 200. Thus, by supporting the support base 105 through the plurality of translation guide rails 200 and translation sliders 300 and driving the support base 105 to move, stability of translation of the support base 105 is effectively improved, and a situation where the pick-and-place assembly 13 shakes and the pick-and-place assembly 13 shakes during avoiding translation. That is, accuracy of the position of the pick-and-place assembly 13 after translation of the pick-and-place assembly 13 is improved, facilitating accurate picking or returning of the target object 4 by the pick-and-place assembly 13.

In other alternative examples of embodiments of the disclosure, referring to FIG. 26 and FIG. 29, a rotation driving member 6 of a rotation mechanism is also provided on the base 11, and the rotation driving member 6 is fixedly connected to the base 11. In a detailed arrangement, an output end of the rotation driving member 6 may be meshed with a gear on a rotating shaft provided at a bottom of the base 11 through a gear. In this way, the rotation driving member 6, such as a rotating motor, may drive the base 11 to rotate by power transmission between the gear at the output end and the rotating shaft, thus driving the translation assembly 109, the support base 105, and the pick-and-place assembly 13 provided on the base 11 to rotate. Thus, picking or returning of the target object 4 in some warehousing spaces with relatively narrow shelf aisles may be adapted, improving application scenarios of a transfer robot, and improving efficiency of picking or returning the target object 4 in narrow-aisle shelves.

In embodiments of the disclosure, there may be a plurality of arrangements of the pick-and-place assembly 13.

In some examples, the pick-and-place mechanism 1 may include the telescoping structure 14, and the telescoping structure 14 is provided on the support base 105. That is, the telescoping structure 14 is movably provided on the base 11 by the support base 105. The pick-and-place assembly 13 is provided at the free end of the telescoping structure 14. The driving mechanism 10 drives the telescoping structure 14 to telescope, to enable the free end of the telescoping structure 14 to drive the pick-and-place assembly 13 to extend out of or retract back into the base 11.

For example, the telescoping structure 14 may be provided on the support base 105. For example, one end of the telescoping structure 14, such as a fixed end, is connected to a fixing portion of the support base 105 (oppositely provided to the pick-and-place assembly 13), and the other end may be the free end. The free end of the telescoping structure 14 may selectively extend out of or retract back into the support base 105.

Referring to FIG. 28, in another example, the pick-and-place mechanism 1 may include the telescoping structure 14 and a movable base 12.

As one example, the driving mechanism 10 may simultaneously drive the movable base 12 and the telescoping structure 14 to move, to drive the pick-and-place assembly 13 to extend out of or retract back into the support base 105.

Referring to FIG. 27 and FIG. 28, for example, the driving mechanism 10 may include a driving assembly 101a and a transmission assembly 102a. The driving assembly 101a is connected to one of the movable bases 12 or the telescoping structure 14, and the transmission assembly 102a is connected to the other one of the movable bases 12 or the telescoping structure 14, and the transmission assembly 102a is connected to the driving assembly 101a, to move under driving of the driving assembly 101a.

As another example, the driving mechanism 10 may include a first driving structure 11 and a second driving structure 15. The first driving structure 11 is connected to the movable base 12, and the first driving structure 11 is configured to drive the movable base 12 to move (e.g., along a direction illustrated by an x-axis in FIG. 3), thus enabling the movable base 12 to drive the pick-and-place assembly 13 to move along a first direction.

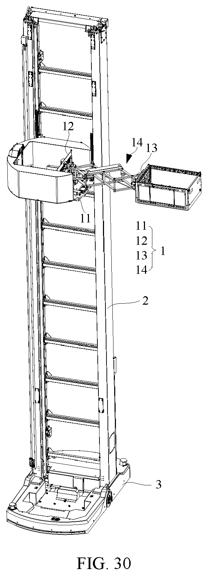

FIG. 30 is a schematic diagram illustrating a structure of a transfer robot according to an embodiment of the disclosure. Referring to FIG. 30, embodiments of the disclosure also provides a transfer robot. The transfer robot includes a chassis 3, a gantry 2, and the pick-and-place mechanism 1 provided in any implementation of the above embodiments of the disclosure. The gantry 2 is provided on the chassis 3, and the pick-and-place mechanism 1 is provided on the gantry 2.

Specifically, in embodiments of the disclosure, the chassis 3 may be the same as or similar to a chassis in the related art. In addition, embodiments of the disclosure have the same or corresponding technical features as the above embodiments, and thus has the same or similar technical effects as the above embodiments of the disclosure. For details, reference may be made to the detailed description in the above embodiments of the disclosure, which is not described in detail in embodiments of the disclosure.

In embodiments of the disclosure, the gantry 2 may be fixedly provided on the chassis 3 and move under driving of the chassis 3. A connection manner between the gantry 2 and the chassis 3 may be the same as or similar to a manner in the related art, which is not described in detail in embodiments of the disclosure.

In addition, it may be understood that, in embodiments of the disclosure, a communication module may be provided on the chassis 3 or the gantry 2. The communication module may communicate with a host computer and receive a control signal sent by the host computer. In addition, the communication module may also upload position information of the transfer robot to the host computer. The host computer controls the transfer robot to move within a warehousing system based on a transfer task, for example, arrive at a specified position of a target carrier, to facilitate the transfer robot docking with a target storage position on the target carrier, thus achieving a picking or returning process.

The pick-and-place mechanism 1 is provided on the gantry 2 and may move up and down along the gantry 2. For example, after the transfer robot moves to the target carrier, the pick-and-place mechanism 1 moves up and down along the gantry 2, thus arriving at a storage position height where a corresponding target object is located.

In some examples, the transfer robot also includes: a temporary storage plate (not illustrated in the figures) and a rotation mechanism (not illustrated in the figures).

The temporary storage plate is provided on the gantry 2, and the rotation mechanism is connected to the pick-and-place mechanism 1. The rotation mechanism is configured to drive the pick-and-place mechanism 1 to rotate, to enable the pick-and-place mechanism 1 to store the target object on the temporary storage plate, or to pick the target object from the temporary storage plate by the pick-and-place mechanism 1. The temporary storage plate forms the above-mentioned temporary storage position. The temporary storage position may be one type of target storage position, i.e., the pick-and-place assembly 13 may be driven by the first driving structure 16 and/or the second driving structure 15 to move along the first direction, to extend into the temporary storage position.

It may be understood that a direction in which the pick-and-place assembly 13 moves toward the storage position of the target carrier may be perpendicular to a direction in which the pick-and-place assembly 13 moves toward the temporary storage position. That is, the moving direction of the pick-and-place assembly 13 when the target storage position is the temporary storage position may be perpendicular to the moving direction of the pick-and-place assembly 13 when the target storage position is a storage position on the target carrier.

It may be understood that the pick-and-place mechanism 1 may be located on one side of the gantry 2, and the temporary storage plate may be provided on the other side of the gantry 2. In some examples, a plurality of temporary storage plates may be provided along a height direction of the gantry 2. Alternatively, in some understandings, it may also be understood that the temporary storage plate is provided in a plurality of layers along the height direction of the gantry 2. In this way, the transfer robot may transfer a plurality of target objects at a time, improving the efficiency of transferring the target objects.

In some examples, a driving structure on the gantry 2 may be connected to a lifting plate, the lifting plate is raised and lowered under driving of the driving mechanism, the rotation mechanism is provided on the lifting plate, the rotation mechanism is connected to the base 11 of the pick-and-place mechanism 1, and the base 11 may rotate relative to the lifting plate, thus driving the pick-and-place mechanism 1 to rotate.

With the rapid development of e-commerce, e-commerce plays an increasingly important role in lives of consumers. To facilitate storage and transfer of goods, the goods are usually stored and transferred in a warehousing system.

When transferring a container or a target object on a shelf, to improve the transfer efficiency and reduce the work intensity, a transfer robot is usually employed to pick or return the container or the target object on the shelf. The transfer robot is an important equipment in warehousing. The transfer robot may automatically place the target object (e.g., a container) onto the target carrier (e.g., the shelf) to complete a loading process (e.g., a container returning process), and may also pick the target object from the target carrier (e.g., a container picking process) and then transfer the target object to a specific location.

Embodiments of the disclosure also provide a method for transferring an object. The method is applied to the pick-and-place mechanism 1 provided in any alternative example of the above embodiments of the disclosure.

The method for transferring an object includes the following.

At step s1, in a case that the pick-and-place mechanism 1 is located at a specified position of a target carrier, a controller 115 determines a work distance between a pick-and-place assembly 13 and a target storage position.

In some examples, the pick-and-place mechanism 1 may be provided on a chassis of a transfer robot. After a transfer instruction or specified position information issued by a host computer is received, the transfer robot may move along a path identifier provided on a ground in a warehousing system to the specified position of the target carrier.

In this case, determining the work distance between the pick-and-place assembly 13 and the target storage position by the controller 115 may include the following.

A first distance between a front end of a base 11 and a front end of the target carrier is obtained. Generally, after the transfer robot moves to a target position, since the transfer robot moves along the identified path on the ground, the first distance between the front end of the base 11 and the front end of the target carrier is usually a fixed value. In some examples, the first distance may be set based on an actual requirement of stored objects;

The controller 115 determines an initial position of the pick-and-place assembly 13 based on a first trigger signal of a first sensor 117, and/or, a zero signal of a motor encoder of a first driving structure 16 and a zero signal of a motor encoder of a second driving structure 15, in which there is a second distance between the initial position and the front end of the base 11.

The controller 115 obtains a third distance between the target storage position and the front end of the base 11. In embodiments of the disclosure, a manner of determining the second distance and the third distance may refer to the detailed description in the above embodiments of the disclosure, which is not described in detail in embodiments of the disclosure.

The work distance is determined based on the first distance, the second distance, and the third distance. It may be understood that the work distance may be a moving distance of the pick-and-place assembly 13 from the initial position to the target storage position. In some examples, the work distance may be a sum of the first distance, the second distance, and the third distance.

In some examples, before step s1, i.e., determining the work distance between the pick-and-place assembly 13 and the target storage position in the case that the pick-and-place mechanism 1 is located at the specified position of the target carrier, the method for transferring an object further includes the following.

At step s10, a size of the target object 4 is determined, and a size of a follow-up pallet 19 for bearing the target object 4 is adjusted.

In embodiments of the disclosure, the size of the target object 4 refers to a width of the target object 4 along a second direction, referring to FIG. 20.

In some examples, a worker may manually adjust the bearing size of the follow-up pallet 19 based on a size of a target object 4 hit by an order, to adjust the bearing size of the follow-up pallet 19 to be greater than or equal to the width of the target object 4, thus ensuring that the follow-up pallet 19 stably bears the target object 4.

In another example, to achieve automatic control of the entire picking and returning process, the width of the target object 4 may be measured by a ranging sensor or a depth camera, and the width information may be fed back to the controller, and the controller controls a width adjustment assembly 104 based on the width information, to adjust the bearing size of the follow-up pallet 19 to be greater than or equal to the width of the target object 4.

In another example, the width information of the target object 4 may also be manually input into the controller, and the controller then controls the width adjustment assembly 104 based on the width information, to adjust the bearing size of the follow-up pallet 19 to be greater than or equal to the width of the target object 4.

In some examples, before step s1, i.e., determining the work distance between the pick-and-place assembly 13 and the target storage position in the case that the pick-and-place mechanism 1 is located at the specified position of the target carrier, the method for transferring an object also includes the following.

At step s01: an offset distance between the pick-and-place assembly 13 and the target storage position is determined based on a recognition state of a two-dimensional code camera 116 on a two-dimensional code of the target storage position; and/or, the controller 115 is configured to determine the offset distance based on an image of the target storage position captured by a depth camera 11a.

At step s02, a position of the pick-and-place assembly 13 is adjusted based on the offset distance, to enable the offset distance between the pick-and-place assembly 13 and the target storage position being within a preset distance range, to determine that the pick-and-place mechanism 1 is at a specified position of the target carrier.

In this way, the pick-and-place assembly 13 may be directly opposite to the target storage position, or the offset distance between the pick-and-place assembly 13 and the target storage position may be within the preset distance range, facilitating the pick-and-place assembly 13 to apply force to the target object on the target storage position, or facilitating the pick-and-place assembly 13 to accurately place the target object onto the target storage position.

For example, the controller may determine an offset distance (i.e., a horizontal offset distance) based on the image of the target storage position captured by the depth camera. It may be understood that the offset distance refers to a deviation between the pick-and-place assembly 13 and the target storage position in a second direction.

In another example, the controller may also determine an offset distance (i.e., a vertical offset distance) between the pick-and-place assembly 13 and the target storage position based on a recognition state of the two-dimensional code camera on the two-dimensional code of the target storage position. It may be understood that the vertical offset distance refers to a deviation between the pick-and-place assembly 13 and the target storage position in a height direction.

For example, the controller may control the chassis 2 to move along the second direction based on the horizontal offset distance, to enable the pick-and-place assembly 13 to move the horizontal offset distance along the second direction, and to enable a deviation between the pick-and-place assembly 13 and the target storage position in the second direction to be controlled within an allowable range.

For another example, the controller may control a translation assembly 109 to work based on the offset distance, e.g., the horizontal offset distance, to enable the translation assembly 109 to drive the pick-and-place assembly 13, e.g., a support base 105, to move the horizontal offset distance along the second direction, and to enable a deviation between the pick-and-place assembly 13 and the target storage position in the second direction to be controlled within the allowable range. The translation assembly 109 may also drive the pick-and-place assembly 13, e.g., the support base 105 based on the horizontal offset distance, to move the horizontal offset distance along the second direction, to enable that the pick-and-place assembly 13 is aligned with the target storage position, thus ensuring that the pick-and-place assembly 13 may accurately arrive at the target storage position when the pick-and-place assembly 13 picks or returns the target object 4 and perform transfer and docking of the target object 4.

In addition, the controller may also control a lifting device on the gantry 2 to drive the picking mechanism 1 to move up and down along the gantry 2 based on the vertical offset distance determined, to decrease a deviation between the pick-and-place assembly 13 and the target storage position in the height direction until the deviation between the pick-and-place assembly 13 and the target storage position in the height direction is within an allowable deviation range. For example, the pick-and-place assembly 13 may be directly moved up or down to align with the target storage position.

At step s2, a first driving structure 16 and/or a second driving structure 15 drives the pick-and-place assembly 13 to move the work distance toward the target storage position along a first direction, to arrive at the target storage position.

In some examples, the method for transferring an object may also include: obtaining a moving distance of the pick-and-place assembly 13 toward the target storage position, in which in a case that the moving distance is equal to the work distance, the pick-and-place assembly 13 arrives at the target storage position.

For example, the controller may obtain the moving distance of the pick-and-place assembly 13 toward the target storage position, and the pick-and-place assembly 13 arrives at the target storage position in a case that the moving distance is equal to the work distance. For example, during the driving mechanism 10 driving the pick-and-place assembly 13 to move toward the target storage position along the first direction, the detection structure may detect the moving distance of the pick-and-place assembly 13 toward the target storage position in real time. When the controller obtains that the moving distance detected by the detection structure is equal to the work distance, it indicates that the pick-and-place assembly 13 arrives at the target storage position, and the controller controls the driving mechanism 10 to stop operating, thus stopping the pick-and-place assembly 13 from moving forward. For example, during the first driving structure 16 and/or the second driving structure 15 driving the pick-and-place assembly 13 to move toward the target storage position along the first direction, the detection structure may detect the moving distance of the pick-and-place assembly 13 toward the target storage position in real time. When the controller obtains that the moving distance detected by the detection structure is equal to the work distance, it indicates that the pick-and-place assembly 13 arrives at the target storage position, and the controller controls the first driving structure 16 and/or the second driving structure 15 to stop operating. That is, in embodiments of the disclosure, the first driving structure 16 may operate to drive the pick-and-place assembly 13, or the second driving structure 15 may operate to drive the pick-and-place assembly 13. In another example, both the first driving structure 16 and the second driving structure 15 may operate. For details, reference may be made to the detailed description in the above embodiments of the disclosure.

It may be understood that, in some examples, the target storage position may be located at a deep inner position of the target carrier. In this case, the second driving structure 15 may first drive the telescoping structure 14 to extend out. For example, the controller 115 may first control the second driving structure 15 to operate, to enable that the second end 142 of the telescoping structure 14 moves toward the target storage position along the first direction, to decrease a width of the telescoping structure 14, for example, along a third direction.

After the telescoping structure 14 drives the pick-and-place assembly 13 to move a preset distance, the first driving structure 16 then drives the movable base 12 to move. For example, the controller 115 controls the first driving structure 16 to work, to enable that the movable base 12 drives the telescoping structure 14 to move toward the target storage position until a moving distance of the pick-and-place assembly 13 reaches the work distance.

In this way, in a case that a width dimension of the target object is relatively small, i.e., an interval between adjacent objects on two sides of the target storage position is relatively narrow, the telescoping structure 14 may first be moved a first preset distance, to enable the width of the telescoping structure 14 along the third direction to be lower than or equal to the width of the target storage position, ensuring that the telescoping structure 14 may drive the pick-and-place assembly 13 to extend into the target carrier, and then the movable base 12 is moved, which may decrease a dimensional pace occupied by the telescoping structure 14 in the width direction of the target object, and ensure accuracy of positions of objects adjacent to the two sides of the target storage position.

For example, after the telescoping structure 14 drives the pick-and-place assembly 13 to extend into the target carrier, the first driving structure 16 then drives the movable base 12 to move forward until the pick-and-place assembly 13 arrives at the target storage position, to perform object docking with the target storage position.

In some examples, there may be a plurality of execution orders between the action of the driving mechanism 10 driving the pick-and-place assembly 13 to move toward the target storage position and the action of the translation assembly 109 driving the pick-and-place assembly 13 to move relative to the target storage position.

As one example, the translation assembly 109 may first drive the pick-and-place assembly 13 to move the offset distance relative to the target storage position, to enable that the pick-and-place assembly 13 arrives at a specified position, and then the driving mechanism 10 drives the pick-and-place assembly 13 to move toward the target storage position. That is, before the driving mechanism 10 drives the pick-and-place assembly 13 to move toward the target storage position, the translation assembly 109 may drive the pick-and-place assembly 13 to arrive at the specified position of the target carrier 5, i.e., moving the pick-and-place assembly 13 to enable the offset distance from the target storage position in the second direction to be within an allowable deviation range. Thus, the driving mechanism 10 may drive the pick-and-place assembly 13 to move along the first direction until the pick-and-place assembly 13 arrives at the target storage position, without needing to repeatedly switch a working mode of the pick-and-place assembly 13, thus improving the work efficiency.

As another example, after the controller determines the offset distance of the pick-and-place assembly 13 relative to the target storage position based on the depth camera, the controller may first control the driving mechanism 10 to work, to enable the pick-and-place assembly 13 to be at least located outside the target carrier 5 when the pick-and-place assembly 13 is driven to move a preset distance toward the target storage position. For example, the driving mechanism 10 may first drive the pick-and-place assembly 13 to arrive at the front end face of the target carrier 5. For example, there may be a certain gap between the pick-and-place assembly 13 and the front end face of the target carrier 5, to ensure that the pick-and-place assembly 13 may move along the second direction.

Next, the translation assembly 109 drives the pick-and-place assembly 13 to arrive at the specified position.

After the driving mechanism 10 drives the pick-and-place assembly 13 to move the preset distance along the first direction, the controller may control the translation assembly 109 to work, to enable that the translation assembly 109 drives the pick-and-place assembly 13 to move along the second direction, thus enabling the pick-and-place assembly 13 to arrive at the specified position. For example, when the pick-and-place assembly 13 moves along the first direction to the front end face of the target carrier 5, the pick-and-place assembly 13 may be controlled to translate along the second direction to the specified position. In this way, it may be avoided that the pick-and-place assembly 13 collides with the target carrier 5 when the pick-and-place assembly 13 is tilted, or interferes with containers on other storage positions after the pick-and-place assembly 13 enters the target carrier 5.

Finally, the driving mechanism 10 drives the pick-and-place assembly 13 to move toward the target storage position until the pick-and-place assembly 13 arrives at the target storage position.

For example, after the translation assembly 109 drives the pick-and-place assembly 13 to translate along the second direction to the specified position, the driving mechanism 10 then controls the pick-and-place assembly 13 to move along the first direction until the pick-and-place assembly 13 arrives at the target storage position, to dock with the target object 4 on the target storage position, or to return the target object 4 on the pick-and-place assembly 13 to the target storage position.

For another example, while the translation assembly 109 drives the pick-and-place assembly 13 to translate along the second direction, the driving mechanism 10 drives the pick-and-place assembly 13 to move toward the target storage position. Until when the pick-and-place assembly 13 arrives at the target storage position, the pick-and-place assembly 13 translates to the specified position. Of course, by controlling a translation velocity of the translation assembly 109, the pick-and-place assembly 13 may have already translated to the specified position before the pick-and-place assembly 13 arrives at the target storage position.

Based on the above, it may be seen that an execution order of the translation assembly 109 and the driving mechanism 10 is not limited in embodiments of the disclosure, which ensures that the pick-and-place assembly 13 is translated to have an offset distance with the target storage position within an allowable range before the transfer of the target object 4 between the pick-and-place assembly 13 and the target storage position.

At step s3, the target object is transferred between the pick-and-place assembly 13 and the target storage position.

In this case, transferring the target object may be that the pick-and-place assembly 13 applies a force to the target object on the target storage position, i.e., picking the target object from the target storage position (for example, a vacuum pump may be controlled to evacuate the suction cup 132). In some examples, the pick-and-place assembly 13 may release a force on the target object, i.e., the pick-and-place assembly 13 places the target object onto the target storage position.

In another example of embodiments of the disclosure, the method for transferring an object may further include the following.

At step s4, the first driving structure 16 and/or the second driving structure 15 drives the pick-and-place assembly 13, for example, to move the work distance away from the target storage position along the first direction, to arrive at an initial position.

For example, when the controller is capable of obtaining detection information from the detection structure, and the controller may control the first driving structure 16 and/or the second driving structure 15 to stop working when the moving distance of the pick-and-place assembly 13 toward the target storage position detected by the detection structure is equal to zero, to enable the pick-and-place assembly 13 to stop retracting, and the pick-and-place assembly 13 is at the initial position of the base 11.

In some examples, the first driving structure 16 first drives the movable base 12 to move backward. For example, the controller 115 may first control the first driving structure 16 to work, to enable the movable base 12 to drive the telescoping structure 14 to move away from the target storage position until the telescoping structure 14 exits the target carrier.

Then, the second driving structure 15 drives the telescoping structure 14 to retract. For example, the controller 115 may control the second driving structure 15 to work, to enable the second end 142 of the telescoping structure 14 to move away from the target storage position along the first direction until the pick-and-place assembly 13 arrives at the initial position.

It may be understood that, generally, the pick-and-place mechanism 1 has a picking work state. In the picking work state, in embodiments of the disclosure, before step s2, i.e., the first driving structure 16 and/or the second driving structure 15 drives the pick-and-place assembly 13 to move the work distance toward the target storage position along the first direction to arrive at the target storage position, the method for transferring an object also includes the following.

At step s02, it is determined that there is the target object on the target storage position based on a third trigger signal of a third sensor 119.

That is, in embodiments of the disclosure, before driving the pick-and-place assembly 13 to move, it may first be determined whether there is the target object on the target storage position by determining whether the third sensor 119 issues the third trigger signal. In a case that there is the target object on the target storage position, the pick-and-place assembly 13 is driven to move. In a case that there is no target object on the target storage position, a possible reason is that the position information issued by the host computer is incorrect, or the target object on the target storage position is lost, or a position of the target object is moved. In this case, the controller 115 may issue an alarm prompt message to the host computer, to enable timely processing.

In another example of embodiments of the disclosure, in the picking work state, step s2, the first driving structure 16 and/or the second driving structure 15 drives the pick-and-place assembly 13, for example, to move the work distance toward the target storage position along the first direction to arrive at the target storage position, includes the following.

At step s21, a driving velocity of the first driving structure 16 and/or the second driving structure 15 is decreased based on a fourth trigger signal of a fourth sensor 135, to enable the pick-and-place assembly 13 to approach the target object at a first preset velocity when a distance between the pick-and-place assembly 13 and the target object is lower than or equal to a fifth preset distance. The first preset velocity is lower than a second preset velocity, and the second preset velocity is a moving velocity of the pick-and-place assembly 13 when the distance between the pick-and-place assembly 13 and the target object is greater than the fifth preset distance.

For example, a rotation velocity of the first driving member 161 may be decreased, or a rotation velocity of the second driving member 151 may be decreased. Alternatively, in another example, rotation velocities of both the first driving member 161 and the second driving member 151 may be decreased.

In this way, the pick-and-place assembly 13 may contact the target object at a relatively low velocity, which may decrease an impact force of the pick-and-place assembly 13 on the target object, effectively protecting the target object.

It may be understood that, in another example, the pick-and-place mechanism 1 also has a returning work state. In embodiments of the disclosure, in the returning work state, step s2: the first driving structure 16 and/or the second driving structure 15 drives the pick-and-place assembly 13, for example, to move the work distance toward the target storage position along the first direction to arrive at the target storage position, includes the following.

At step s22, the first driving structure 16 and/or the second driving structure 15 drives the pick-and-place assembly 13, for example, to move the work distance toward the target storage position along the first direction, to enable that the target object arrives at the target storage position. The pick-and-place assembly 13 carries the target object.

In embodiments of the disclosure, the returning work state of the pick-and-place mechanism 1 is basically similar to the picking work state. A difference is that the pick-and-place assembly 13 carries the target object in the returning work state.

In addition, it may be understood that, in some examples, in the returning work state, before step s2, it may be determined whether there is the target object on the target storage position by the third trigger signal of the third sensor 119. In this case, the controller 115 issues an alarm prompt message to the host computer in a case that the third sensor 119 issues the third trigger signal.

In another example of embodiments of the disclosure, in the picking work state, the first driving structure 16 and/or the second driving structure 15 drives the pick-and-place assembly 13, for example, to move away from the target storage position along the first direction, includes:
determining, based on a fourth trigger signal of the fourth sensor 135, and/or, that there is the target object on the pick-and-place assembly 13 in a case that a vacuum degree in an inner cavity of a suction cup 132 is a preset vacuum degree.

When a distance between the pick-and-place assembly 13, such as the suction cup 132, and the target object are within a sixth preset distance L (e.g., within 50 mm), the fourth sensor 135 may issue the fourth trigger signal to the controller 115. Conversely, if the controller 115 does not receive the fourth trigger signal, it indicates that the distance between the suction cup 132 and the target object is greater than the sixth preset distance. Thus, in a retraction process where the suction cup 132 picks the target object from the target storage position and moves away from the target storage position (i.e., toward the base 11), when the controller 115 receives the fourth trigger signal, it indicates that there is the target object in the suction cup 132. When the controller 115 does not receive the fourth trigger signal, it indicates that the suction cup 132 and the target object are separated.

In addition, the vacuum pressure gauge may monitor the vacuum degree in the inner cavity of the suction cup 132 and in a vacuum tube in communication with the inner cavity in real time. When there is the suction cup 132 has the target object adsorbed, a value on the vacuum pressure gauge is a preset vacuum degree. That is, in the preset vacuum degree, the suction cup 132 has the target object adsorbed. When the target object detaches from the suction cup 132, the vacuum degree is broken, and the value on the vacuum pressure gauge becomes lower than the preset vacuum degree. Thus, in a retraction process where the suction cup 132 picks the target object from the target storage position and moves away from the target storage position (i.e., toward the base 11), when the vacuum degree on the vacuum pressure gauge (i.e., the vacuum degree in the inner cavity of the suction cup 132) is lower than the preset vacuum degree, it indicates that the suction cup 132 is separated from the target object.

It may be understood that, in some examples, it may be determined that there is the target object on the pick-and-place assembly 13 based on the fourth trigger signal of the fourth sensor 135, or based on the vacuum degree in the inner cavity of the suction cup 132 being the preset vacuum degree.

To improve accuracy of determining whether the suction cup 132 and the target object are separated, in another example, it may also be determined that there is the target object on the pick-and-place assembly 13 based on both the fourth trigger signal of the fourth sensor 135 and the vacuum degree in the inner cavity of the suction cup 132 being the preset vacuum degree. That is, a determination based on dual conditions makes the determination result more accurate. In addition, it also avoids a situation where a failure of any one of the fourth sensor 135 or the vacuum pressure gauge affects smooth progress of the determination process or accuracy of the determination result.

In a case that there is the target object in the pick-and-place assembly 13, the first driving structure 16 and/or the second driving structure 15 drives the pick-and-place assembly 13 to move away from the target storage position along the first direction.

It may be understood that, in a retraction process of the pick-and-place assembly 13, the pick-and-place assembly 13 may detach from the target object due to reasons such as insufficient force. When the target object detaches from the pick-and-place assembly 13, if the pick-and-place assembly 13 continues to retract under driving of the movable base 12 or the telescoping structure 14, the transfer robot moves to a next process position, such as a picking station, without carrying the target object, affecting the smooth progress of the entire picking operation and causing the resource waste.

For example, in the retraction process of the pick-and-place assembly 13, the fourth sensor 135 may issue the fourth trigger signal to the controller 115 when there is the target object on the pick-and-place assembly 13. Based on the fourth trigger signal, the controller 115 determines that there is the target object in the pick-and-place assembly 13; and/or, the controller 115 determines that there is the target object in the pick-and-place assembly 13 when the controller 115 determines that the vacuum degree in the inner cavity of the suction cup 132 is the preset vacuum degree. Subsequently, the controller 115 controls the first driving structure 16 and/or the second driving structure 15 to work (i.e., reverse drive work), to enable the pick-and-place assembly 13 to move in a negative direction of the x-direction (i.e., away from the target storage position) under driving of the telescoping structure 14 and/or the movable base 12.

When the controller 115 does not receive the fourth trigger signal, and/or the controller 115 determines that the vacuum degree in the inner cavity of the suction cup 132 is lower than the preset vacuum degree, the controller 115 indicates that there is no the target object on the pick-and-place assembly 13. Then, the controller 115 may control the first driving structure 16 and/or the second driving structure 15 to stop reverse drive work, to enable the pick-and-place assembly 13 to stop moving toward the base 11. The controller 115 receives the fourth trigger signal when the pick-and-place assembly 13 picks the target object again, and then continues to control the first driving structure 16 and/or the second driving structure 15 to perform reverse drive work, to enable the pick-and-place assembly 13 to continue to move toward the initial position.

For example, in a case that the pick-and-place assembly 13 includes the suction cup 132, when the controller 115 does not receive the fourth trigger signal, the controller 115 controls the first driving structure 16 and/or the second driving structure 15 to stop reverse drive work, and controls the first driving structure 16 and/or the second driving structure 15 to perform forward drive work, to enable the pick-and-place assembly 13 to move forward in the positive direction of the x-direction, and controls the inner cavity of the suction cup 132 to be in a vacuum state to adsorb the target object again. The fourth sensor 135 again issues the fourth trigger signal to the controller 115 when the target object is adsorbed on the suction cup 132. The controller 115 controls the first driving structure 16 and/or the second driving structure 15 to work (i.e., reverse drive work) based on the fourth trigger signal, to enable the pick-and-place assembly 13 to continue to retract until the pick-and-place assembly 13 retracts to the initial position.

The above detailed implementation manners further describe the objectives, technical solutions, and beneficial effects of the embodiments of the disclosure in detail. It should be understood that the above are only detailed implementation manners of the embodiments of the disclosure and are not intended to limit the protection scope of the embodiments of the disclosure. Any modifications, equivalent substitutions, improvements, etc., made on the basis of the technical solutions of the embodiments of the disclosure shall be included within the protection scope of the embodiments of the disclosure.

## Claims

1. A pick-and-place mechanism, comprising:
a base (11);
a movable base (12), movably provided on the base (11) and capable of moving relative to the base (11);
a telescoping structure (14), provided with a first end (141) and a second end (142), wherein the first end (141) is provided on the movable base (12), and the second end (142) is capable of moving toward or away from the first end (141) in a telescoping manner;
a pick-and-place assembly (13), provided at the second end (142) and configured to act on a front end face of a target object when picking or placing the target object, to transfer the target object, wherein the front end face of the target object is an end face of the target object that faces the pick-and-place assembly (13) when the target object is to be picked or returned;
a first driving structure (16), connected to the movable base (12) and configured to drive the movable base (12) to move relative to the base (11), to enable the pick-and-place assembly (13) driven by the movable base (12) to move relative to the base (11); and
a second driving structure (15), connected to the telescoping structure (14), wherein the second driving structure (15) is configured to drive the second end (142) to move toward or away from the first end (141), to enable the pick-and-place assembly (13) driven by the second end (142) to move relative to the first end (141),
wherein, when the target object is picked or returned, the pick-and-place assembly (13) is configured to move relative to the base (11) under driving of the first driving structure (16) and/or the second driving structure (15), to perform a reciprocating motion between a target storage position and the base (11).

2. The pick-and-place mechanism of claim 1, wherein the pick-and-place mechanism (1) is configured to, when picking or returning the target object, perform one of the following actions that:
the first driving structure (16) drives the movable base (12) to move, to drive the pick-and-place assembly (13) to move a first preset distance toward the target storage position, and then the second driving structure (15) drives the telescoping structure (14) to extend, to drive the pick-and-place assembly (13) to move a second preset distance toward the target storage position, to enable that the pick-and-place assembly (13) arrives at the target storage position and transfers the target object between the pick-and-place assembly (13) and the target storage position;
the second driving structure (15) drives the telescoping structure (14) to extend, to drive the pick-and-place assembly (13) to move a third preset distance toward the target storage position, and then the first driving structure (16) drives the movable base (12) to move, to drive the pick-and-place assembly (13) to move a fourth preset distance toward the target storage position, to enable that the pick-and-place assembly (13) arrives at the target storage position and transfers the target object between the pick-and-place assembly (13) and the target storage position; or
the first driving structure (16) and the second driving structure (15) simultaneously drive the movable base (12) and the telescoping structure (14) to move, to drive the pick-and-place assembly (13) to move a work distance toward the target storage position, to enable that the pick-and-place assembly (13) arrives at the target storage position and transfers the target object between the pick-and-place assembly (13) and the target storage position.

3. The pick-and-place mechanism of claim 2, wherein when the target storage position is a deep inner position of a target carrier, the second driving structure (15) first drives the telescoping structure (14) to extend, to drive the pick-and-place assembly (13) to move toward the target storage position, to enable that a width of the telescoping structure (14) is decreased, and then the first driving structure (16) drives the movable base (12) to move, to drive the pick-and-place assembly (13) to move toward the target storage position until the pick-and-place assembly (13) arrives at the target storage position, and to transfer the target object between the pick-and-place assembly (13) and the target storage position; and
a width direction of the telescoping structure (14) intersects a telescoping direction of the telescoping structure (14).

4. The pick-and-place mechanism of claim 1, wherein
the second driving structure (15) comprises a second driving member (151) and a second transmission member, one end of the second driving member (151) is connected to the second transmission member to drive the second transmission member to move relative to the base (11), and the second transmission member is connected to the telescoping structure (14) to drive the second end (142) of the telescoping structure (14) to telescope;
wherein both the second driving member (151) and the second transmission member are provided on the movable base (12), to enable the second driving member (151) and the second transmission member to move synchronously with the movable base (12).

5. The pick-and-place mechanism of claim 4, wherein the movable base (12) comprises a first moving portion (124) and a second moving portion (125), the first moving portion (124) is provided opposite to the base (11), the second moving portion (125) is connected to the first moving portion (124) and provided opposite to the pick-and-place assembly (13), and the first end (141) of the telescoping structure (14) is provided on the second moving portion (125);
wherein the second driving member (151) is provided on the second moving portion (125), and the second transmission member is provided on the first moving portion (124).

6. The pick-and-place mechanism of claim 1, wherein the telescoping structure (14) comprises:
at least two cross member units (143), sequentially arranged along a telescopic direction, each of the at least two cross member units (143) comprising two cross members (1431) oppositely provided; wherein, in the at least two cross member units (143), a cross member (1431) in a cross member unit (143) located at the first end (141) is a first cross member, and a cross member (1431) in a cross member unit (143) located at the second end (142) is a second cross member, the first cross member is slidably connected to the movable base (12), and the second cross member is slidably connected to the pick-and-place assembly (13); and
the second driving structure (15) is connected to a hinge shaft (144) of the cross members (1431) in one of the at least two cross member units (143), to drive an included angle of the cross members (1431) facing the pick-and-place assembly (13) to increase or decrease, to enable that telescoping of the telescoping structure (14) is achieved.

7. The pick-and-place mechanism of claim 6, wherein the pick-and-place mechanism (1) further comprises a first limiting member (17), the first cross member is connected to the movable base (12) by the first limiting member (17), to limit translational movement of the first end (141) of the telescoping structure (14) on the movable base (12);
and/or, the pick-and-place mechanism (1) further comprises a second limiting member (18), the second cross member is connected to the pick-and-place assembly (13) by the second limiting member (18), to limit translational movement of the second end (142) of the telescoping structure (14) on the pick-and-place assembly (13).

8. The pick-and-place mechanism of claim 7, wherein one of the first limiting member (17) or the second limiting member (18) comprises two connecting rods (171);
ends of one side of the two connecting rods (171) are rotatably connected to two transmission rods (1431a) connected rotatably of the first cross member or the second cross member respectively, and ends of the other side of the two connecting rods (171) are rotatably connected to a fixed hinge position of the movable base (12) or the pick-and-place assembly (13), and the two connecting rods (171) are configured to move with the cross member unit (143);
and/or, the second limiting member (18) comprises two extension portions (181) provided oppositely, one end of each of the two extension portions (181) is connected to the pick-and-place assembly (13) or the movable base (12), and a limiting cavity (182) is formed between the two extension portions (181), the hinge shaft (144) between two second cross members or between two first cross members passes through the limiting cavity (182), and the hinge shaft (144) moves within the limiting cavity (182) when the second cross members or the first cross members move.

9. The pick-and-place mechanism of claim 6, wherein the pick-and-place mechanism (1) further comprises: a second slider (147) and a second guide rail (114);
the second slider (147) is provided at one end of the hinge shaft (144), the second guide rail (114) is provided on the base (11), and the second slider (147) is slidably provided on the second guide rail (114).

10. The pick-and-place mechanism of claim 1, wherein the first driving structure (16) comprises a first driving member (161) and a first transmission member, the first driving member (161) is provided on the base (11) and connected to the first transmission member, to drive the first transmission member to move, and the first transmission member is connected to the movable base (12), to drive the movable base (12) to move.

11. The pick-and-place mechanism of claim 1, wherein the pick-and-place mechanism (1) further comprises a first slider and a first guide rail (113);
the first slider is provided on the movable base (12), the first guide rail (113) is provided on the base (11), and the first slider is slidably provided on the first guide rail (113).

12. The pick-and-place mechanism of claim 1, wherein the pick-and-place mechanism (1) further comprises:
a follow-up pallet (19), movably provided on the base (11) to enable the follow-up pallet (19) capable of extending out of the base (11) or retracting back onto the base (11); and
the follow-up pallet (19) is configured to abut against a front end face of a target carrier when the pick-and-place assembly (13) picks or return the target object, to fill a gap between the base (11) and the target carrier; and the follow-up pallet (19) is further configured to support the target object when the pick-and-place assembly (13) carries the target object.

13. The pick-and-place mechanism of claim 12, wherein a force-applying member is provided on the telescoping structure (14) or the movable base (12), a force-receiving portion is provided on the follow-up pallet (19), and the force-applying member is capable of applying a force to the force-receiving portion at least during retraction of the pick-and-place assembly (13), to drive the follow-up pallet (19) to retract back on the base (11).

14. The pick-and-place mechanism of claim 12, wherein the pick-and-place mechanism (1) further comprises:
a third limiting member (110), provided on the base (11) and located at a front end of the follow-up pallet (19);
the third limiting member (110) has a first state and a second state, in the first state, at least part of the third limiting member (110) extends beyond a supporting face (192) of the follow-up pallet (19), and in the second state, the third limiting member (110) is lower than the supporting face (192) of the follow-up pallet (19); and
the third limiting member (110) is configured to be in the second state when at least part of the follow-up pallet (19) is extended out of the base (11), and to be in the first state when the follow-up pallet (19) is located within the base (11), to perform position limitation of the target object on the follow-up pallet (19) along a moving direction of the pick-and-place assembly (13) when the pick-and-place mechanism (1) moves.

15. The pick-and-place mechanism of claim 14, wherein the third limiting member (110) comprises a first portion (1101) and a second portion (1102) forming a certain angle, a connection portion of the first portion (1101) and the second portion (1102) is rotatably connected to the base (11), and the first portion (1101) is located at a bottom of the follow-up pallet (19); and
an abutting member (193) is provided at the front end of the follow-up pallet (19), the abutting member (193) is provided between the first portion (1101) and the second portion (1102), and the abutting member (193) is configured to, when the front end of the follow-up tray (19) extends out of the base (11), push the second portion (1102) to rotate the second portion (1102) to a position below the supporting face (192) of the follow-up pallet (19), to enable the third limiting member (110) in the second state, and when the front end of the follow-up pallet (19) retracts back into the base (11), push the first portion (1101) to rotate the second portion (1102) to extend beyond the supporting face (192) of the follow-up pallet (19), to enable the third limiting member (110) in the first state.

16. The pick-and-place mechanism of claim 12, further comprising:
two guide strips (111), oppositely provided on two sides of the follow-up pallet (19), and an arrangement direction of the two guide strips (111) intersecting a moving direction of the pick-and-place assembly (13);
wherein the two guide strips (111) are configured to limit movement of the target object on the follow-up pallet (19) along the arrangement direction.

17. The pick-and-place mechanism of claim 1, wherein the pick-and-place assembly (13) comprises a mounting plate (131) and a suction cup (132), the mounting plate (131) is provided at the second end (142), and the suction cup (132) is provided on the mounting plate (131) and configured to adsorb the target object;
or the pick-and-place assembly (13) comprises a claw structure configured to hook the target object.

18. The pick-and-place mechanism of claim 1, wherein a support member (134) is provided at a bottom of the pick-and-place assembly (13); and
the support member (134) is configured to, when the pick-and-place assembly (13) extends into a target carrier, to be supported on a face of the target carrier.

19. The pick-and-place mechanism of claim 1, further comprising: at least one of a depth camera (11a), a two-dimensional code camera (116), a first sensor (117), a second sensor (118), a third sensor (119), or a fourth sensor (135), and a controller (115), wherein the controller (115) is configured to determine a storage position height of the target storage position based on a recognition state of the two-dimensional code camera (116) on a two-dimensional code of the target storage position; and/or, the controller (115) is configured to determine an offset distance based on an image of the target storage position captured by the depth camera (11a); and adjust a position of the pick-and-place assembly (13) based on the storage position height and/or the offset distance, to enable the pick-and-place assembly (13) to arrive at a specified position of a target carrier;
the controller (115) is further configured to determine whether the pick-and-place assembly (13) is located at an initial position based on a first trigger signal of the first sensor (117), or, the controller (115) is further configured to determine whether the pick-and-place assembly (13) is located at an initial position based on a first zero signal of a motor encoder of the first driving structure (16) and a second zero signal of a motor encoder of the second driving structure (15);
the controller (115) is further configured to determine whether there is the target object in pick-and-place assembly (13) when the pick-and-place assembly (13) is located at the initial position based on a second trigger signal of the second sensor (118);
the controller (115) is further configured to determine whether there is the target object at the target storage position based on a third trigger signal of the third sensor (119);
the controller (115) is further configured to determine a position state between the target object and the pick-and-place assembly (13) based on a fourth trigger signal of the fourth sensor (135); and
when the position state is that a distance between the pick-and-place assembly (13) and the target object on the target storage position is lower than or equal to a fifth preset distance during the pick-and-place assembly (13) moving toward the target storage position, the controller (115) controls the pick-and-place assembly (13) to approach the target object at a first preset velocity; or, when the position state is that a distance between the pick-and-place assembly (13) and the target object is lower than or equal to a sixth preset distance during the pick-and-place assembly (13) retracting back into the base (11), the controller (115) determines that there is the target object in the pick-and-place assembly (13).

20. The pick-and-place mechanism of claim 19, wherein there is a first distance between a front end of the base (11) and a front end of the target carrier when the pick-and-place mechanism (1) arrives at the specified position; there is a second distance between the pick-and-place assembly (13) and a front end face of the base (11) when the pick-and-place assembly (13) is located at the initial position; and there is a third distance between the target storage position and the front end of the base (11);
the controller (115) is further configured to determine a work distance of the pick-and-place assembly (13) based on the first distance, the second distance, and the third distance;
the first driving structure (16) and/or the second driving structure (15) is configured to drive the pick-and-place assembly (13) to move the work distance toward the target storage position based on a control signal of the controller (115), to reach the target storage position; and
the pick-and-place assembly (13) is configured to transfer the target object between the pick-and-place assembly (13) and the target storage position based on the control signal of the controller (115).

21. The pick-and-place mechanism of any one of claims 1 to 20, wherein
the at least part of the follow-up pallet (19) of the pick-and-place mechanism moves relative to the base (11), to adjust a bearing size of the follow-up pallet (19) for bearing the target object.

22. The pick-and-place mechanism of claim 21, further comprising:
a width adjustment assembly (104), connected to the follow-up pallet (19) and configured to drive the follow-up pallet (19) to move, to adjust the bearing size of the follow-up pallet (19) for bearing the target object.

23. The pick-and-place mechanism of claim 22, wherein the follow-up pallet (103) comprises at least two follow-up pallets;
the at least two follow-up pallets (19) are provided at intervals;
the width adjustment assembly (104) is connected to at least one of the follow-up pallets (19), to drive the at least one follow-up pallet (19) to approach or move away from the other follow-up pallet (19), to adjust a distance between the two follow-up pallets (19).

24. The pick-and-place mechanism of claim 23, wherein the width adjustment assembly (104) comprises:
a width adjustment driving member (1041);
a width adjustment transmission member (1042) with one end connected to the width adjustment driving member (1041), wherein the width adjustment transmission member (1042) comprises a first portion (10421) and a second portion (10422), and the first portion (10421) and the second portion (10422) move in an opposite direction under driving of the width adjustment driving member (1041);
one follow-up pallet (19) is connected to the first portion (10421), and the other follow-up pallet (19) is connected to the second portion (10422).

25. The pick-and-place mechanism of claim 22, further comprising: a support platform (106);
wherein the support platform (106) is movably provided on the base (11), the follow-up pallet (103) is located on the support platform (106) and moves relative to the support platform (106), to extend out of the base (11); and
the width adjustment assembly (104) is connected to the support platform (106), to drive the support platform (106) to move relative to the base (11), and the follow-up pallet (103) is driven by the support platform (106) to adjust the bearing size for bearing the target object.

26. The pick-and-place mechanism of claim 25, further comprising a width adjustment guide rail (107) and a width adjustment slider (108);
wherein the width adjustment guide rail (107) is provided on one of the bases (11) or the support platform (106), and the width adjustment slider (108) is provided on the other one of the bases (11) or the support platform (106);
the width adjustment slider (108) is configured to slide along the width adjustment guide rail (107) when the support platform (106) moves.

27. The pick-and-place mechanism of claim 22, wherein
the width adjustment assembly (104) is further connected to each guide strip (111) of the pick-and-place mechanism, and configured to drive the two guide strips (111) to move toward or away from each other, to adjust a distance between the two guide strips (111).

28. The pick-and-place mechanism of any one of claims 1 to 20, further comprising:
a translation assembly (109), configured to drive the pick-and-place assembly (13) to move on the base (11), to adjust an offset distance of the pick-and-place assembly (13) relative to the target storage position.

29. The pick-and-place mechanism of claim 28, further comprising: a support base (105);
wherein both the pick-and-place assembly (13) and at least part of a driving mechanism (10) are located on the support base (105), the translation assembly (109) is connected to the support base (105) and configured to drive the support base (105) to move, to drive the pick-and-place assembly (13) to move relative to the base (11); and
wherein the driving mechanism (10) comprises the first driving structure (16) and the second driving structure (15).

30. The pick-and-place mechanism of claim 29, wherein the translation assembly (109) comprises:
a translation driving member (1091);
a translation transmission member (1092) with one end connected to the translation driving member (1091), wherein the translation transmission member (1092) is configured to perform reciprocate motion under driving of the translation driving member (1091); and
the support base (105) is connected to the translation transmission member (1092).

31. The pick-and-place mechanism of claim 29, further comprising: a translation guide rail (200) and a translation slider (300);
one of the translation guide rail (200) or the translation slider (300) is provided on the base (11), and the other one of the translation guide rail (200) or the translation slider (300) is provided on the support base (105); and
the translation slider (300) is configured to slide along the translation guide rail (200) when the support base (105) moves.

32. The pick-and-place mechanism of claim 28, wherein the controller of the pick-and-place mechanism is configured to determine the offset distance based on the image of the target storage position captured by the depth camera; and control the translation assembly (109) to operate based on the offset distance, to decrease the offset distance of the pick-and-place assembly (13) relative to the target storage position, and to enable the pick-and-place assembly (13) to arrive at the specified position of the target carrier.

33. A transfer robot, comprising:
a chassis (3);
a gantry (2) , provided on the chassis (3); and
the pick-and-place mechanism (1) of any one of claims 1 to 28, wherein the pick-and-place mechanism (1) is provided on the gantry (2) and capable of lifting and lowering along the gantry (2).

34. The transfer robot of claim 33, further comprising:
a temporary storage plate, provided on the gantry (2); and
a rotation mechanism, connected to the pick-and-place mechanism (1) and configured to drive the pick-and-place mechanism (1) to rotate, to enable the pick-and-place mechanism (1) to place an object onto the temporary storage plate, or to pick the object from the temporary storage plate by the pick-and-place mechanism (1).

35. A method for transferring an object, applied to the pick-and-place mechanism (1) of any one of claims 1 to 32, comprising:
in a case that the pick-and-place mechanism (1) is located at a specified position, determining a work distance between a pick-and-place assembly (13) and a target storage position;
driving the pick-and-place assembly (13), by a first driving structure (16) and/or a second driving structure (15), to move the work distance toward the target storage position, to arrive at the target storage position; and
transferring the target object between the pick-and-place assembly (13) and the target storage position.

36. The method of claim 35, wherein driving the pick-and-place assembly (13), by the first driving structure (16) and/or the second driving structure (15), to move the work distance toward the target storage position comprises:
driving a movable base (12) by the first driving structure (16) to move, to drive the pick-and-place assembly (13) to move a first preset distance toward the target storage position, and then driving the telescoping structure (14) by the second driving structure (15) to extend out, to drive the pick-and-place assembly (13) to move a second preset distance toward the target storage position, to enable that the pick-and-place assembly (13) arrives at the target storage position, wherein the first preset distance and the second preset distance are determined by the work distance;
or, driving the telescoping structure (14) by the second driving structure (15) to extend out, to drive the pick-and-place assembly (13) to move a third preset distance toward the target storage position, and then driving the movable base (12) by the first driving structure (16) to move, to drive the pick-and-place assembly (13) to move a fourth preset distance toward the target storage position, to enable that the pick-and-place assembly (13) arrives at the target storage position, wherein the third preset distance and the fourth preset distance are determined by the work distance;
or, driving the movable base (12) and the telescoping structure (14) by the first driving structure (16) and the second driving structure (15) simultaneously to move, to drive the pick-and-place assembly (13) to move the work distance toward the target storage position, to enable that the pick-and-place assembly (13) arrives at the target storage position.

37. The method of claim 36, wherein, in a case that the target storage position is a deep inner position, driving the pick-and-place assembly (13), by the first driving structure (16) and/or the second driving structure (15), to move the work distance toward the target storage position, to arrive at the target storage position comprises:
driving the telescoping structure (14) by the second driving structure (15) to extend out, to drive the pick-and-place assembly (13) to move toward the target storage position, to decrease a width of the telescoping structure (14); and driving the movable base (12) by the first driving structure (16) to move, to drive the telescoping structure (14) to move toward the target storage position until a moving distance of the pick-and-place assembly (13) reaches the work distance, wherein a width direction of the telescoping structure (14) intersects a telescopic direction of the telescoping structure (14).

38. The method of claim 35, wherein determining the work distance between the pick-and-place assembly (13) and the target storage position comprises:
in a case that the pick-and-place mechanism (1) is located at the specified position of a target carrier, obtaining a first distance between a front end of the base (11) and a front end of the target carrier;
determining an initial position of the pick-and-place assembly (13) based on a first trigger signal of a first sensor (117), and/or, a zero signal of a motor encoder of the first driving structure (16) and a zero signal of a motor encoder of the second driving structure (15), wherein there is a second distance between the initial position and the front end of the base (11);
obtaining a third distance between the target storage position and the front end of the base (11); and
determining the work distance based on the first distance, the second distance, and the third distance.

39. The method of claim 35, wherein the pick-and-place mechanism (1) has a picking work state, and in the picking work state, before driving the pick-and-place assembly (13), by the first driving structure (16) and/or the second driving structure (15), to move the work distance toward the target storage position to arrive at the target storage position, the method further comprises:
determining, based on a third trigger signal of a third sensor (119), that there is the target object at the target storage position; and
transferring the target object between the pick-and-place assembly (13) and the target storage position comprises:
in a case that there is the target object at the target storage position, applying, by the pick-and-place assembly (13), a force to a front end face of the target object, to enable the target object to abut on the pick-and-place assembly (13).

40. The method of claim 39, wherein in the picking work state, before driving the pick-and-place assembly (13), by the first driving structure (16) and/or the second driving structure (15), to move the work distance toward the target storage position to arrive at the target storage position, the method further comprises:
reducing, based on a fourth trigger signal of a fourth sensor (135), a driving velocity of the first driving structure (16) and/or the second driving structure (15), to enable the pick-and-place assembly (13) to approach the target object at a first preset velocity when a distance between the pick-and-place assembly (13) and the target object is lower than or equal to a fifth preset distance, , wherein the first preset velocity is lower than a second preset velocity, and the second preset velocity is a moving velocity of the pick-and-place assembly (13) when the distance between the pick-and-place assembly (13) and the target object is greater than the fifth preset distance.

41. The method of claim 39, wherein in the picking work state, driving, by the first driving structure (16) and/or the second driving structure (15), the pick-and-place assembly (13) to move away from the target storage position comprises:
determining that there is the target object in the pick-and-place assembly (13) based on a fourth trigger signal of a fourth sensor (135), and/or, a vacuum degree in an inner cavity of a suction cup (132) being a preset vacuum degree; and
in a case that there is the target object in the pick-and-place assembly (13), driving, by the first driving structure (16) and/or the second driving structure (15), the pick-and-place assembly (13) to move away from the target storage position.
